(19) Europäisches Patentamt / European Patent Office / Office européen des brevets

(11) **EP 3 061 802 B1**

(12) **EUROPEAN PATENT SPECIFICATION**

(45) Date of publication and mention of the grant of the patent:
**25.09.2019 Bulletin 2019/39**

(21) Application number: **14856093.1**

(22) Date of filing: **09.10.2014**

(51) Int Cl.:
***C09K 19/34*** *(2006.01)* ***C09K 19/12*** *(2006.01)*
***C09K 19/14*** *(2006.01)* ***C09K 19/20*** *(2006.01)*
***C09K 19/30*** *(2006.01)* ***C09K 19/32*** *(2006.01)*
***G02F 1/13*** *(2006.01)* ***C09K 19/02*** *(2006.01)*
***C09K 19/04*** *(2006.01)*

(86) International application number:
**PCT/JP2014/077037**

(87) International publication number:
**WO 2015/060134 (30.04.2015 Gazette 2015/17)**

(54) **LIQUID CRYSTAL COMPOSITION AND LIQUID CRYSTAL DISPLAY DEVICE**

FLÜSSIGKRISTALLZUSAMMENSETZUNG UND FLÜSSIGKRISTALLANZEIGEVORRICHTUNG

COMPOSITION À BASE DE CRISTAUX LIQUIDES ET DISPOSITIF D'AFFICHAGE À BASE DE CRISTAUX LIQUIDES

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **25.10.2013 JP 2013222312**

(43) Date of publication of application:
**31.08.2016 Bulletin 2016/35**

(73) Proprietors:
- **JNC Corporation**
  **Chiyoda-ku**
  **Tokyo 100-8105 (JP)**
- **JNC Petrochemical Corporation**
  **Tokyo 100-0004 (JP)**

(72) Inventors:
- **SAITO, Masayuki**
  **Ichihara-shi**
  **Chiba 290-8551 (JP)**
- **FURUSATO, Yoshimasa**
  **Ichihara-shi**
  **Chiba 290-8551 (JP)**

(74) Representative: **Thurston, Joanna**
**Withers & Rogers LLP**
**4 More London Riverside**
**London SE1 2AU (GB)**

(56) References cited:

| | |
|---|---|
| **EP-A1- 0 819 685** | **WO-A1-2013/150826** |
| **WO-A1-2013/150826** | **JP-A- H 072 832** |
| **JP-A- H0 912 569** | **JP-A- 2004 204 024** |
| **JP-A- 2004 204 024** | **JP-A- 2004 352 992** |
| **JP-A- 2006 070 080** | **JP-A- 2006 070 080** |
| **JP-A- 2011 514 410** | **JP-B1- 5 500 322** |
| **US-A1- 2009 314 988** | **US-A1- 2011 127 465** |

Remarks:
The file contains technical information submitted after the application was filed and not included in this specification

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 3 061 802 B1

## Description

### Technical Field

The invention relates to a liquid crystal composition, a liquid crystal display device including the composition, and so forth. In particular, the invention relates to a liquid crystal composition having a positive dielectric anisotropy, and an active matrix (AM) device that includes the composition and has a mode such as a TN mode, an OCB mode, an IPS mode, an FFS mode or an FPA mode.

### Background Art

In a liquid crystal display device, a classification based on an operating mode for liquid crystal molecules includes a phase change (PC) mode, a twisted nematic (TN) mode, a super twisted nematic (STN) mode, an electrically controlled birefringence (ECB) mode, an optically compensated bend (OCB) mode, an in-plane switching (IPS) mode, a vertical alignment (VA) mode, a fringe field switching (FFS) mode and a field-induced photo-reactive alignment (FPA) mode. A classification based on a driving mode in the device includes a passive matrix (PM) and an active matrix (AM). The PM is classified into static and multiplex and so forth. The AM is classified into a thin film transistor (TFT), a metal insulator metal (MIM) and so forth. The TFT is further classified into amorphous silicon and polycrystal silicon. The latter is classified into a high temperature type and a low temperature type according to a production process. A classification based on a light source includes a reflective type utilizing natural light, a transmissive type utilizing backlight and a transflective type utilizing both the natural light and the backlight.

A liquid crystal display device includes a liquid crystal composition having a nematic phase. The composition has suitable characteristics. An AM device having good characteristics can be obtained by improving the characteristics of the composition. Table 1 below summarizes a relationship of the characteristics between two aspects. The characteristics of the composition will be further described based on a commercially available AM device. A temperature range of the nematic phase relates to a temperature range in which the device can be used. A preferred maximum temperature of the nematic phase is about 70°C or higher and a preferred minimum temperature of the nematic phase is about -10°C or lower. Viscosity of the composition relates to a response time in the device. A short response time is preferred for displaying moving images on the device. A shorter response time even by one millisecond is desirable. Accordingly, a small viscosity in the composition is preferred. A small viscosity at a low temperature is further preferred. An elastic constant of the composition relates to contrast in the device. In order to improve the contrast in the device, a large elastic constant of the composition is further preferred.

Table 1. Characteristics of Composition and AM Device

| No. | Characteristics of Composition | Characteristics of AM Device |
|---|---|---|
| 1 | Wide temperature range of a nematic phase | Wide usable temperature range |
| 2 | Small viscosity[1)] | Short response time |
| 3 | Suitable optical anisotropy | Large contrast ratio |
| 4 | Large positive or negative dielectric anisotropy | Low threshold voltage and small electric power consumption Large contrast ratio |
| 5 | Large specific resistance | Large voltage holding ratio and large contrast ratio |
| 6 | High stability to ultraviolet light and heat | Long service life |
| 7 | Large elastic constant | Large contrast ratio and short response time |
| 1) A liquid crystal composition can be injected into a liquid crystal display device in a short time. | | |

contrast ratio in the device. According to a mode of the device, a large optical anisotropy or a small optical anisotropy, more specifically, a suitable optical anisotropy is required. A product ($\Delta n \times d$) of the optical anisotropy ($\Delta n$) of the composition and a cell gap (d) in the device is designed so as to maximize the contrast ratio. A suitable value of the product depends on a type of the operating mode. The suitable value is about 0.45 micrometer in a device having the mode such as the TN mode. In the above case, a composition having the large optical anisotropy is preferred for a device having a small cell gap. A large value of dielectric anisotropy in the composition contributes to a low threshold

voltage, a small electric power consumption and a large contrast ratio in the device. Accordingly, the large value of dielectric anisotropy is preferred. A large specific resistance in the composition contributes to a large voltage holding ratio and the large contrast ratio in the device. Accordingly, a composition having the large specific resistance at room temperature and also at a temperature close to the maximum temperature of the nematic phase in an initial stage is preferred. A composition having the large specific resistance at room temperature and also at a temperature close to the maximum temperature of the nematic phase even after the device has been used for a long period of time is preferred. Stability of the composition to ultraviolet light and heat relates to a service life of the liquid crystal display device. In the case where the stability is high, the device has a long service life. Such characteristics are preferred for an AM device for use in a liquid crystal projector, a liquid crystal television and so forth.

A composition having a positive dielectric anisotropy is used in an AM device having the TN mode. A composition having a negative dielectric anisotropy is used in an AM device having the VA mode. A composition having a positive or negative dielectric anisotropy is used in an AM device having the IPS mode or the FFS mode. A composition having the positive or negative dielectric anisotropy is used in an AM device of the polymer sustained alignment (PSA) mode. An example of a liquid crystal composition having a positive dielectric anisotropy is disclosed in Patent literature Nos. 1 to 3 below.
WO2013/150826A1, US 2011/127465 and WO 2013/150826A1 disclose a liquid crystal composition having one of several properties including: large dielectric anisotropy, large specific resistance, small viscosity and the like for use in AM devices.
JP 2004 204024A and JP 5 500322B1 disclose a liquid crystal composition having a low limit temperature for nematic phase with adequate optical permittivity and short response time.
JP 2006 070080 A discloses a liquid crystal composition for an active matrix-type liquid crystal display element with a wide phase temperature range and excellent reliability.
EP 0819685A1 discloses an electrically and chemically stable liquid crystalline compound which exhibits a high voltage holding ratio. The compound is a derivative of phenyldioxane.
US 2009/314988A1 discloses a liquid crystal composition having a nematic phase comprising two components, one with a S-membered ring and a second having small viscosity.
JP 2011 514410A discloses a liquid-crystalline medium comprising compounds for use in electro-optical liquid-crystal displays.
JP 2004 352992A discloses a liquid crystal medium simultaneously having an extremely large specific resistance valve and low threshold voltage, comprising polar compounds having positive dielectric anisotropy.
JP 2006 070080A discloses a liquid crystal composition for an active matrix-type liquid crystal display element, which enables low voltage driving and possess excellent reliability and devices comprising the same.
JP HO9 12569A discloses 1,3-dioxanes and substituted derivatives thereof of which have application in liquid crystal compositions.

## Citation List

### Patent Literature

Patent literature No. 1: JP H7-2832 A.
Patent literature No. 2: JP H10-81679 A.
Patent literature No. 3: JP 2008-69153 A.

## Summary of the Invention

### Technical Problem

One of the aims of the invention is to provide a liquid crystal composition satisfying at least one of characteristics such as a high maximum temperature of a nematic phase, a low minimum temperature of the nematic phase, a small viscosity, a suitable optical anisotropy, a large dielectric anisotropy, a large specific resistance, a high stability to ultraviolet light and a high stability to heat. Another aim is to provide a liquid crystal composition having a suitable balance regarding at least two of the characteristics. Another aim is to provide a liquid crystal display device including such a composition. An additional aim is to provide an AM device having characteristics such as a short response time, a large voltage holding ratio, a low threshold voltage, a large contrast ratio and a long service life.

## Solution to Problem

The invention concerns a liquid crystal composition that has a nematic phase and contains at least one compound selected from the group of compounds represented by formula (1) as a first component, and at least one compound selected from the group of compounds represented by formula (2) as a second component, and concerns a liquid crystal display device including the composition:

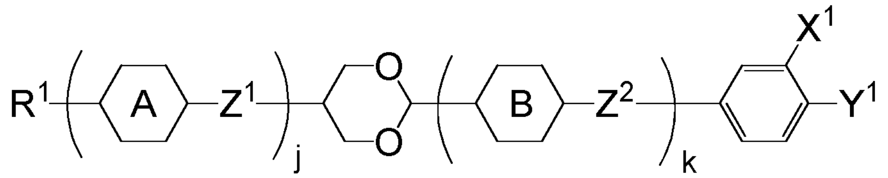

(1)

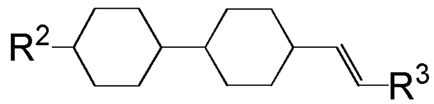

(2)

wherein, in formula (1) and formula (2), $R^1$ is alkyl having 1 to 12 carbons, alkoxy having 1 to 12 carbons or alkenyl having 2 to 12 carbons; $R^2$ is alkyl having 1 to 3 carbons, or alkyl having 1 to 12 carbons in which at least one of hydrogen is replaced by halogen; $R^3$ is hydrogen or alkyl having 1 to 5 carbons; ring A and ring B are independently 1, 4-cyclohexylene, 1, 4-phenylene, 2-fluoro-1,4-phenylene, 2,3-difluoro-1,4-phenylene, 2,6-difluoro-1,4-phenylene, pyrimidine-2,5-diyl, 1,3-dioxane-2,5-diyl or tetrahydropyran-2,5-diyl; $Z^1$ and $Z^2$ are independently a single bond, ethylene, vinylene, methyleneoxy, carbonyloxy or difluoromethyleneoxy; $X^1$ is hydrogen or fluorine; $Y^1$ is fluorine, chlorine, alkyl having 1 to 12 carbons in which at least one of hydrogen is replaced by halogen, or alkenyloxy having 2 to 12 carbons in which at least one of hydrogen is replaced by halogen; j and k are independently 0, 1, 2 or 3; and a sum of j and k is 4 or less.

## Advantageous Effects of Invention

An advantage of the invention is a liquid crystal composition satisfying at least one of characteristics such as a high maximum temperature of a nematic phase, a low minimum temperature of the nematic phase, a small viscosity, a suitable optical anisotropy, a large dielectric anisotropy, a large specific resistance, a high stability to ultraviolet light, a high stability to heat and a large elastic constant. Another advantage is a liquid crystal composition having a suitable balance regarding at least two of the characteristics. Another advantage is a liquid crystal display device including such a composition. Another advantage is an AM device having characteristics such as a short response time, a large voltage holding ratio, a low threshold voltage, a large contrast ratio and a long service life.

## Description of Embodiments

Usage of terms herein is as described below. Terms "liquid crystal composition" and "liquid crystal display device" may be occasionally abbreviated as "composition" and "device," respectively. "Liquid crystal display device" is a generic term for a liquid crystal display panel and a liquid crystal display module. "Liquid crystal compound" is a generic term for a compound having a liquid crystal phase such as a nematic phase and a smectic phase, and a compound having no liquid crystal phase but to be mixed with the composition for the purpose of adjusting characteristics such as a temperature range of the nematic phase, viscosity and dielectric anisotropy. The compound has a six-membered ring such as 1,4-cyclohexylene and 1,4-phenylene, and has rod like molecular structure. "Polymerizable compound" includes a compound to be added to the composition for the purpose of forming a polymer in the composition. At least one compound selected from the group of compounds represented by formula (1) may be occasionally abbreviated as "compound (1)." "Compound (1)" means one compound represented by formula (1) or two or more compounds represented thereby. A same rule applies also to any other compound represented by any other formula. An expression "at least one" in the context of "replaced by" means that not only a position but also the number can be selected without restriction.

The liquid crystal composition is prepared by mixing a plurality of liquid crystal compounds. A proportion (content) of the liquid crystal compounds is expressed in terms of weight percent (% by weight) based on the weight of the liquid crystal composition. An additive such as an optically active compound, an antioxidant, an ultraviolet light absorber, a dye, an antifoaming agent, a polymerizable compound, a polymerization initiator and a polymerization inhibitor is added to the liquid crystal composition when necessary. A proportion (amount of addition) of the additive is expressed in terms

of weight percent (% by weight) based on the weight of the liquid crystal composition in a manner similar to the proportion of the liquid crystal compound. Weight parts per million (ppm) may be occasionally used. A proportion of the polymerization initiator and the polymerization inhibitor is exceptionally expressed based on the weight of the polymerizable compound.

An expression "maximum temperature of the nematic phase" may be occasionally abbreviated as "maximum temperature." An expression "minimum temperature of the nematic phase" may be occasionally abbreviated as "minimum temperature." An expression "having a large specific resistance" means that the composition has a large specific resistance at room temperature and also at a temperature close to the maximum temperature of the nematic phase in an initial stage, and the composition has the large specific resistance at room temperature and also at a temperature close to the maximum temperature of the nematic phase even after the device has been used for a long period of time. An expression "having a large voltage holding ratio" means that the device has a large voltage holding ratio at room temperature and also at a temperature close to the maximum temperature of the nematic phase in an initial stage, and the device has the large voltage holding ratio at room temperature and also at a temperature close to the maximum temperature of the nematic phase even after the device has been used for a long period of time.

An expression "at least one of 'A' may be replaced by 'B'" means that the number of 'A' is arbitrary. When the number of 'A' is 1, a position of 'A' is arbitrary, and also when the number of 'A' is 2 or more, positions thereof can be selected without restriction. A same rule applies also to an expression "at least one of 'A' is replaced by 'B'."

A symbol of terminal group $R^1$ is used for a plurality of compounds in chemical formulas of component compounds. In the compounds, two groups represented by two of arbitrary $R^1$ may be identical or different. In one case, for example, $R^1$ of compound (1) is ethyl and $R^1$ of compound (1-1) is ethyl. In another case, for example, $R^1$ of compound (1) is ethyl and $R^1$ of compound (1-1) is propyl. A same rule applies also to a symbol of $R^4$ and $X^1$ or the like. In formula (1), when j is 2, two of ring A exists. In the compound, two rings represented by two of ring A may be identical or different. A same rule applies also to two of arbitrary ring A when j is larger than 2. A same rule applies also to a symbol of $Z^1$ and a ring B or the like.

Then, 2-fluoro-1,4-phenylene means two divalent groups described below. In a chemical formula, fluorine may be leftward (L) or rightward (R). A same rule applies also to a divalent group of asymmetrical ring such as tetrahydropyran-2,5-diyl.

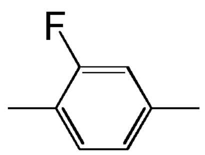
(L)

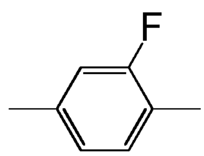
(R)

The invention includes the items described below.

Item 1. A liquid crystal composition that has a nematic phase, and contains at least one compound selected from the group of compounds represented by formula (1) as a first component, and at least one compound selected from the group of compounds represented by formula (2) as a second component:

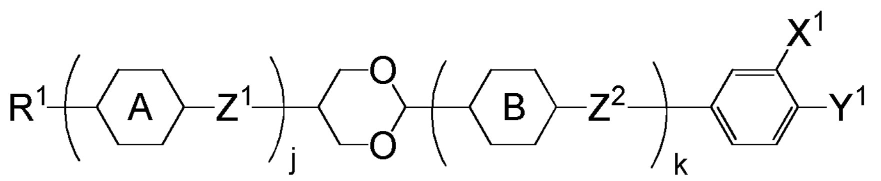
(1)

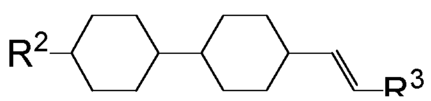
(2)

wherein, in formula (1) and formula (2), $R^1$ is alkyl having 1 to 12 carbons, alkoxy having 1 to 12 carbons or alkenyl having 2 to 12 carbons; $R^2$ is alkyl having 1 to 3 carbons, or alkyl having 1 to 12 carbons in which at least one of hydrogen is replaced by halogen; $R^3$ is hydrogen or alkyl having 1 to 5 carbons; ring A and ring B are independently 1,4-cyclohexylene, 1,4-phenylene, 2-fluoro-1,4-phenylene, 2,3-difluoro-1,4-phenylene, 2,6-difluoro-1,4-phenylene, pyrimidine-2,5-diyl, 1,3-dioxane-2,5-diyl or tetrahydropyran-2,5-diyl; $Z^1$ and $Z^2$ are independently a single bond,

ethylene, vinylene, methyleneoxy, carbonyloxy or difluoromethyleneoxy; $X^1$ is hydrogen or fluorine; $Y^1$ is fluorine, chlorine, alkyl having 1 to 12 carbons in which at least one of hydrogen is replaced by halogen, or alkenyloxy having 2 to 12 carbons in which at least one of hydrogen is replaced by halogen; j and k are independently 0, 1, 2 or 3; and a sum of j and k is 4 or less.

Item 2. The liquid crystal composition according to item 1, containing at least one compound selected from the group of compounds represented by formulas (1-1) to (1-12) as the first component:

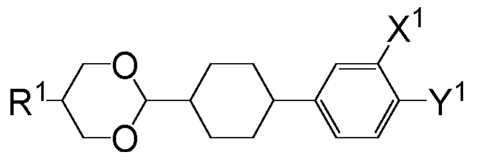
(1-1)

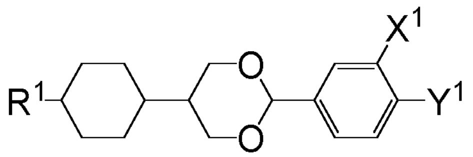
(1-2)

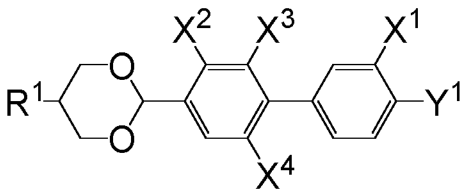
(1-3)

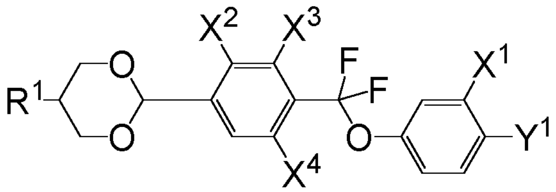
(1-4)

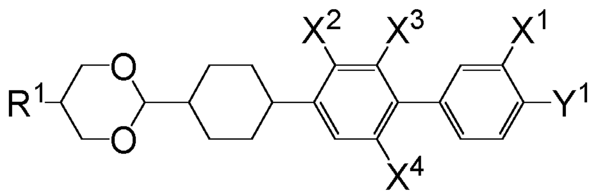
(1-5)

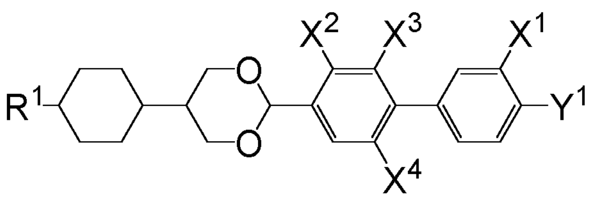
(1-6)

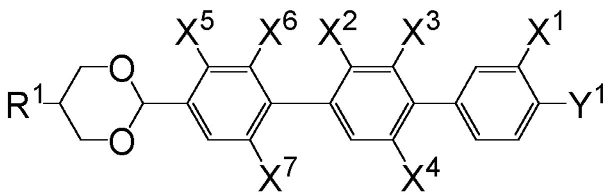
(1-7)

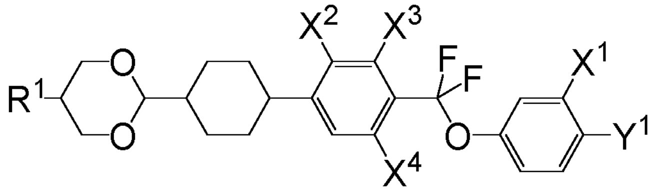

(1-8)

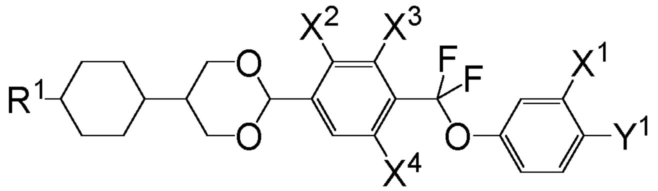

(1-9)

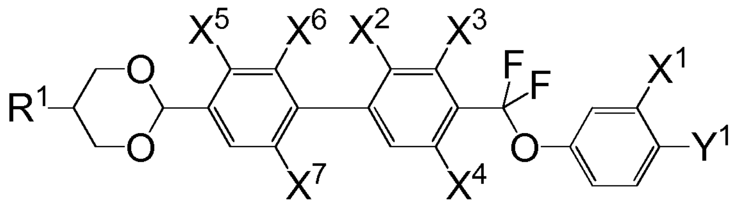

(1-10)

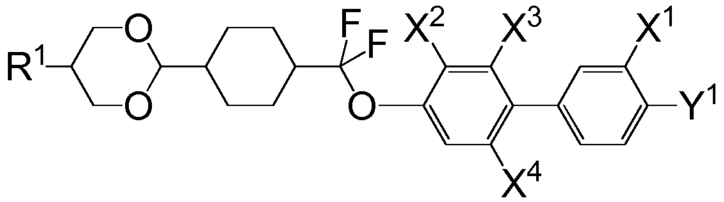

(1-11)

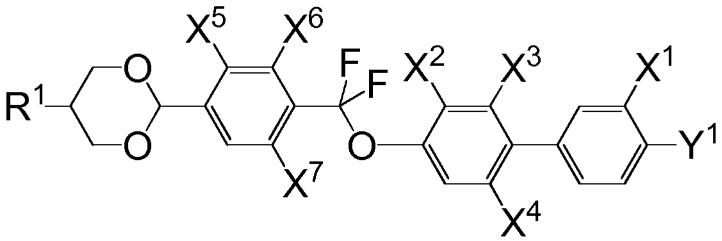

(1-12)

wherein, in formula (1-1) to formula (1-12), $R^1$ is alkyl having 1 to 12 carbons, alkoxy having 1 to 12 carbons or alkenyl having 2 to 12 carbons; $X^1$, $X^2$, $X^3$, $X^4$, $X^5$, $X^6$ and $X^7$ are independently hydrogen or fluorine; and $Y^1$ is fluorine, chlorine, alkyl having 1 to 12 carbons in which at least one of hydrogen is replaced by halogen, or alkenyloxy having 2 to 12 carbons in which at least one of hydrogen is replaced by halogen.

Item 3. The liquid crystal composition according to item 1 or 2, wherein a proportion of the first component is in the range of 5% by weight to 40% by weight, and a proportion of the second component is in the range of 10% by weight to 60% by weight, based on the weight of the liquid crystal composition.

Item 4. The liquid crystal composition according to any one of items 1 to 3, containing at least one compound selected from the group of compounds represented by formula (3) as a third component:

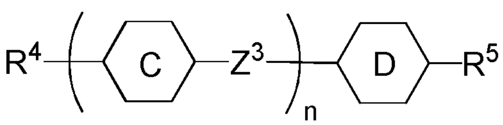

(3)

wherein, in formula (3), $R^4$ and $R^5$ are independently alkyl having 1 to 12 carbons, alkoxy having 1 to 12 carbons, alkenyl having 2 to 12 carbons, alkyl having 1 to 12 carbons in which at least one of hydrogen is replaced by halogen,

or alkenyl having 2 to 12 carbons in which at least one of hydrogen is replaced by fluorine; ring C and ring D are independently 1,4-cyclohexylene, 1,4-phenylene, 2-fluoro-1,4-phenylene or 2,5-difluoro-1,4-phenylene; $Z^3$ is a single bond, ethylene or carbonyloxy; and n is 1, 2 or 3; wherein, when n is 1, ring D is 1,4-phenylene.

Item 5. The liquid crystal composition according to any one of items 1 to 4, containing at least one compound selected from the group of compounds represented by formulas (3-1) to (3-12) as the third component:

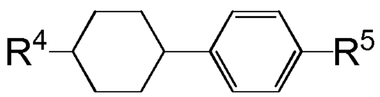
(3-1)

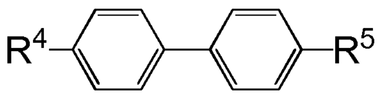
(3-2)

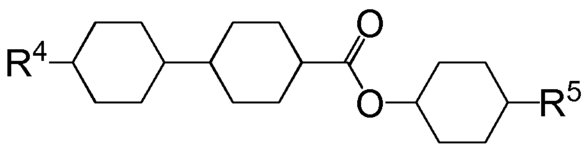
(3-3)

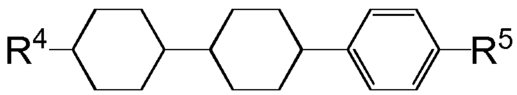
(3-4)

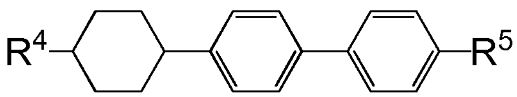
(3-5)

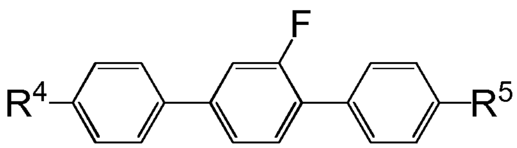
(3-6)

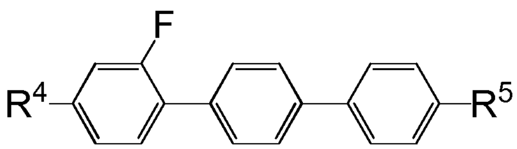
(3-7)

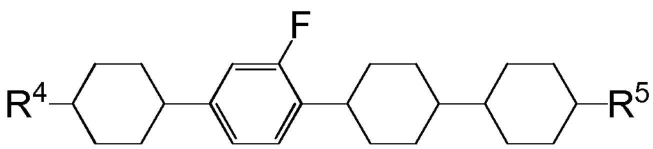
(3-8)

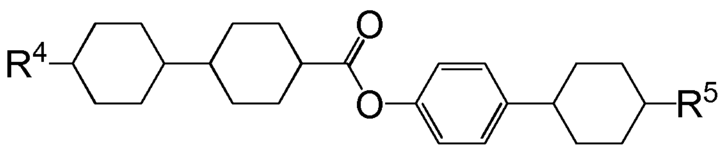
(3-9)

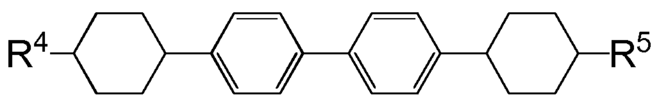
(3-10)

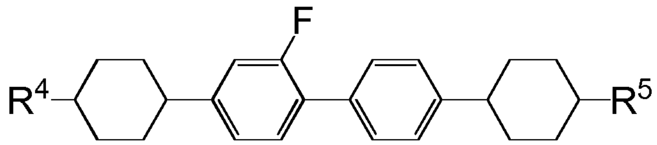

(3-11)

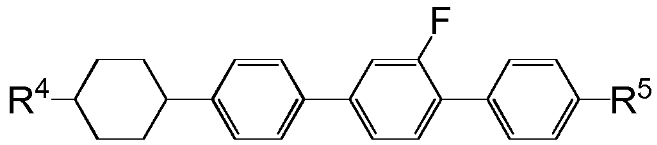

(3-12)

wherein, in formula (3-1) to formula (3-12), $R^4$ and $R^5$ are independently alkyl having 1 to 12 carbons, alkoxy having 1 to 12 carbons, alkenyl having 2 to 12 carbons, or alkenyl having 2 to 12 carbons in which at least one of hydrogen is replaced by fluorine.

Item 6. The liquid crystal composition according to item 4 or 5, wherein a proportion of the third component is in the range of 5% by weight to 55% by weight based on the weight of the liquid crystal composition.

Item 7. The liquid crystal composition according to any one of items 1 to 6, further containing at least one compound selected from the group of compounds represented by formula (4) as a fourth component:

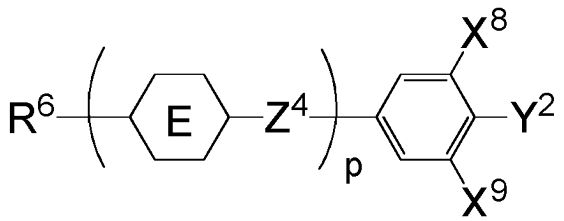

(4)

wherein, in formula (4), $R^6$ is alkyl having 1 to 12 carbons, alkoxy having 1 to 12 carbons or alkenyl having 2 to 12 carbons; ring E is 1,4-cyclohexylene, 1,4-phenylene, 2-fluoro-1,4-phenylene, 2,3-difluoro-1,4-phenylene, 2,6-difluoro-1,4-phenylene, pyrimidine-2,5-diyl or tetrahydropyran-2,5-diyl; $Z^4$ is a single bond, ethylene, carbonyloxy or difluoromethyleneoxy; $X^8$ and $X^9$ are independently hydrogen or fluorine; $Y^2$ is fluorine, chlorine, alkyl having 1 to 12 carbons in which at least one of hydrogen is replaced by halogen, alkoxy having 1 to 12 carbons in which at least one of hydrogen is replaced by halogen, or alkenyloxy having 2 to 12 carbons in which at least one of hydrogen is replaced by halogen; and p is 1, 2, 3 or 4.

Item 8. The liquid crystal composition according to any one of items 1 to 7, containing at least one compound selected from the group of compounds represented by formulas (4-1) to (4-24) as a fourth component:

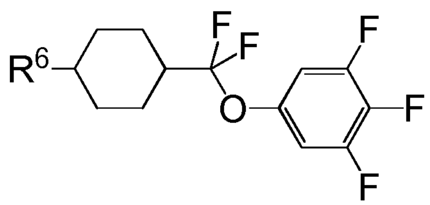

(4-1)

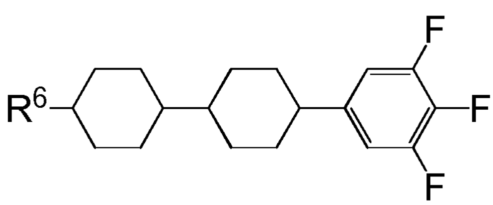

(4-2)

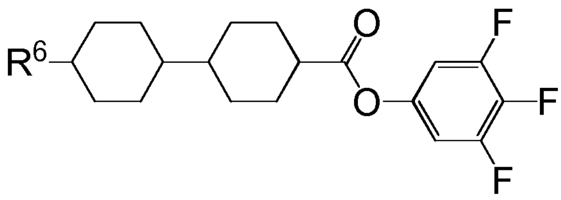

(4-3)

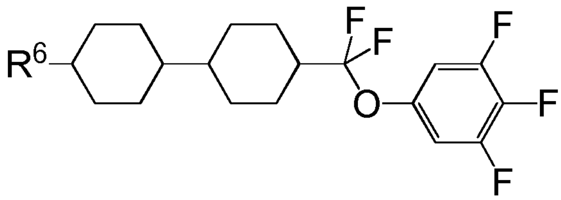

(4-4)

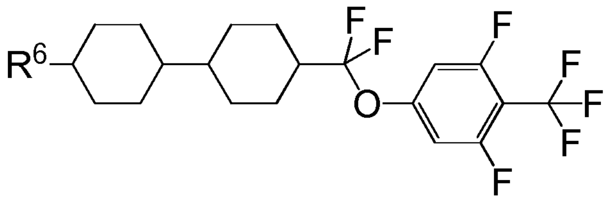

(4-5)

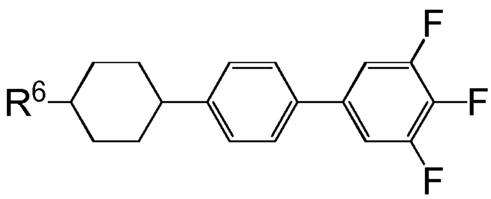

(4-6)

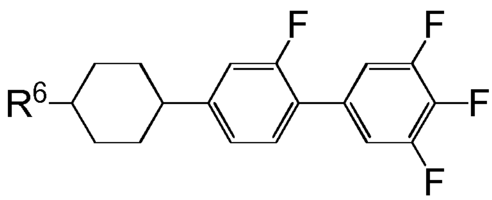

(4-7)

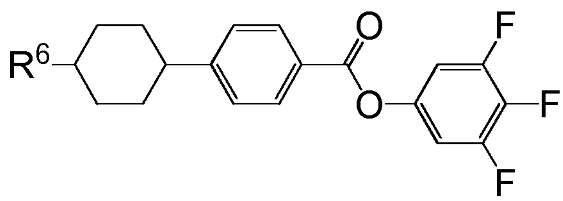

(4-8)

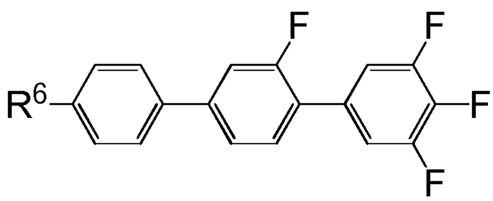

(4-9)

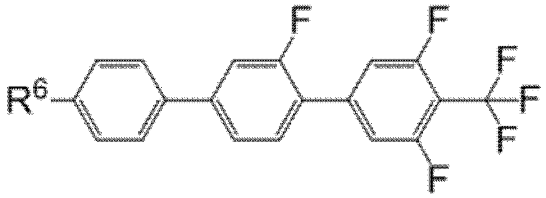

(4-10)

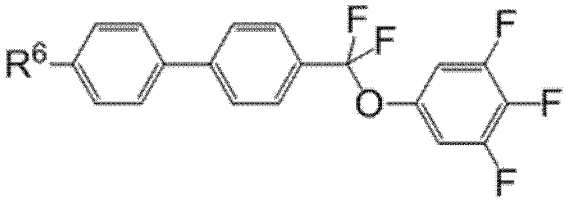

(4-11)

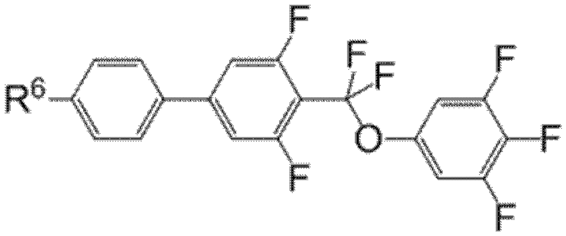

(4-12)

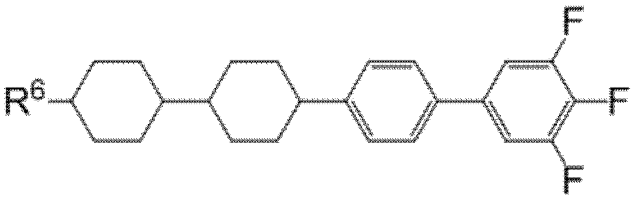

(4-13)

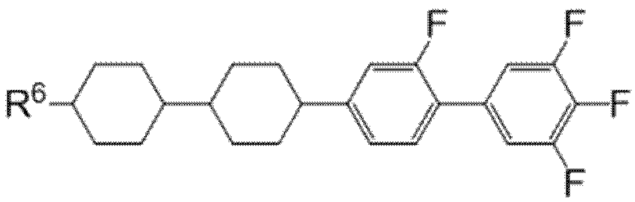

(4-14)

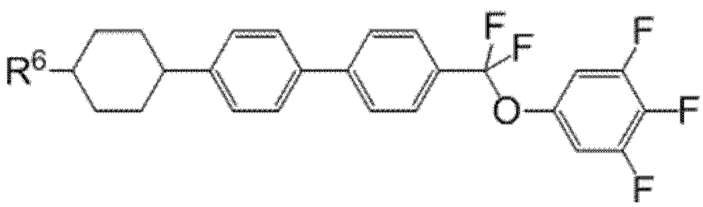

(4-15)

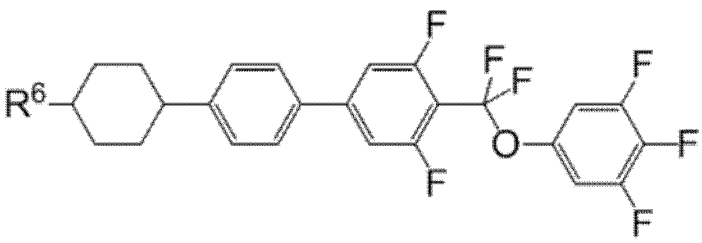

(4-16)

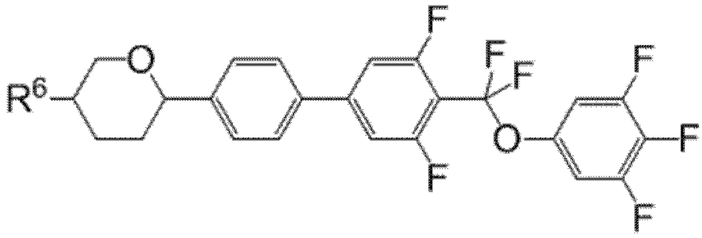

(4-17)

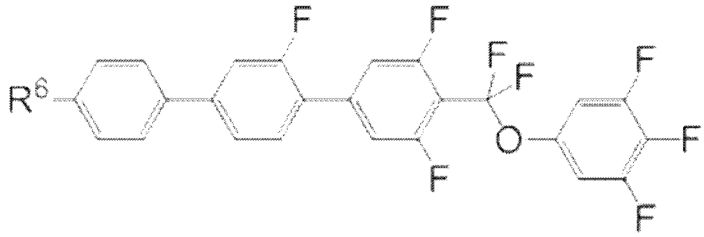

(4-18)

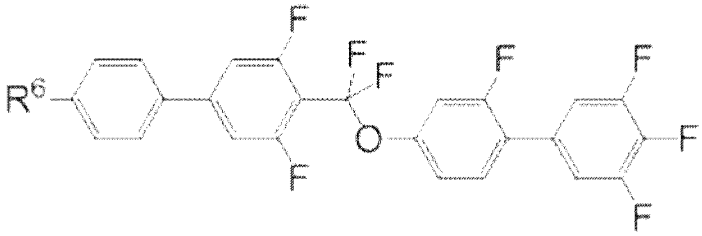

(4-19)

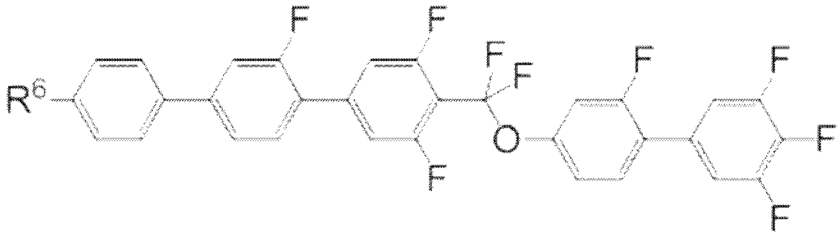

(4-20)

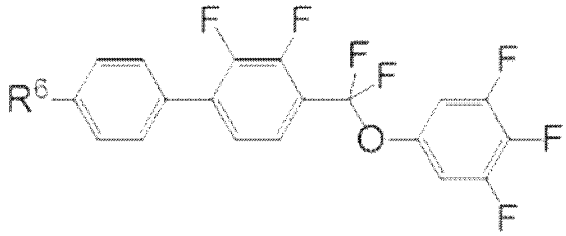

(4-21)

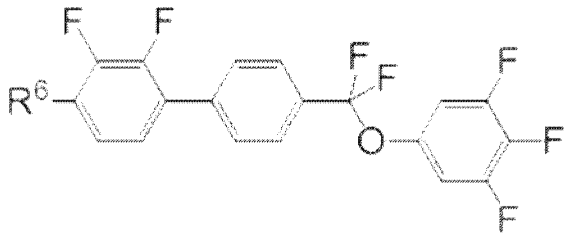

(4-22)

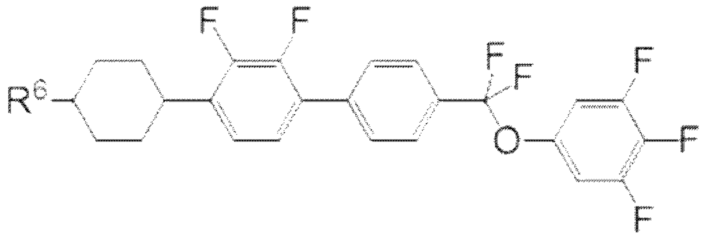

(4-23)

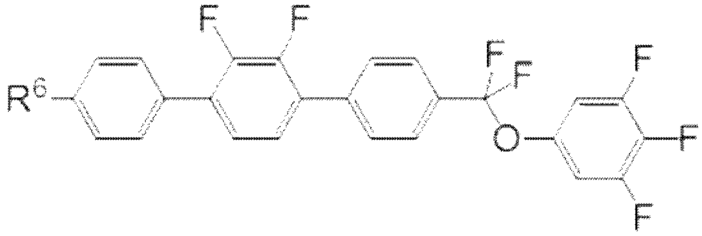

(4-24)

wherein, in formula (4-1) to formula (4-24). $R^6$ is alkyl having 1 to 12 carbons, alkoxy having 1 to 12 carbons or alkenyl having 2 to 12 carbons.

Item 9. The liquid crystal composition according to item 7 or 8, wherein a proportion of the fourth component is in the range of 5% by weight to 35% by weight based on the weight of the liquid crystal composition.

Item 10. The liquid crystal composition according to any one of items 1 to 9, containing at least one compound selected from the group of compounds represented by formula (5) as a fifth component:

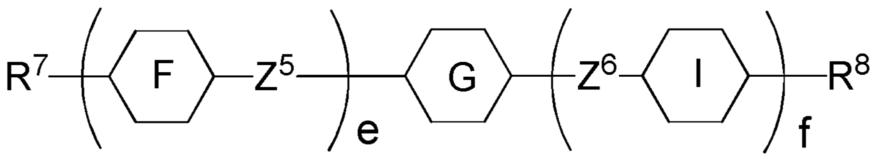

(5)

wherein, in formula (5), $R^7$ and $R^8$ are independently alkyl having 1 to 12 carbons, alkoxy having 1 to 12 carbons, alkenyl having 2 to 12 carbons, alkenyloxy having 2 to 12 carbons or alkyl having 1 to 12 carbons in which at least one of hydrogen is replaced by halogen; ring F and ring I are independently 1,4-cyclohexylene, 1,4-cyclohexenylene, 1,4-phenylene, 1,4-phenylene in which at least one of hydrogen is replaced by fluorine or chlorine, or tetrahydropyran-2,5-diyl; ring G is 2,3-difluoro-1,4-phenylene, 2-chloro-3-fluoro-1,4-phenylene, 2,3-difluoro-5-methyl-1,4-phenylene, 3,4,5-trifluoronaphthalene-2,6-diyl or 7,8-difluorochroman-2,6-diyl; $Z^5$ and $Z^6$ are independently a single bond, ethylene, carbonyloxy or methyleneoxy; e is 1, 2 or 3 and f is 0 or 1; and a sum of e and f is 3 or less.

Item 11. The liquid crystal composition according to any one of items 1 to 10, containing at least one compound selected from the group of compounds represented by formulas (5-1) to (5-19) as the fifth component:

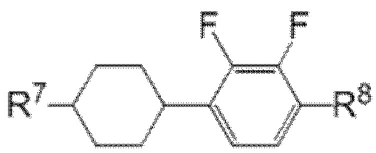

(5-1)

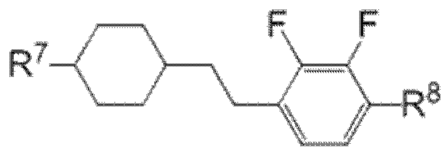

(5-2)

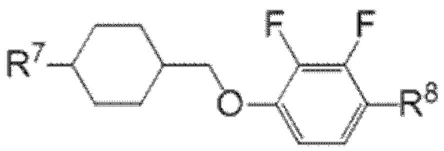

(5-3)

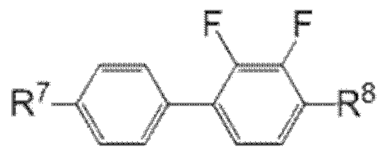

(5-4)

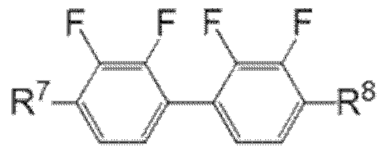

(5-5)

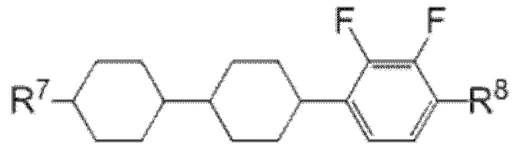

(5-6)

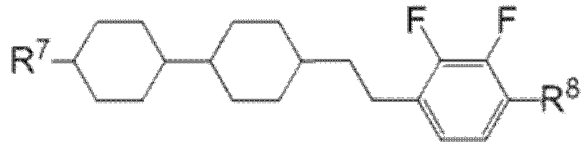

(5-7)

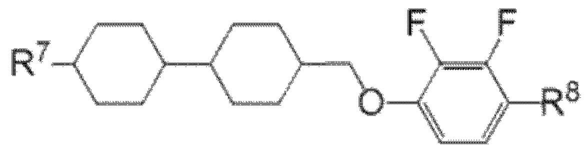

(5-8)

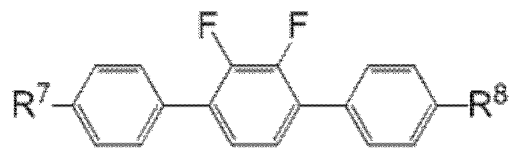

(5-9)

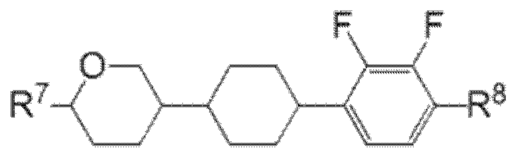

(5-10)

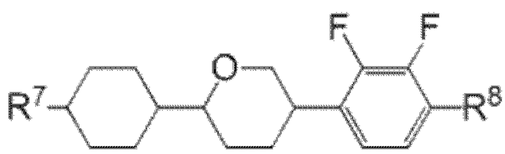

(5-11)

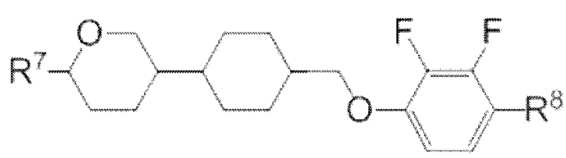

(5-12)

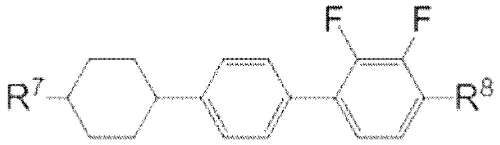
(5-13)

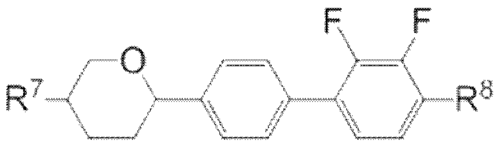
(5-14)

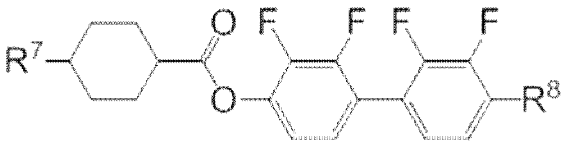
(5-15)

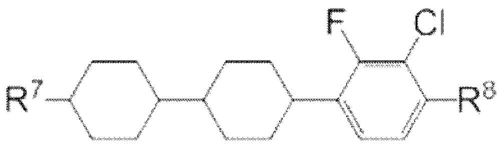
(5-16)

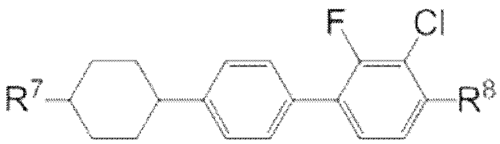
(5-17)

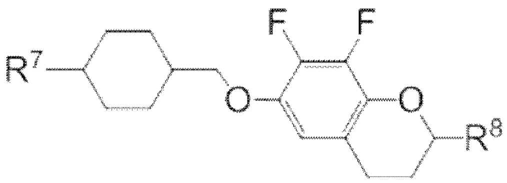
(5-18)

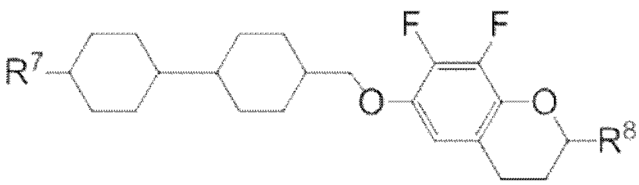
(5-19)

wherein, in formula (5-1) to formula (5-19), $R^7$ and $R^8$ are independently alkyl having 1 to 12 carbons, alkoxy having 1 to 12 carbons, alkenyl having 2 to 12 carbons, alkenyloxy having 2 to 12 carbons or alkyl having 1 to 12 carbons in which at least one of hydrogen is replaced by halogen.

Item 12. The liquid crystal composition according to item 10 or 11, wherein a proportion of the fifth component is in the range of 3% by weight to 25% by weight based on the weight of the liquid crystal composition.

Item 13. The liquid crystal composition according to any one of items 1 to 12, wherein a maximum temperature of a nematic phase is 70°C or higher, an optical anisotropy (measured at 25°C) at a wavelength of 589 nanometers is 0.07 or more and a dielectric anisotropy (measured at 25°C) at a frequency of 1 kHz is 2 or more.

Item 14. A liquid crystal display device, including the liquid crystal composition according to any one of items 1 to 13.

Item 15. The liquid crystal display device according to item 14, wherein an operating mode in the liquid crystal display device is a TN mode, an ECB mode, an OCB mode, an IPS mode, an FFS mode or an FPA mode, and a driving mode in the liquid crystal display device is an active matrix mode.

The invention further includes the following items: (a) the composition, further containing at least one additive

such as the optically active compound, the antioxidant, the ultraviolet light absorber, the dye, the antifoaming agent, the polymerizable compound, the polymerization initiator and the polymerization inhibitor; (b) an AM device, including the composition; (c) the composition, further containing the polymerizable compound, and a polymer sustained alignment (PSA) mode AM device including the composition; (d) a polymer sustained alignment (PSA) mode AM device, wherein the AM device includes the composition, and the polymerizable compound in the composition is polymerized; (e) a device, including the composition and having the PC mode, the TN mode, the STN mode, the ECB mode, the OCB mode, the IPS mode, the VA mode, the FFS mode or the FPA mode; (f) a transmissive device, including the composition; (g) use of the composition as the composition having the nematic phase; and (h) use as an optically active composition by adding the optically active compound to the composition.

The composition of the invention will be described in the following order. First, a constitution of the component compounds in the composition will be described. Second, main characteristics of the component compounds and main effects of the compounds on the composition will be described. Third, a combination of components in the composition, a preferred proportion of the components and the basis thereof will be described. Fourth, a preferred embodiment of the component compounds will be described. Fifth, a preferred component compound will be shown. Sixth, an additive that may be added to the composition will be described. Seventh, methods for synthesizing the component compounds will be described. Last, an application of the composition will be described.

First, the constitution of the component compounds in the composition will be described. The composition of the invention is classified into composition A and composition B. Composition A may further contain any other liquid crystal compound, any other additive or the like in addition to the liquid crystal compound selected from compound (1), compound (2), compound (3), compound (4) and compound (5). "Any other liquid crystal compound" means a liquid crystal compound different from compound (1), compound (2), compound (3), compound (4) and compound (5). Such a compound is mixed with the composition for the purpose of further adjusting the characteristics. The additive includes the optically active compound, the antioxidant, the ultraviolet light absorber, the dye, the antifoaming agent, the polymerizable compound, the polymerization initiator and the polymerization inhibitor.

Composition B consists essentially of liquid crystal compounds selected from compound (1), compound (2), compound (3), compound (4) and compound (5). A term "essentially" means that the composition may contain the additive, but does not contain any other liquid crystal compound. Composition B has a smaller number of components than composition A has. Composition B is preferred to composition A in view of cost reduction. Composition A is preferred to composition B in view of possibility of further adjusting the characteristics by mixing any other liquid crystal compound.

Second, the main characteristics of the component compounds and the main effects of the compounds on the characteristics of the composition will be described. The main characteristics of the component compounds are summarized in Table 2 on the basis of advantageous effects of the invention. In Table 2, a symbol L stands for "large" or "high," a symbol M stands for "medium," and a symbol S stands for "small" or "low." The symbols L, M and S represent a classification based on a qualitative comparison among the component compounds, and 0 (zero) means a value is zero or nearly zero.

Table 2. Characteristics of Compounds

| Compounds | (1) | (2) | (3) | (4) | (5) |
|---|---|---|---|---|---|
| Maximum temperature | S to L | M | S to L | S to L | S to M |
| Viscosity | M to L | S | S to M | M to L | M |
| Optical anisotropy | M to L | S | M to L | M to L | M to L |
| Dielectric anisotropy | M to L | 0 | 0 | S to L | M to L[1)] |
| Specific resistance | L | L | L | L | L |
| 1) A value of dielectric anisotropy is negative, and the symbol shows magnitude of an absolute value | | | | | |

Upon mixing the component compounds with the composition, the main effects of the component compounds on the characteristics of the composition are as described below. Compound (1) increases the dielectric anisotropy. Compound (2) decreases the viscosity. Compound (3) increases the maximum temperature or decreases the minimum temperature. Compound (4) decreases the minimum temperature and increases the dielectric anisotropy. Compound (5) increases a dielectric constant in a minor axis direction.

Third, the combination of components in the composition, the preferred proportion of the component compounds and the basis thereof will be described. The combination of components in the composition includes a combination of the first component and the second component, a combination of the first component, the second component and the third component, a combination of the first component, the second component and the fourth component, a combination

of the first component, the second component, the third component and the fourth component, a combination of the first component, the second component and the fifth component, a combination of the first component, the second component, the third component and the fifth component, a combination of the first component, the second component, the fourth component and the fifth component, or a combination of the first component, the second component, the third component, the fourth component and the fifth component. A preferred combination of components in the composition includes a combination of the first component, the second component and the third component, or a combination of the first component, the second component, the third component and the fourth component.

A preferred proportion of the first component is about 5% by weight or more for increasing the dielectric anisotropy, and about 40% by weight or less for decreasing the minimum temperature or decreasing the viscosity. A further preferred proportion is in the range of about 5% by weight to about 30% by weight. A particularly preferred proportion is in the range of about 5% by weight to about 25% by weight.

A preferred proportion of the second component is about 10% by weight or more for decreasing the viscosity, and about 60% by weight or less for increasing the dielectric anisotropy. A further preferred proportion is in the range of about 15% by weight to about 55% by weight. A particularly preferred proportion is in the range of about 20% by weight to about 50% by weight.

A preferred proportion of the third component is about 5% by weight or more for increasing the maximum temperature or decreasing the viscosity, and about 55% by weight or less for increasing the dielectric anisotropy. A further preferred proportion is in the range of about 10% by weight to about 50% by weight. A particularly preferred proportion is in the range of about 15% by weight to about 45% by weight.

A preferred proportion of the fourth component is about 5% by weight or more for increasing the dielectric anisotropy, and about 35% by weight or less for decreasing the minimum temperature. A further preferred proportion is in the range of about 5% by weight to about 30% by weight. A particularly preferred proportion is in the range of about 5% by weight to about 25% by weight.

A preferred proportion of the fifth component is about 3% by weight or more for increasing the dielectric anisotropy, and about 25% by weight or less for decreasing the minimum temperature. A further preferred proportion is in the range of about 5% by weight to about 20% by weight. A particularly preferred proportion is in the range of about 5% by weight to about 15% by weight.

Fourth, the preferred embodiment of the component compounds will be described. $R^1$ and $R^6$ are independently alkyl having 1 to 12 carbons, alkoxy having 1 to 12 carbons or alkenyl having 2 to 12 carbons. Preferred $R^1$ or $R^6$ is alkyl having 1 to 12 carbons for increasing the stability to ultraviolet light or heat. $R^2$ is alkyl having 1 to 3 carbons or alkyl having 1 to 12 carbons in which at least one of hydrogen is replaced by halogen. Preferred $R^2$ is propyl or 3-fluoropropyl. A configuration of -CH=CH- in -CH=CH-$R^2$ is trans or cis, and a preferred configuration is trans. $R^3$ is hydrogen or alkyl having 1 to 5 carbons. Preferred $R^3$ is hydrogen or methyl. $R^4$ and $R^5$ are independently alkyl having 1 to 12 carbons, alkoxy having 1 to 12 carbons, alkenyl having 2 to 12 carbons, alkyl having 1 to 12 carbons in which at least one of hydrogen is replaced by halogen, or alkenyl having 2 to 12 carbons in which at least one of hydrogen is replaced by fluorine. Preferred $R^4$ or $R^5$ is alkyl having 1 to 12 carbons for increasing the stability to ultraviolet light or heat, and alkenyl having 2 to 12 carbons for decreasing the minimum temperature or decreasing the viscosity. $R^7$ and $R^8$ are independently alkyl having 1 to 12 carbons, alkoxy having 1 to 12 carbons, alkenyl having 2 to 12 carbons, alkenyloxy having 2 to 12 carbons or alkyl having 1 to 12 carbons in which at least one of hydrogen is replaced by halogen. Preferred $R^7$ or $R^8$ is alkyl having 1 to 12 carbons for increasing the stability, and alkoxy having 1 to 12 carbons for increasing the dielectric anisotropy. Preferred halogen is fluorine or chlorine, and further preferred halogen is fluorine.

Preferred alkyl is methyl, ethyl, propyl, butyl, pentyl, hexyl, heptyl or octyl. Further preferred alkyl is ethyl, propyl, butyl, pentyl or heptyl for decreasing the viscosity.

Preferred alkoxy is methoxy, ethoxy, propoxy, butoxy, pentyloxy, hexyloxy or heptyloxy. Further preferred alkoxy is methoxy or ethoxy for decreasing the viscosity.

Preferred alkenyl is vinyl, 1-propenyl, 2-propenyl, 1-butenyl, 2-butenyl, 3-butenyl, 1-pentenyl, 2-pentenyl, 3-pentenyl, 4-pentenyl, 1-hexenyl, 2-hexenyl, 3-hexenyl, 4-hexenyl or 5-hexenyl. Further preferred alkenyl is vinyl, 1-propenyl, 3-butenyl or 3-pentenyl for decreasing the viscosity. A preferred configuration of -CH=CH- in the alkenyl depends on a position of a double bond. Trans is preferred in alkenyl such as 1-propenyl, 1-butenyl, 1-pentenyl, 1-hexenyl, 3-pentenyl and 3-hexenyl for decreasing the viscosity or the like. Cis is preferred in alkenyl such as 2-butenyl, 2-pentenyl and 2-hexenyl. In the alkenyl, straight-chain alkenyl is preferred to branched-chain alkenyl.

Preferred examples of alkenyl in which at least one of hydrogen is replaced by fluorine include 2,2-difluorovinyl, 3,3-difluoro-2-propenyl, 4,4-difluoro-3-butenyl, 5,5-difluoro-4-pentenyl or 6,6-difluoro-5-hexenyl. Further preferred examples include 2,2-difluorovinyl or 4,4-difluoro-3-butenyl for decreasing the viscosity.

Then, j and k are independently 0, 1, 2 or 3, and a sum of j and k is 4 or less. Preferred j is 0 for decreasing the minimum temperature. Preferred k is 1 or 2 for increasing the maximum temperature. Then, n is 1, 2 or 3. Preferred n is 2 for decreasing the minimum temperature. Then, p is 1, 2, 3 or 4. Preferred p is 2 for decreasing the minimum temperature, and 3 for increasing the dielectric anisotropy. Then, e is 1, 2 or 3, f is 0 or 1, and the sum of e and f is 3 or

less. Preferred e is 1 for decreasing the viscosity, and 2 or 3 for increasing the maximum temperature. Preferred f is 0 for decreasing the viscosity, and 1 for decreasing the minimum temperature.

$Z^1$ and $Z^2$ are independently a single bond, ethylene, vinylene, methyleneoxy, carbonyloxy or difluoromethyleneoxy. Preferred $Z^1$ or $Z^2$ is a single bond for decreasing the viscosity, and difluoromethyleneoxy for increasing the dielectric anisotropy. $Z^3$ is a single bond, ethylene or carbonyloxy. Preferred $Z^3$ is a single bond for decreasing the viscosity. $Z^4$ is a single bond, ethylene, carbonyloxy or difluoromethyleneoxy. Preferred $Z^4$ is difluoromethyleneoxy for increasing the dielectric anisotropy. $Z^5$ and $Z^6$ are independently a single bond, ethylene, carbonyloxy or methyleneoxy. Preferred $Z^5$ or $Z^6$ is a single bond for decreasing the viscosity, and methyleneoxy for increasing the dielectric anisotropy.

Ring A and ring B are independently 1,4-cyclohexylene, 1,4-phenylene, 2-fluoro-1,4-phenylene, 2,3-difluoro-1,4-phenylene, 2,6-difluoro-1,4-phenylene, pyrimidine-2,5-diyl, 1,3-dioxane-2,5-diyl or tetrahydropyran-2,5-diyl. Preferred ring A or ring B is 1,4-phenylene or 2-fluoro-1,4-phenylene for increasing the optical anisotropy. Ring C and ring D are independently 1,4-cyclohexylene, 1,4-phenylene, 2-fluoro-1,4-phenylene or 2,5-difluoro-1,4-phenylene. When n is 1, ring D is 1,4-phenylene. Preferred ring C or ring D is 1,4-cyclohexylene for decreasing the viscosity, or 1,4-phenylene for increasing the optical anisotropy. Ring E is 1,4-cyclohexylene, 1,4-phenylene, 2-fluoro-1,4-phenylene, 2,3-difluoro-1,4-phenylene, 2,6-difluoro-1,4-phenylene, pyrimidine-2,5-diyl or tetrahydropyran-2,5-diyl. Preferred ring E is 1,4-phenylene or 2-fluoro-1,4-phenylene for increasing the optical anisotropy. Ring F and ring I are independently 1,4-cyclohexylene, 1,4-cyclohexenylene, 1,4-phenylene, 1,4-phenylene in which at least one of hydrogen is replaced by fluorine or chlorine, or tetrahydropyran-2,5-diyl. Preferred examples of "1,4-phenylene in which at least one of hydrogen is replaced by fluorine or chlorine" include 2-fluoro-1,4-phenylene, 2,3-difluoro-1,4-phenylene or 2-chloro-3-fluoro-1,4-phenylene. Preferred ring F or ring I is 1,4-cyclohexylene for decreasing the viscosity, tetrahydropyran-2,5-diyl for increasing the dielectric anisotropy and 1,4-phenylene for increasing the optical anisotropy. Ring G is 2,3-difluoro-1,4-phenylene, 2-chloro-3-fluoro-1,4-phenylene, 2,3-difluoro-5-methyl-1,4-phenylene, 3,4,5-trifluoronaphthalene 2,6-diyl or 7,8-difluorochroman-2,6-diyl. Preferred ring G is 2,3-difluoro-1,4-phenylene for increasing the dielectric anisotropy. With regard to a configuration of 1,4-cyclohexylene, trans is preferred to cis for increasing the maximum temperature. Tetrahydropyran-2,5-diyl includes:

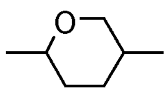 or 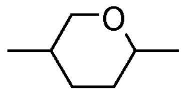 ,

preferably

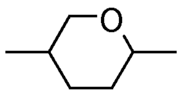 .

$X^1$, $X^2$, $X^3$, $X^4$, $X^5$, $X^6$, $X^7$, $X^8$ and $X^9$ are independently hydrogen or fluorine. Preferred $X^1$, $X^2$, $X^3$, $X^4$, $X^5$, $X^6$, $X^7$, $X^8$ or $X^9$ is fluorine for increasing the dielectric anisotropy.

$Y^2$ is independently fluorine, chlorine, alkyl having 1 to 12 carbons in which at least one of hydrogen is replaced by halogen, alkoxy having 1 to 12 carbons in which at least one of hydrogen is replaced by halogen, or alkenyloxy having 2 to 12 carbons in which at least one of hydrogen is replaced by halogen. $Y^1$ is independently fluorine, chlorine, alkyl having 1 to 12 carbons in which at least one of hydrogen is replaced by halogen, or alkenyloxy having 2 to 12 carbons in which at least one of hydrogen is replaced by halogen. Preferred $Y^1$ or $Y^2$ is fluorine for decreasing the minimum temperature.

Fifth, the preferred component compound will be shown. Preferred compound (1) includes compound (1-1) to compound (1-12) described in item 2. In the compounds, at least one of the first component preferably includes compound (1-1), compound (1-2), compound (1-3), compound (1-4), compound (1-7), compound (1-2), compound (1-3), compound (1-4), compound (1-7), compound (1-8), compound (1-9), compound (1-10) or compound (1-12). At least two of the first components preferably includes a combination of compound (1-3) and compound (1-4), a combination of compound (1-3) and compound (1-7), a combination of compound (1-4) and compound (1-10) or a combination of compound (1-10) and compound (1-12).

Preferred compound (3) includes compound (3-1) to compound (3-12) described in item 5. In the compounds, at least one of the third component preferably includes compound (3-2), compound (3-4), compound (3-5), compound (3-6), compound (3-9) or compound (3-12). At least two of the third components preferably includes a combination of compound (3-2) and compound (3-4), a combination of compound (3-2) and compound (3-5) or a combination of compound (3-2) and compound (3-6).

Preferred compound (4) includes compound (4-1) to compound (4-24) described in item 8. In the compounds, at least one of the fourth component preferably includes compound (4-4), compound (4-9), compound (4-11), compound (4-12), compound (4-15), compound (4-16), compound (4-18) or compound (4-19). At least two of the fourth components preferably includes a combination of compound (4-9) and compound (4-12), a combination of compound (4-9) and compound (4-18), a combination of compound (4-12)and compound (4-15), a combination of compound (4-12) and compound (4-18), a combination of compound (4-15) and compound (4-18) or a combination of compound (4-18) and compound (4-19).

Preferred compound (5) includes compound (5-1) to compound (5-19) described in item 11. In the compounds, at least one of the fifth component preferably includes compound (5-1), compound (5-3), compound (5-4), compound (5-6), compound (5-8) or compound (5-13). At least two of the fifth components preferably includes a combination of compound (5-1) and compound (5-6), a combination of compound (5-1) and compound (5-13), a combination of compound (5-3) and compound (5-6), a combination of compound (5-3) and compound (5-13), a combination of compound (5-4) and compound (5-6) or a combination of compound (5-4) and compound (5-8) .

Sixth, the additive that may be added to the composition will be described. Such an additive includes the optically active compound, the antioxidant, the ultraviolet light absorber, the dye, the antifoaming agent, the polymerizable compound, the polymerization initiator and the polymerization inhibitor. The optically active compound is added to the composition for inducing a helical structure in a liquid crystal to give a twist angle. Examples of such a compound include compound (6-1) to compound (6-5) . A preferred proportion of the optically active compound is about 5% by weight or less. A further preferred proportion is in the range of about 0.01% by weight to about 2% by weight.

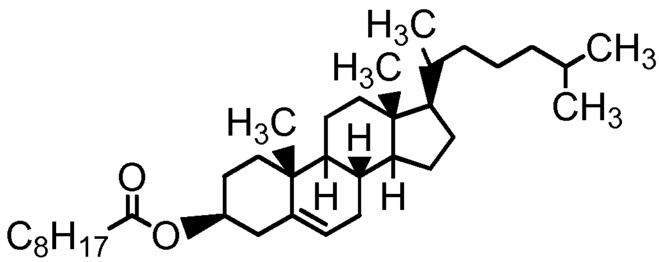

(6-1)

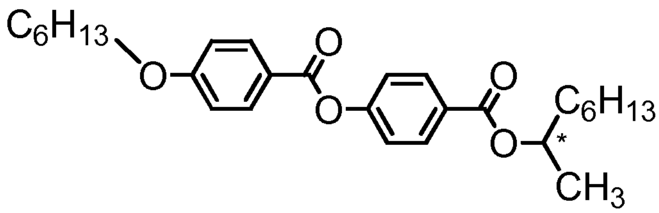

(6-2)

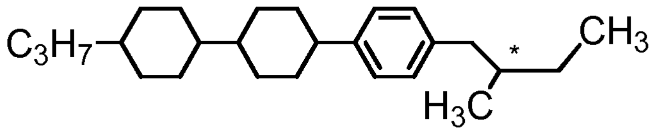

(6-3)

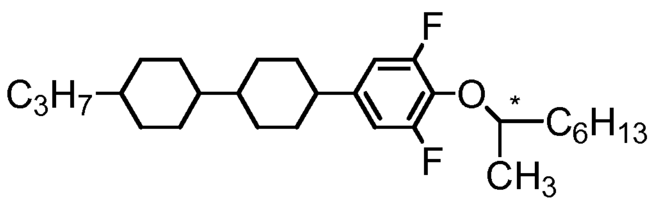

(6-4)

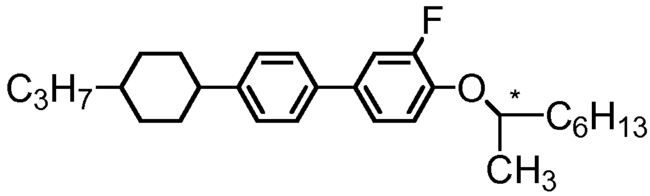

(6-5)

The antioxidant is added to the composition for the purpose of preventing a decrease in the specific resistance caused by heating in air, or maintaining a large voltage holding ratio at room temperature and also at a temperature close to the maximum temperature even after the device has been used for a long period of time. Preferred examples of the antioxidant include compound (7) where t is an integer from 1 to 9 or the like.

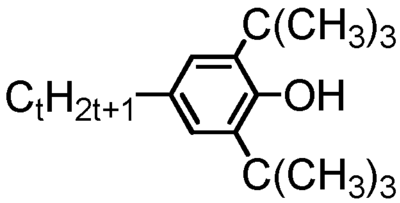

(7)

In compound (7), preferred t is 1, 3, 5, 7 or 9. Further preferred t is 7. Compound (7) where t is 7 is effective for maintaining the large voltage holding ratio at room temperature and also at the temperature close to the maximum temperature even after the device has been used for a long period of time because the compound (7) has a small volatility. A preferred proportion of the antioxidant is about 50 ppm or more for achieving an effect thereof, and about 600 ppm or less for avoiding a decrease in the maximum temperature or avoiding an increase in the minimum temperature. A further preferred proportion is in the range of about 100 ppm to about 300 ppm.

Preferred examples of the ultraviolet light absorber include a benzophenone derivative, a benzoate derivative and a triazole derivative. A light stabilizer such as an amine having steric hindrance is also preferred. A preferred proportion of the ultraviolet light absorber or the stabilizer is about 50 ppm or more for achieving an effect thereof, and about 10, 000 ppm or less for avoiding a decrease in the maximum temperature or avoiding an increase in the minimum temperature. A further preferred proportion is in the range of about 100 ppm to about 10,000 ppm.

A dichroic dye such as an azo dye or an anthraquinone dye is added to the composition for the purpose of adapting the composition to a device having a guest host (GH) mode. A preferred proportion of the dye is in the range of about 0.01% by weight to about 10% by weight. The antifoaming agent such as dimethyl silicone oil or methyl phenyl silicone oil is added to the composition for preventing foam formation. A preferred proportion of the antifoaming agent is about 1 ppm or more for achieving an effect thereof, and about 1,000 ppm or less for preventing a poor display. A further preferred proportion is in the range of about 1 ppm to about 500 ppm.

The polymerizable compound is added to the composition for the purpose of adapting the composition to a polymer sustained alignment (PSA) mode device. Preferred examples of the polymerizable compounds include a compound having a polymerizable group, such as acrylate, methacrylate, a vinyl compound, a vinyloxy compound, propenyl ether, an epoxy compound (oxirane and oxetane) and vinyl ketone. Further preferred examples include an acrylate derivative or a methacrylate derivative. A preferred proportion of the polymerizable compound is about 0.05% by weight or more for achieving an effect thereof, and about 10% by weight or less for avoiding poor display. A further preferred proportion is in the range of about 0.1% by weight to about 2% by weight. The polymerizable compound is polymerized by irradiation with ultraviolet light. The polymerizable compound may be polymerized in the presence of an initiator such as a photopolymerization initiator. Suitable conditions for polymerization, suitable types of the initiator and suitable amounts thereof are known to those skilled in the art and are described in literature. For example, Irgacure 651 (registered trademark; BASF), Irgacure 184 (registered trademark; BASF) or Darocur 1173 (registered trademark; BASF), each being a photoinitiator, is suitable for radical polymerization. A preferred proportion of the photopolymerization initiator is in the range of about 0.1% by weight to about 5% by weight based on the weight of the polymerizable compound. A further preferred proportion is in the range of about 1% by weight to about 3% by weight based thereon.

Upon storing the polymerizable compound, the polymerization inhibitor may be added thereto for preventing polymerization. The polymerizable compound is ordinarily added to the composition without removing the polymerization inhibitor. Examples of the polymerization inhibitor include hydroquinone, a hydroquinone derivative such as methylhydroquinone, 4-tert-butylcatechol, 4-methoxyphenol and phenothiazine.

Seventh, the methods for synthesizing the component compounds will be described. The compounds can be prepared according to known methods. Examples of synthetic methods are described. Compound (1) is prepared by a

method described in JP H10-81679 A. Compound (2) is prepared by a method described in JP S59-176221 A. Compound (3-12) is prepared by a method described in JP H2-237949 A. Compound (4-2) and compound (4-6) are prepared by a method described in JP H2-233626 A. Compound (5-1) and compound (5-6) are prepared by a method published in JP H2-503441 A. The antioxidant is commercially available. A compound where t in formula (7) is 1 can be obtained from Sigma-Aldrich Corporation. A compound where t in compound (7) is 7 or the like can be prepared according to a method described in US 3660505 B.

Last, the application of the composition will be described. The composition of the invention mainly has a minimum temperature of about -10°C or lower, a maximum temperature of about 70°C or higher and an optical anisotropy in the range of about 0.07 to about 0.20. The device including the composition has a large voltage holding ratio. The composition is suitable for use in the AM device. The composition is particularly suitable for use in a transmissive AM device. The composition having an optical anisotropy in the range of about 0.08 to about 0.25 may be prepared by controlling the proportion of the component compounds or by mixing any other liquid crystal compound, and further the composition having an optical anisotropy in the range of about 0.10 to about 0.30 may be prepared. The composition can be used as the composition having the nematic phase and as the optically active composition by adding the optically active compound.

The composition can be used for the AM device. The composition can also be used for a PM device. The composition can be used for an AM device and a PM device each having a mode such as the PC mode, the TN mode, the STN mode, the ECB mode, the OCB mode, the IPS mode, the FFS mode, the VA mode and the FPA mode. Use for the AM device having the TN mode, the OCB mode, the IPS mode or the FFS mode is particularly preferred. In the AM device having the IPS mode or the FFS mode, alignment of liquid crystal molecules when no voltage is applied may be parallel or vertical to a glass substrate. The devices may be of a reflective type, a transmissive type or a transflective type. Use for the transmissive device is preferred. The composition can also be used for an amorphous silicon-TFT device or a polycrystal silicon-TFT device. The composition can also be used for a nematic curvilinear aligned phase (NCAP) device prepared by microencapsulating the composition, or for a polymer dispersed (PD) device in which a three-dimensional network-polymer is formed in the composition.

## Examples

The invention will be described in greater detail by way of Examples. The invention is not limited by the Examples. A synthesized compound was identified by methods such as an NMR analysis. Characteristics of a compound and a composition were measured by methods described below.

NMR analysis: For measurement, DRX-500 made by Bruker BioSpin Corporation was used. In $^1$H-NMR measurement, a sample was dissolved in a deuterated solvent such as $CDCl_3$, and measurement was carried out under conditions of room temperature, 500 MHz and 16 times of accumulation. Tetramethylsilane (TMS) was used as an internal standard. In $^{19}$F-NMR measurement, $CFCl_3$ was used as an internal standard, and measurement was carried out under conditions of 24 times of accumulation. In explaining nuclear magnetic resonance spectra obtained, s, d, t, q, quin, sex and m stand for a singlet, a doublet, a triplet, a quartet, a quintet, a sextet and a multiplet, and br being broad, respectively.

Gas chromatographic analysis: GC-14B Gas Chromatograph made by Shimadzu Corporation was used for measurement. A carrier gas was helium (2 mL per minute) . A sample injector and a detector (FID) were set to 280°C and 300°C, respectively. A capillary column DB-1 (length 30 m, bore 0.32 mm, film thickness 0.25 μm; dimethylpolysiloxane as a stationary phase, non-polar) made by Agilent Technologies, Inc. was used for separation of component compounds. After a column was kept at 200°C for 2 minutes, the column was heated to 280°C at a rate of 5°C per minute. A sample was prepared in an acetone solution (0.1% by weight), and then 1 microliter of the solution was injected into the sample injector. A recorder was C-R5A Chromatopac made by Shimadzu Corporation or the equivalent thereof. The resulting gas chromatogram showed a peak retention time and a peak area corresponding to each of the component compounds.

As a solvent for diluting the sample, chloroform, hexane or the like may also be used. The following capillary columns may also be used for separating the component compounds: HP-1 (length 30 m, bore 0.32 mm, film thickness 0.25 μm) made by Agilent Technologies, Inc., Rtx-1 (length 30 m, bore 0.32 mm, film thickness 0.25 μm) made by Restek Corporation and BP-1 (length 30 m, bore 0.32 mm, film thickness 0.25 μm) made by SGE International Pty. Ltd. A capillary column CBP1-M50-025 (length 50 m, bore 0.25 mm, film thickness 0.25 μm) made by Shimadzu Corporation may also be used for the purpose of avoiding an overlap of peaks of the compounds.

A proportion of liquid crystal compounds contained in the composition may be calculated by the method as described below. A mixture of the liquid crystal compounds was detected by gas chromatograph (FID). An area ratio of each peak in the gas chromatogram corresponds to the ratio (weight ratio) of the liquid crystal compound. When the capillary columns described above were used, a correction coefficient of each of the liquid crystal compounds may be regarded as 1 (one) . Accordingly, the proportion (% by weight) of the liquid crystal compound is calculated from the

area ratio of each peak.

Sample for measurement: When characteristics of a composition were measured, the composition was used as a sample as was. Upon measuring characteristics of the compound, a sample for measurement was prepared by mixing the compound (15% by weight) with a base liquid crystal (85% by weight) . Values of characteristics of the compound were calculated using values obtained by measurement, according to an extrapolation method: (Extrapolated value) = {(measured value of a sample for measurement) - 0.85 $\times$ (measured value of a base liquid crystal) } / 0.15. When a smectic phase (or crystals) precipitates at the ratio thereof at 25°C, a ratio of the compound to the base liquid crystal was changed step by step in the order of (10% by weight : 90% by weight), (5% by weight : 95% by weight) and (1% by weight : 99% by weight). Values of maximum temperature, optical anisotropy, viscosity and dielectric anisotropy with regard to the compound were determined according to the extrapolation method.

The base liquid crystal described below was used. A proportion of the component compound was expressed in terms of weight percent (% by weight).

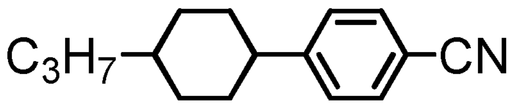 24%

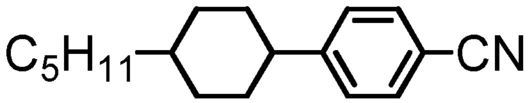 36%

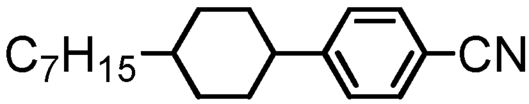 25%

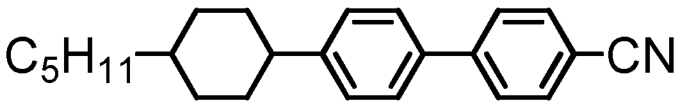 15%

Measuring method: Measurement of characteristics was carried out by methods described below. Most of the measuring methods are applied as described in the Standard of the Japan Electronics and Information Technology Industries Association (hereinafter abbreviated as JEITA) (JEITA ED-2521B) discussed and established by JEITA, or as modified thereon. No thin film transistor (TFT) was attached to a TN device used for measurement.

(1) Maximum temperature of nematic phase (NI; °C) : A sample was placed on a hot plate in a melting point apparatus equipped with a polarizing microscope and heated at a rate of 1°C per minute. Temperature when part of the sample began to change from a nematic phase to an isotropic liquid was measured.

(2) Minimum temperature of nematic phase ($T_C$; °C) : Samples each having a nematic phase were put in glass vials and kept in freezers at temperatures of 0°C, -10°C, -20°C, -30°C and -40°C for 10 days, and then liquid crystal phases were observed. For example, when the sample maintained the nematic phase at -20°C and changed to crystals or a smectic phase at -30°C, $T_C$ was expressed as $T_C$ < -20°C.

(3) Viscosity (bulk viscosity; $\eta$; measured at 20°C; mPa·s) : A cone-plate (E type) rotational viscometer made by TOKYO KEIKI INC. was used for measurement.

(4) Viscosity (rotational viscosity; $\gamma 1$; measured at 25°C; mPa·s): Measurement was carried out according to a method described in M. Imai et al., Molecular Crystals and Liquid Crystals, Vol. 259, p. 37 (1995) . A sample was put in a TN device in which a twist angle was 0 degree and a distance (cell gap) between two glass substrates was 5 micrometers. Voltage was applied stepwise to the device in the range of 16 V to 19.5 V at an increment of 0.5 V. After a period of 0.2 second with no voltage application, voltage was applied repeatedly under conditions of only one rectangular wave (rectangular pulse; 0.2 second) and no voltage application (2 seconds). A peak current and a peak time of a transient current generated by the applied voltage were measured. A value of rotational viscosity was obtained from the measured values and a calculation equation (8) described on page 40 of the paper presented by M. Imai et al. A value of dielectric anisotropy required for the calculation was determined using the device by which the rotational viscosity was measured and by a method described below.

(5) Optical anisotropy (refractive index anisotropy; $\Delta n$; measured at 25°C): Measurement was carried out by an

Abbe refractometer with a polarizing plate mounted on an ocular, using light at a wavelength of 589 nanometers. A surface of a main prism was rubbed in one direction, and then a sample was added dropwise onto the main prism. A refractive index (n||) was measured when the direction of polarized light was parallel to the direction of rubbing. A refractive index (n⊥) was measured when the direction of polarized light was perpendicular to the direction of rubbing. A value of optical anisotropy was calculated from an equation: $\Delta n = n|| - n\perp$.

(6) Dielectric anisotropy (Δε; measured at 25°C): A sample was put in a TN device in which a distance (cell gap) between two glass substrates was 9 micrometers and a twist angle was 80 degrees. Sine waves (10 V, 1 kHz) were applied to the device, and after 2 seconds, a dielectric constant (ε||) in a major axis direction of liquid crystal molecules was measured. Sine waves (0.5 V, 1 kHz) were applied to the device, and after 2 seconds, a dielectric constant (E-.1) in a minor axis direction of the liquid crystal molecules was measured. A value of dielectric anisotropy was calculated from an equation: $\Delta\varepsilon = \varepsilon|| - \varepsilon\perp$.

(7) Threshold voltage (Vth; measured at 25°C; V): An LCD-5100 luminance meter made by Otsuka Electronics Co., Ltd. was used for measurement. A light source was a halogen lamp. A sample was put in a normally white mode TN device in which a distance (cell gap) between two glass substrates was 0.45 / Δn (μm) and a twist angle was 80 degrees. A voltage (32 Hz, rectangular waves) to be applied to the device was stepwise increased from 0 V to 10 V at an increment of 0.02 V. On the occasion, the device was irradiated with light from a direction perpendicular to the device, and an amount of light transmitted through the device was measured. A voltage-transmittance curve was prepared, in which a maximum amount of light corresponds to 100% transmittance and a minimum amount of light corresponds to 0% transmittance. A threshold voltage is expressed in terms of a voltage at 90% transmittance.

(8) Voltage holding ratio (VHR-1; measured at 25°C; %): A TN device used for measurement had a polyimide alignment film, and a distance (cell gap) between two glass substrates was 5 micrometers. A sample was put in the device, and then the device was sealed with an ultraviolet-curable adhesive. A pulse voltage (60 microseconds at 5 V) was applied to the TN device and the device was charged. A decaying voltage was measured for 16.7 milliseconds with a high-speed voltmeter, and area A between a voltage curve and a horizontal axis in a unit cycle was determined. Area B was an area without decay. A voltage holding ratio is expressed in terms of a percentage of area A to area B.

(9) Voltage holding ratio (VHR-2; measured at 80°C; %): A voltage holding ratio was measured in procedures identical with the procedures described above except that the voltage holding ratio was measured at 80°C in place of 25°C. The thus obtained value was expressed in terms of VHR-2.

(10) Voltage holding ratio (VHR-3; measured at 25°C; %): Stability to ultraviolet light was evaluated by measuring a voltage holding ratio after a device was irradiated with ultraviolet light. A TN device used for measurement had a polyimide alignment film, and a cell gap was 5 micrometers. A sample was injected into the device, and then the device was irradiated with light for 20 minutes. A light source was an ultra high-pressure mercury lamp USH-500D (made by Ushio, Inc.), and a distance between the device and the light source was 20 centimeters. In measurement of VHR-3, a decaying voltage was measured for 16.7 milliseconds. A composition having large VHR-3 has a large stability to ultraviolet light. VHR-3 is preferably 90% or more and further preferably 95% or more.

(11) Voltage holding ratio (VHR-4; measured at 25°C; %): Stability to heat was evaluated by measuring a voltage holding ratio after a TN device into which a sample was injected was heated in a constant-temperature bath at 80°C for 500 hours. In measurement of VHR-4, a decaying voltage was measured for 16.7 milliseconds. A composition having large VHR-4 has a large stability to heat.

(12) Response time (τ; measured at 25°C; ms) : An LCD-5100 luminance meter made by Otsuka Electronics Co., Ltd. was used for measurement. A light source was a halogen lamp. A low-pass filter was set at 5 kHz. A sample was put in a normally white mode TN device in which a distance (cell gap) between two glass substrates was 5.0 micrometers and a twist angle was 80 degrees. Rectangular waves (60 Hz, 5 V, 0.5 second) were applied to the device. On the occasion, the device was irradiated with light from a direction perpendicular to the device, and an amount of light transmitted through the device was measured. The maximum amount of light corresponds to 100% transmittance, and the minimum amount of light corresponds to 0% transmittance. A rise time (τr; millisecond) is a time required for a change from 90% transmittance to 10% transmittance. A fall time (τf: millisecond) is a time required for a change from 10% transmittance to 90% transmittance. The response time was expressed by a sum of the thus obtained rise time and fall time.

(13) Elastic constant (K; measured at 25°C; pN) : A HP4284A LCR Meter made by Yokogawa-Hewlett-Packard Co. was used for measurement. A sample was put in a horizontal alignment device in which a distance (cell gap) between two glass substrates was 20 micrometers. An electric charge of 0 V to 20 V was applied to the device, and electrostatic capacity and applied voltage were measured. The measured values of electrostatic capacity (C) and applied voltage (V) were fitted to equation (2.98) and equation (2.101) on page 75 of "Liquid Crystal Device Handbook" (Ekisho Debaisu Handobukku in Japanese; The Nikkan Kogyo Shimbun, Ltd.) and values of K11 and K33 were obtained from equation (2.99) . Next, K22 was calculated using the previously determined values of K11 and K33 in formula (3.18) on page 171. The elastic constant was expressed in terms of a mean value of the thus determined K11, K22 and K33.

(14) Specific resistance (ρ; measured at 25°C; Ω cm) : Into a vessel equipped with electrodes, 1.0 milliliter of a sample was injected. A direct current voltage (10 V) was applied to the vessel, and a direct current after 10 seconds was measured. A specific resistance was calculated from the following equation:

(specific resistance) = {(voltage) × (electric capacity of a vessel)} / {(direct current) × (dielectric constant of vacuum)}.

(15) Helical pitch (P; measured at room temperature; μm) : A helical pitch was measured according to a wedge method. Refer to page 196 in "Handbook of Liquid Crystals (Ekisho Binran in Japanese)" (issued in 2000, Maruzen Co., Ltd.). A sample was injected into a wedge cell and left to stand at room temperature for 2 hours, and then a gap (d2 - d1) between disclination lines was observed by a polarizing microscope (trade name: MM40/60 Series, Nikon Corporation). A helical pitch (P) was calculated according to the following equation in which an angle of the wedge cell was expressed as θ: P = 2 × (d2 - d1) × tanθ.

(16) Dielectric constant in a minor axis direction (ε⊥; measured at 25°C): A sample was put in a TN device in which a distance (cell gap) between two glass substrates was 9 micrometers and a twist angle was 80 degrees. Sine waves (0.5 V, 1 kHz) were applied to the device, and after 2 seconds, a dielectric constant (ε⊥) in the minor axis direction of the liquid crystal molecules was measured.

The compounds in Examples were described using symbols according to definitions in Table 3 below. In Table 3, a configuration of 1,4-cyclohexylene is trans. A parenthesized number next to a symbolized compound corresponds to the number of the compound. A symbol (-) means any other liquid crystal compound. A proportion (percentage) of the liquid crystal compound is expressed in terms of weight percent (% by weight) based on the weight of the liquid crystal composition. Values of the characteristics of the composition were summarized in the last part.

Table 3 Method for Description of Compounds using Symbols

| R-$(A_1)$-$Z_1$ -······-$Z_n$-$(A_n)$-R' | | | |
|---|---|---|---|
| 1) Left-terminal Group R- | Symbol | 4) Ring Structure-$A_n$- | Symbol |
| $C_nH_{2n+1}$- | n- | | |
| $C_nH_{2n+1}O$- | nO- | 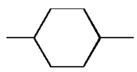 | H |
| $C_mH_{2m+1}OC_nH_{2n}$- | mOn- | | |
| $CH_2$=CH- | V- | | |
| $C_nH_{2n+1}$-CH=CH- | nV- | 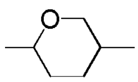 | Dh |
| $CH_2$=CH-$C_nH_{2n}$- | Vn- | | |
| $C_mH_{2m+1}$-CH=CH-$C_nH_{2n}$- | mVn- | 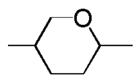 | dh |
| $CF_2$=CH- | VFF- | | |
| $CF_2$=CH-$C_nH_{2n}$- | VFFn- | | |
| F-$C_nH_{2n}$- | Fn- | 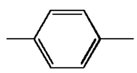 | B |
| 2) Right-terminal Group -R' | Symbol | | |
| -$C_nH_{2n+1}$ | -n | | |
| -$OC_nH_{2n+1}$ | -On | 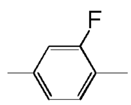 | B(F) |
| -CH=$CH_2$ | -V | | |
| -CH=CH-$C_nH_{2n+1}$ | -Vn | 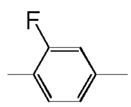 | B(2F) |
| -$C_nH_{2n}$-CH=$CH_2$ | -nV | | |
| -$C_nH_{2n}$-CH=CH-$C_mH_{2m+1}$ | -nVm | | |
| -CH=$CF_2$ | -VFF | | |
| -$COOCH_3$ | -EMe | 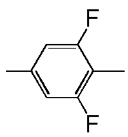 | B(F,F) |
| -F | -F | | |

(continued)

| R-(A$_1$)-Z$_1$ -······-Z$_n$-(A$_n$)-R' | | | |
|---|---|---|---|
| -Cl | -CL | 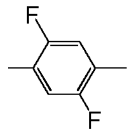 | B(2F,5F) |
| -OCF$_3$ | -OCF3 | | |
| -CF$_3$ | -CF3 | | |
| -CN | -C | 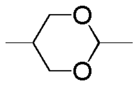 | G |
| 3) Bonding Group -Z$_n$- | Symbol | | |
| -C$_2$H$_4$- | 2 | | |
| -COO- | E | 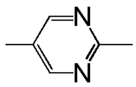 | Py |
| -CH=CH- | V | | |
| -C≡C- | T | 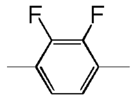 | B(2F,3F) |
| -CF$_2$O- | X | | |
| -CH$_2$O- | 1O | | |
| 5) Examples of Description | | | |
| Example 1. 3-HH-V1 | | Example 2. 3-BB(F)B(F,F)-F | |
| 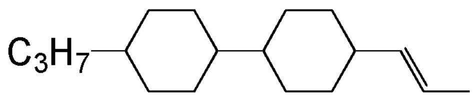 | | 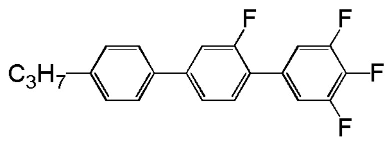 | |
| Example 3. 4-BB(F)B(F,F)XB(F,F)-F | | Example 4. 5-GB(F,F)XB(F)-F | |
| 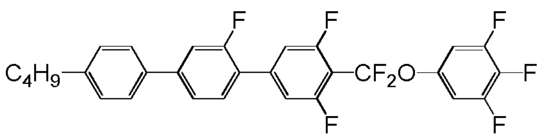 | | 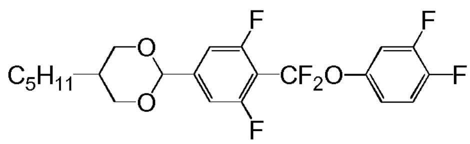 | |

**Comparative Example 1**

Example 33 was selected from the compositions disclosed in JP H10-81679 A. The basis thereof is that the composition contains compound (1), compound (3-1), compound (3-4), compound (4) and a compound similar to compound (2), and contains no cyano compound. Components and characteristics of the composition were as described below.

| | | |
|---|---|---|
| 3-GB(F)EB(F)-F | (1) | 5% |
| 3-GB(F,F)BB(F,F)-F | (-) | 5% |
| 7-HB(F)-F | (4) | 5% |
| 5-H2B(F)-F | (4) | 5% |
| 3-HB-O2 | (3-1) | 10% |
| 3-HH-4 | (-) | 5% |
| 2-HHB(F)-F | (4) | 10% |
| 3-HHB(F)-F | (4) | 10% |
| 3-H2HB(F)-F | (4) | 5% |
| 2-HBB(F)-F | (4) | 3% |
| 3-HBB(F)-F | (4) | 3% |

(continued)

| | | |
|---|---|---|
| 5-HBB(F)-F | (4) | 6% |
| 2-H2BB(F)-F | (4) | 5% |
| 3-H2BB(F)-F | (4) | 6% |
| 3-HHB-1 | (3-4) | 8% |
| 3-HHB-O1 | (3-4) | 5% |
| 3-HHB-3 | (3-4) | 4% |
| NI = 86.5°C; Δn = 0.099; Δε = 5.3; Vth = 2.18 V; η = 23.5 mPa · s. | | |

**Example 1**

The compound similar to compound (2) contained in the composition in Comparative Example 1 was replaced by compound (2) to provide the composition of the invention. Components and characteristics of the composition were as described below.

| | | |
|---|---|---|
| 3-GB(F)EB(F)-F | (1) | 5 % |
| 3-GB(F,F)BB(F,F)-F | (-) | 5 % |
| 7-HB(F)-F | (4) | 5 % |
| 5-H2B(F)-F | (4) | 5 % |
| 3-HB-O2 | (3-1) | 10% |
| 3-HH-V | (2) | 5 % |
| 2-HHB(F)-F | (4) | 10% |
| 3-HHB(F)-F | (4) | 10% |
| 3-H2HB(F)-F | (4) | 5% |
| 2-HBB(F)-F | (4) | 3% |
| 3-HBB(F)-F | (4) | 3% |
| 5-HBB(F)-F | (4) | 6% |
| 2-H2BB(F)-F | (4) | 5% |
| 3-H2BB(F)-F | (4) | 6% |
| 3-HHB-1 | (3-4) | 8% |
| 3-HHB-O1 | (3-4) | 5% |
| 3-HHB-3 | (3-4) | 4% |
| NI = 85.7°C; Δn = 0.099; Δε = 5.2; Vth = 2.17 V; η = 22.4 mPa·s . | | |

**Example 2**

| | | |
|---|---|---|
| 3-GB(F)B(F)-F | (1-3) | 8% |
| 3-GB(F)B(F)B(F)-F | (1-7) | 3% |
| 3-HH-V | (2) | 22% |
| F3-HH-V1 | (2) | 18% |

(continued)

| | | |
|---|---|---|
| V-HHB-1 | (3-4) | 10% |
| V2-HHB-1 | (3-4) | 8% |
| 2-BB(F)B-3 | (3-6) | 6% |
| 1-BB(F)B-2V | (3-6) | 4% |
| 2-BB(F)B-2V | (3-6) | 5% |
| 3-BB(F)B-2V | (3-6) | 5% |
| 3-HHXB(F,F)-F | (4-4) | 2% |
| 3-BB(2F,3F)XB(F,F)-F | (4-21) | 9% |
| NI = 86.7°C; $T_c$ < -20°C; $\Delta n$ = 0.121; $\Delta\varepsilon$ = 2.7; Vth = 2.76 V; $\eta$ = 13.5 mPa·s; $\gamma 1$ = 75.8 mPa·s; $\varepsilon\perp/\Delta\varepsilon$ = 1.33. | | |

**Example 3**

| | | |
|---|---|---|
| 3-GHB(F)-F | (1-1) | 3% |
| 3-HGB(F)-F | (1-2) | 4% |
| 3-GB(F,F)B(F)-CF3 | (1-3) | 4% |
| 2-GB(F,F)XB(F)-F | (1-4) | 3% |
| 3-GB(F,F)XB(F)-F | (1-4) | 3% |
| 3-HH-V | (2) | 20% |
| 3-HH-V1 | (2) | 8% |
| F3-HH-V1 | (2) | 7% |
| 3-HHB-O1 | (3-4) | 7% |
| 3-HHB-1 | (3-4) | 8% |
| VFF-HHB-1 | (3-4) | 3 % |
| VFF2-HHB-1 | (3-4) | 3% |
| 3-HBB-2 | (3-5) | 6% |
| 3-BBXB(F,F)-F | (4-11) | 3% |
| 2-dhBB(F,F)XB(F,F)-F | (4-17) | 5 % |
| 3-dhBB(F,F)XB(F,F)-F | (4-17) | 4 % |
| 3-GB(F,F)XB(F,F)-F | (-) | 5% |
| 3-GB(F)B(F,F)XB(F,F)-F | (-) | 4% |
| NI = 86.5°C; $T_c$ < -20°C; $\Delta n$ = 0.094; $\Delta\varepsilon$ = 8.0; Vth = 1.53 V; $\eta$ = 16.5 mPa·s; $\gamma 1$ = 92.4 mPa·s. | | |

**Example 4**

| | | |
|---|---|---|
| 3-GBB-F | (1-3) | 5% |
| 3-GB(F)B(F)B(F)-F | (1-7) | 5% |

(continued)

| | | |
|---|---|---|
| 3-GHXBB(F)-F | (1-11) | 2% |
| 3-HH-V | (2) | 23% |
| F3-HH-V1 | (2) | 10% |
| 7-HB-1 | (3-1) | 4% |
| 1-BB-3 | (3-2) | 5% |
| V-HHB-1 | (3-4) | 5% |
| 1V-HBB-2 | (3-5) | 8% |
| 5-B(F)BB-2 | (3-7) | 5% |
| 2-HHB(F,F)-F | (4-2) | 4% |
| 3-HHEB(F,F)-F | (4-3) | 3% |
| 3-BB(F,F)XB(F,F)-F | (4-12) | 5% |
| 3-BB(2F,3F)-O2 | (5-4) | 5% |
| 101-HBBH-5 | (-) | 3% |
| 2-HGB(F,F)-F | (-) | 3% |
| 3-HGB(F,F)-F | (-) | 5% |
| NI = 81.2°C; $T_c$ < -20°C; $\Delta n$ = 0.114; $\Delta\varepsilon$ = 2.9; Vth = 2.72 V; $\eta$ = 13.3 mPa·s; $\gamma 1$ = 75.1 mPa·s; $\varepsilon\perp/\Delta\varepsilon$ = 1.20. | | |

**Example 5**

| | | |
|---|---|---|
| 3-HGB(F)-F | (1-2) | 5 % |
| 3-GB(F,F)B(F)-CF3 | (1-3) | 5% |
| 3-HGB(F,F)B(F)-OCF3 | (-) | 4% |
| 3-GBB(2F,3F)XB(F)-F | (1-10) | 3% |
| 3-HH-V | (2) | 30% |
| 3-HH-V1 | (2) | 5% |
| 5-HB-O2 | (3-1) | 3 % |
| 3-HHEH-3 | (3-3) | 5% |
| 3-HHEH-5 | (3-3) | 5% |
| V2-BB(F)B-1 | (3-6) | 6% |
| 5-B(F)BB-3 | (3-7) | 6% |
| 5-HB(F)BH-3 | (3-11) | 6% |
| 5-HB(F)B(F,F)-F | (4-7) | 3 % |
| 5-HBEB(F,F)-F | (4-8) | 3% |
| 3-HBB(F,F)XB(F,F)-F | (4-16) | 6% |
| 5-BB(F)B(F,F)XB(F)B(F,F)-F | (4-20) | 2% |
| 3-GBB(F)B(F,F)-F | (-) | 3% |
| NI = 101.9°C; $T_c$ < -20°C; $\Delta n$ = 0.116; $\Delta\varepsilon$ = 5.4; Vth = 1.83 V; $\eta$ = 22.6 mPa·s. | | |

**Example 6**

| | | |
|---|---|---|
| 3-GB(F,F)B(F)-OCF3 | (-) | 10% |
| 4-GB(F,F)XB(F)B-F | (1-12) | 5% |
| 3-HH-V | (2) | 23% |
| F3-HH-V1 | (2) | 7% |
| 1-BB-3 | (3-2) | 6% |
| VFF-HHB-1 | (3-4) | 6% |
| 1V-HBB-2 | (3-5) | 5% |
| 3-HB(F)HH-2 | (3-8) | 5% |
| 3-HHEBH-4 | (3-9) | 5% |
| 3-HHEBH-5 | (3-9) | 6% |
| 3-HBB(F,F)-F | (4-6) | 6% |
| 3-HHB(F)B(F,F)-F | (4-14) | 5% |
| 4-BB(F)B(F,F)XB(F,F)-F | (4-18) | 3% |
| 3-GHB(F,F)-F | (-) | 5% |
| 5-GHB(F,F)-F | (-) | 3% |
| NI = 102.9°C; $T_c$ < -20°C; $\Delta n$ = 0.107; $\Delta\varepsilon$ = 6.1; Vth = 1.78 V; $\eta$ = 22.7 mPa·s. | | |

**Example 7**

| | | |
|---|---|---|
| 3-GB(F,F)B(F)-F | (1-3) | 5 % |
| 3-GB(F)B(F)B(F)-F | (1-7) | 5 % |
| 3-GB(F)B(F)XB(F)-F | (1-10) | 5 % |
| 3-HH-V | (2) | 20% |
| F3-HH-V | (2) | 15% |
| V2-BB-1 | (3-2) | 6 % |
| 1V2-BB-1 | (3-2) | 7 % |
| 1V-HBB-2 | (3-5) | 4 % |
| 3-HBB-2 | (3-5) | 5 % |
| 3-HHEBH-5 | (3-9) | 5% |
| 5-HBBH-3 | (3-10) | 5% |
| 5-HHEB(F,F)-F | (4-3) | 8% |
| 4-HHB(F)B(F,F)-F | (4-14) | 3% |
| 3-HGB(F,F)-F | (-) | 3% |
| 3-GB(F,F)XB(F,F)-F | (-) | 4% |
| NI = 93.5°C; $T_c$ < -20°C; $\Delta n$ = 0.108; $\Delta\varepsilon$ = 5.4; Vth = 1.88 V; $\eta$ = 14.8 mPa·s; $\gamma 1$ = 82.9 mPa·s; $\varepsilon\pm/\Delta\varepsilon$ = 0.68. | | |

**Example 8**

| | | |
|---|---|---|
| 3-GHB(F)-F | (1-1) | 3% |
| 5-GB(F)B(F)-F | (1-3) | 5% |
| 3-HGB(F,F)XB(F)-OCF3 | (-) | 3% |
| 4-GB(F)B(F,F)XB(F)-F | (1-10) | 3% |
| 2-GB(F,F)XB(F,F)B(F)-F | (1-12) | 3% |
| 3-HH-V | (2) | 25% |
| F3-HH-V1 | (2) | 6% |
| 3-HHB-O1 | (3-4) | 3% |
| 3-HHB-1 | (3-4) | 8% |
| V-HHB-1 | (3-4) | 10% |
| 2-BB(F)B-3 | (3-6) | 3% |
| 2-BB(F)B-5 | (3-6) | 3% |
| 3-BB(F)B-5 | (3-6) | 3% |
| 5-HXB(F,F)-F | (4-1) | 3% |
| 1-HHB(F,F)-F | (4-2) | 3% |
| 3-BB(F)B(F,F)-F | (4-9) | 5 % |
| 3-BBXB(F,F)-F | (4-11) | 4% |
| 2-HH-3 | (-) | 3% |
| 3-HH-O1 | (-) | 4% |
| NI = 82.3°C; $T_c$ < -20°C; $\Delta n$ = 0.099; $\Delta\varepsilon$ = 4.3; Vth = 1.96 V; $\eta$ = 12.3 mPa·s; $\gamma 1$ = 68.9 mPa·s. | | |

**Example 9**

| | | |
|---|---|---|
| 3-GHB(F,F)B(F)-CL | (1-5) | 3% |
| 3-HGB(F,F)B(F)-OCF3 | (-) | 3% |
| 2-GB(F,F)XB(F)B(F)-F | (1-12) | 3% |
| 3-GB(F,F)XB(F)B(F)-F | (1-12) | 3% |
| 3-HH-V | (2) | 22% |
| 3-HH-V1 | (2) | 7% |
| F3-HH-V | (2) | 5% |
| 7-HB-1 | (3-1) | 4 % |
| V2-BB-1 | (3-2) | 4% |
| 3-HHB-3 | (3-4) | 8% |
| 1-BB(F)B-2V | (3-6) | 4% |
| 2-BB(F)B-2V | (3-6) | 5% |
| 3-BB(F)B-2V | (3-6) | 6% |

(continued)

| | | |
|---|---|---|
| 5-HBB(F)B-2 | (3-12) | 3% |
| 3-HHB(F,F)-F | (4-2) | 5% |
| 3-HHBB(F,F)-F | (4-13) | 3% |
| 5-BB(F)B(F,F)XB(F,F)-F | (4-18) | 7% |
| 5-GB(F)B(F,F)-F | (-) | 5% |
| NI = 92.5°C; $T_c$ < -20°C; Δn = 0.127; Δε = 5.7; Vth = 1.83 V; η = 15.8 mPa·s; γ1 = 88.5 mPa·s; ε⊥/Δε = 0.63. | | |

**Example 10**

| | | |
|---|---|---|
| 3-GB(F)B(F)-F | (1-3) | 6% |
| 3-GB(F,F)XB(F)-F | (1-4) | 8% |
| 3-HH-V | (2) | 23% |
| F3-HH-V1 | (2) | 10% |
| V-HHB-1 | (3-4) | 9% |
| V2-HHB-1 | (3-4) | 8% |
| V2-BB(F)B-1 | (3-6) | 6% |
| 5-B(F)BB-2 | (3-7) | 3% |
| 5-B(F)BB-3 | (3-7) | 3% |
| 5-HBB(F)B-3 | (3-12) | 4% |
| 3-HHEB(F,F)-F | (4-3) | 4% |
| 2-HBB(F,F)-F | (4-6) | 4% |
| 5-HHBB(F,F)-F | (4-13) | 3% |
| 2-HBB(F,F)XB(F,F)-F | (4-16) | 3% |
| 4-GHB(F,F)-F | (-) | 3% |
| 5-HGB(F,F)-F | (-) | 3% |
| NI = 92.3C; $T_c$ < -20C; Δn = 0.115; Δε = 4.0; Vth = 2.28 V; η = 16.4 mPa·s; γ1 = 91.8 mPa·s. | | |

**Example 11**

| | | |
|---|---|---|
| 3-HGB(F)-F | (1-2) | 4 % |
| 3-GB(F,F)XB(F)-F | (1-4) | 6 % |
| 3-GBB(2F,3F) XB (F)-F | (1-10) | 3% |
| 3-HH-V | (2) | 20% |
| F3-HH-V | (2) | 8% |
| F3-HH-V1 | (2) | 5% |
| 5-HB-O2 | (3-1) | 3% |

(continued)

| | | |
|---|---|---|
| 1V2-BB-1 | (3-2) | 5% |
| 3-HHEH-5 | (3-3) | 3% |
| 4-HHEH-5 | (3-3) | 5% |
| 3-HB(F)HH-2 | (3-8) | 3% |
| 3-HHEBH-3 | (3-9) | 4% |
| 3-HHEBH-4 | (3-9) | 3% |
| 5-HHB(F,F)-F | (4-2) | 6% |
| 3-HBEB(F,F)-F | (4-8) | 4% |
| 4-HBEB(F,F)-F | (4-8) | 4% |
| V-HHB(2F,3F)-O2 | (5-6) | 5% |
| 3-HBB(2F,3F)-O2 | (5-13) | 5% |
| 3-GHB(F,F)-F | (-) | 4% |
| NI = 97.6°C; $T_c$ < -20°C; $\Delta n$ = 0.089; $\Delta\varepsilon$ = 2.9; Vth = 2.73 V; $\eta$ = 19.2 mPa·s. | | |

**Example 12**

| | | |
|---|---|---|
| 2-GB(F,F)XB(F)-F | (1-4) | 5% |
| 3-GB(F,F)XB(F)-F | (1-4) | 7% |
| 3-HH-V | (2) | 21% |
| 3-HH-V1 | (2) | 10% |
| F3-HH-V1 | (2) | 9% |
| 3-HB-O2 | (3-1) | 5 % |
| 4-HHEH-3 | (3-3) | 5% |
| 3-HHB-1 | (3-4) | 6% |
| V-HHB-1 | (3-4) | 10% |
| 5-HB(F)BH-3 | (3-11) | 5% |
| 3-BB(F)B(F,F)-CF3 | (4-10) | 3% |
| 3-HBBXB (F,F)-F | (4-15) | 4% |
| 3-B(2F,3F)BXB(F,F)-F | (4-22) | 3% |
| 3-HB(2F,3F)BXB(F,F)-F | (4-23) | 4% |
| 3-GBB(F)B(F,F)-F | (-) | 3% |
| NI = 88.6°C; $T_c$ < -20°C; $\Delta n$ = 0.095; $\Delta\varepsilon$ = 4.4; Vth = 1.95 V; $\eta$ = 11.4 mPa·s; $\gamma 1$ = 63.8 mPa·s. | | |

**Example 13**

| | | |
|---|---|---|
| 3-GHB(F,F)XB(F)-F | (1-8) | 5% |

(continued)

| | | |
|---|---|---|
| 5-GHB(F,F)XB(F)-F | (1-8) | 4% |
| 3-HGB(F,F)XB(F)-F | (1-9) | 3% |
| 3-GHXB (F)B(F)-F | (1-11) | 3% |
| 3-HH-V | (2) | 22% |
| F3-HH-V | (2) | 7% |
| 7-HB-1 | (3-1) | 5% |
| 1-BB-3 | (3-2) | 5% |
| 3-HHEH-3 | (3-3) | 5% |
| 3-HHB-1 | (3-4) | 7% |
| 3-HHB-3 | (3-4) | 6% |
| V2-HHB-1 | (3-4) | 5% |
| 5-B(F)BB-2 | (3-7) | 5% |
| 1-HHXB(F,F)-F | (4-4) | 4% |
| 3-BB(F)B(F,F)XB(F,F)-F | (4-18) | 5% |
| 4-BB (F)B(F,F)XB(F,F)-F | (4-18) | 4% |
| 3-GB(F,F)XB(F,F)-F | (-) | 5% |
| NI = 85.1°C; $T_c$ < -20°C; $\Delta n$ = 0.099; $\Delta\varepsilon$ = 6.7; Vth = 1.70 V; $\eta$ = 16.5 mPa·s. | | |

**Example 14**

| | | |
|---|---|---|
| 3-GHB(F)-OCF3 | (-) | 7% |
| 3-GB(F,F)XB(F)B(F)-F | (1-12) | 2% |
| 2-GB(F,F)XB(F)B(F)-OCF3 | (-) | 7% |
| 3-HH-V | (2) | 27% |
| 3-HH-V1 | (2) | 10% |
| 3-HB-O2 | (3-1) | 4% |
| 2-BB(F)B-3 | (3-6) | 3% |
| 2-BB(F)B-5 | (3-6) | 4% |
| 3-BB(F)B-5 | (3-6) | 3% |
| 5-B(F)BB-3 | (3-7) | 3% |
| 5-HBB(F)B-2 | (3-12) | 6% |
| 3-HHXB(F,F)-CF3 | (4-5) | 3% |
| 3-HB(F)B(F,F)-F | (4-7) | 7% |
| 5-HBB(F,F)XB(F,F)-F | (4-16) | 4% |
| 3-BB(F,F)XB(F)B(F,F)-F | (4-19) | 3% |
| 3-BB(2F,3F)BXB(F,F)-F | (4-24) | 4% |

(continued)

| | | |
|---|---|---|
| 5-GHB(F,F)-F | (-) | 3% |
| NI = 78.9°C; $T_c$ < -20°C; Δn = 0.119; Δε = 6.9; Vth = 1.68 V; η = 17.5 mPa·s. | | |

**Example 15**

| | | |
|---|---|---|
| 3-GB(F)B(F)-F | (1-3) | 5% |
| 3-GB(F)B(F)B(F)-F | (1-7) | 3% |
| 4-GB(F)B(F)B(F)-F | (1-7) | 3% |
| 5-GB(F)B(F)B(F)-F | (1-7) | 2% |
| 3-HH-V | (2) | 34% |
| V-HHB-1 | (3-4) | 10% |
| V2-HHB-1 | (3-4) | 9% |
| 1-BB(F)B-2V | (3-6) | 4% |
| 2-BB(F)B-2V | (3-6) | 5% |
| 3-BB(F)B-2V | (3-6) | 6% |
| 3-BB(F,F)XB(F,F)-F | (4-12) | 2% |
| 3-BB(2F,3F)XB(F,F)-F | (4-21) | 8% |
| 3-GB(F)B(F,F)-F | (-) | 4% |
| 3-GB(F,F)XB(F,F)-F | (-) | 5% |
| NI = 85.6°C; $T_c$ < -20°C; Δn = 0.121; Δε = 5.7; Vth = 1.85 V; η = 13.2 mPa·s; γ1 = 73.9 mPa·s; ε⊥/Δε = 0.65. | | |

The viscosity (η) of the composition in Comparative Example 1 was 23.5. On the other hand, the viscosity of the composition in Example 1 was 22.4. Thus, the composition containing compound (2) in the Example had a smaller viscosity in comparison with the composition in the Comparative Example. Accordingly, the liquid crystal composition according to the invention is concluded to have superb characteristics.

**Industrial Applicability**

A liquid crystal composition of the invention satisfies at least one of characteristics such as a high maximum temperature, a low minimum temperature, a small viscosity, a suitable optical anisotropy, a large dielectric anisotropy, a large specific resistance, a large elastic constant, a high stability to ultraviolet light, a high stability to heat, a large elastic constant or the like, or has a suitable balance regarding at least two of the characteristics. A liquid crystal display device including the composition has characteristics such as a short response time, a large voltage holding ratio, a large contrast ratio, a long service life and so forth, and thus can be used for a liquid crystal projector, a liquid crystal television and so forth.

**Claims**

1. A liquid crystal composition that has a nematic phase, and contains at least one compound selected from the group of compounds represented by formula (1) as a first component, and at least one compound selected from the group of compounds represented by formula (2) as a second component:

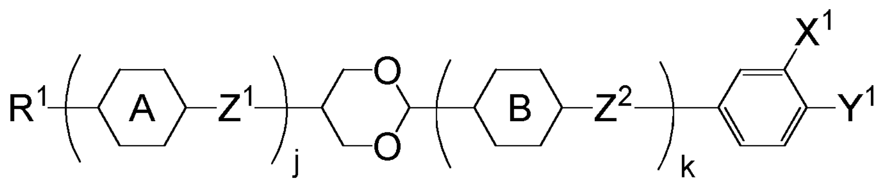

(1)

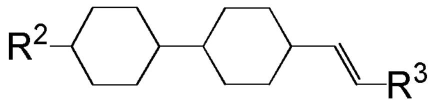

(2)

wherein, in formula (1) and formula (2), $R^1$ is alkyl having 1 to 12 carbons, alkoxy having 1 to 12 carbons or alkenyl having 2 to 12 carbons; $R^2$ is alkyl having 1 to 3 carbons, or alkyl having 1 to 12 carbons in which at least one of hydrogen is replaced by halogen; $R^3$ is hydrogen or alkyl having 1 to 5 carbons; ring A and ring B are independently 1,4-cyclohexylene, 1,4-phenylene, 2-fluoro-1,4-phenylene, 2,3-difluoro-1,4-phenylene, 2,6-difluoro-1,4-phenylene, pyrimidine-2,5-diyl, 1,3-dioxane-2, 5-diyl or tetrahydropyran-2, 5-diyl; $Z^1$ and $Z^2$ are independently a single bond, ethylene, vinylene, methyleneoxy, carbonyloxy or difluoromethyleneoxy; $X^1$ is hydrogen or fluorine; $Y^1$ is fluorine, chlorine, alkyl having 1 to 12 carbons in which at least one of hydrogen is replaced by halogen, or alkenyloxy having 2 to 12 carbons in which at least one of hydrogen is replaced by halogen; j and k are independently 0, 1, 2, or 3; and a sum of j and k is 4 or less.

2. The liquid crystal composition according to claim 1, containing at least one compound selected from the group of compounds represented by formulas (1-1) to (1-12) as the first component:

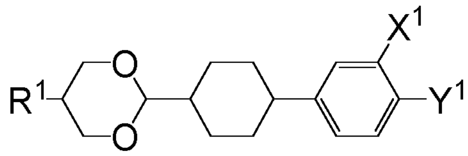

(1-1)

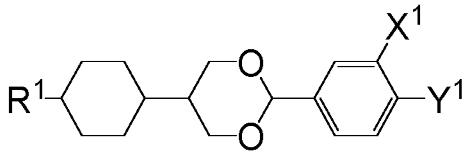

(1-2)

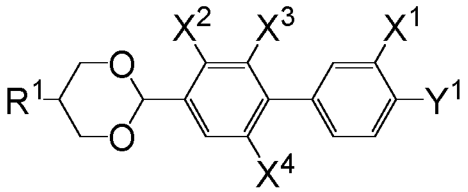

(1-3)

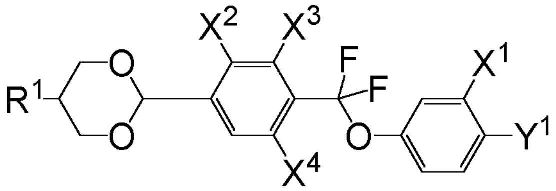

(1-4)

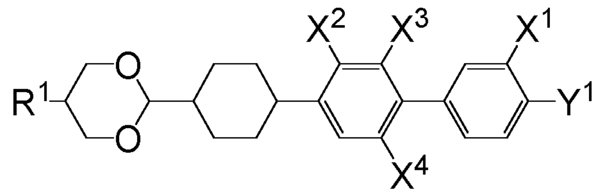

(1-5)

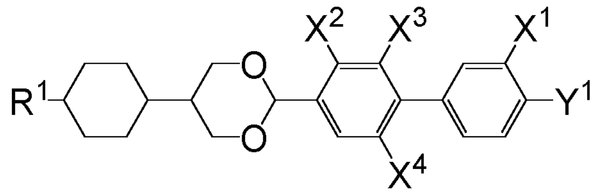

(1-6)

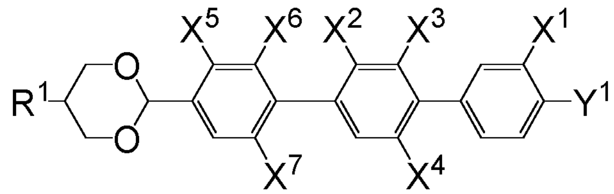

(1-7)

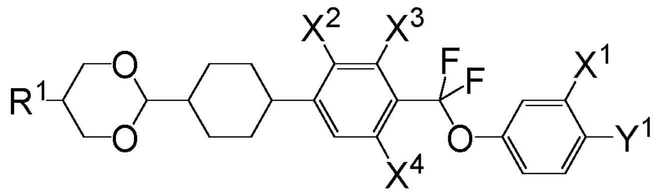

(1-8)

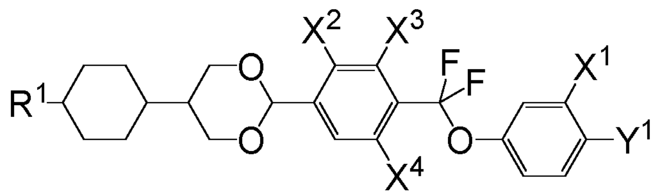

(1-9)

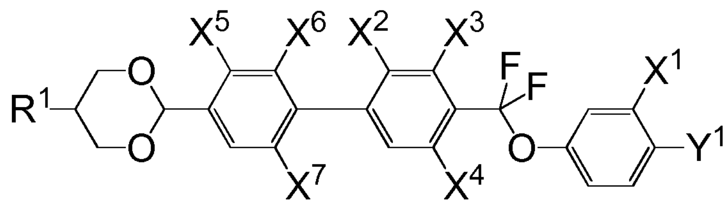

(1-10)

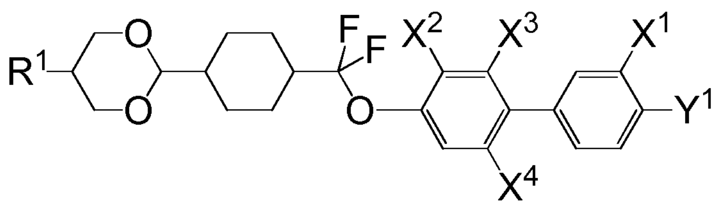

(1-11)

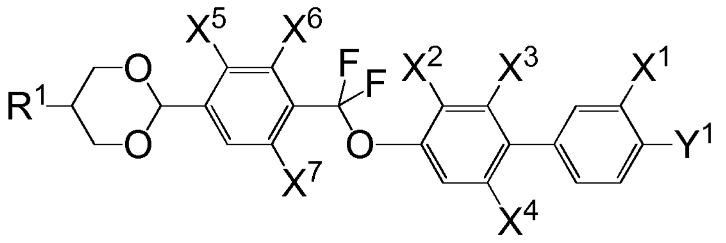

(1-12)

wherein, in formula (1-1) to formula (1-12), $R^1$ is alkyl having 1 to 12 carbons, alkoxy having 1 to 12 carbons or alkenyl having 2 to 12 carbons; $X^1$, $X^2$, $X^3$, $X^4$, $X^5$, $X^6$ and $X^7$ are independently hydrogen or fluorine; and $Y^1$ is fluorine, chlorine, alkyl having 1 to 12 carbons in which at least one of hydrogen is replaced by halogen, or alkenyloxy having 2 to 12 carbons in which at least one of hydrogen is replaced by halogen.

**3.** The liquid crystal composition according to claim 1 or 2, wherein a proportion of the first component is in the range of 5% by weight to 40% by weight, and a proportion of the second component is in the range of 10% by weight to 60% by weight, based on the weight of the liquid crystal composition.

**4.** The liquid crystal composition according to any one of claims 1 to 3, containing at least one compound selected from the group of compounds represented by formula (3) as a third component:

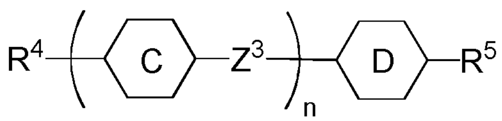

(3)

wherein, in formula (3), $R^4$ and $R^5$ are independently alkyl having 1 to 12 carbons, alkoxy having 1 to 12 carbons, alkenyl having 2 to 12 carbons, alkyl having 1 to 12 carbons in which at least one of hydrogen is replaced by halogen, or alkenyl having 2 to 12 carbons in which at least one of hydrogen is replaced by fluorine; ring C and ring D are independently 1,4-cyclohexylene, 1,4-phenylene, 2-fluoro-1,4-phenylene or 2,5-difluoro-1,4-phenylene; $Z^3$ is a single bond, ethylene or carbonyloxy; and n is 1, 2 or 3; wherein, when n is 1, ring D is 1,4-phenylene.

**5.** The liquid crystal composition according to any one of claims 1 to 4, containing at least one compound selected from the group of compounds represented by formulas (3-1) to (3-12) as the third component:

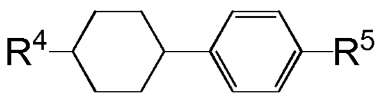

(3-1)

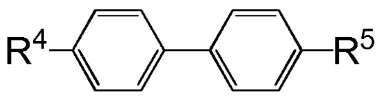

(3-2)

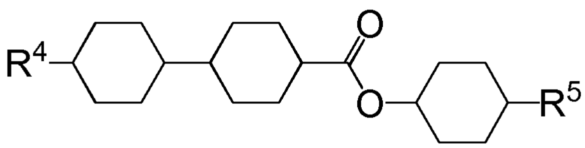

(3-3)

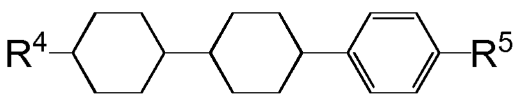

(3-4)

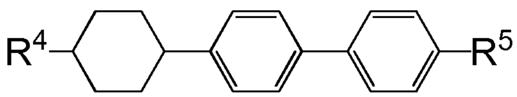

(3-5)

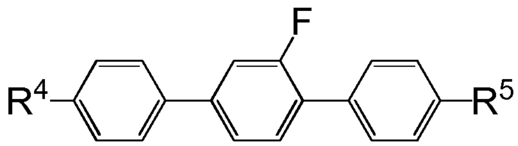

(3-6)

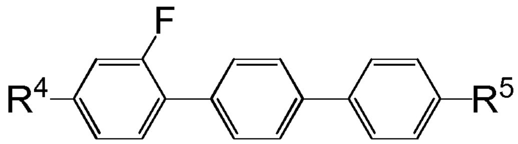

(3-7)

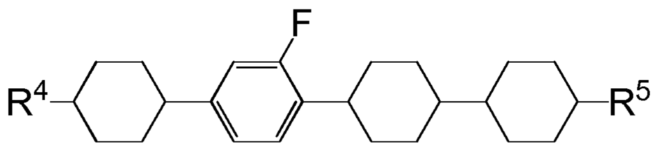

(3-8)

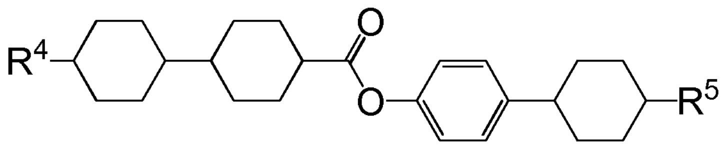

(3-9)

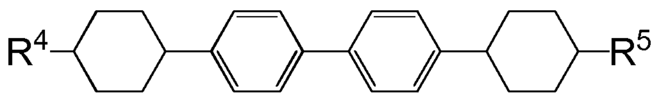

(3-10)

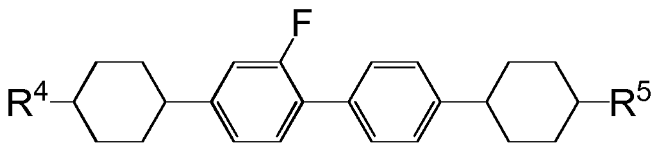

(3-11)

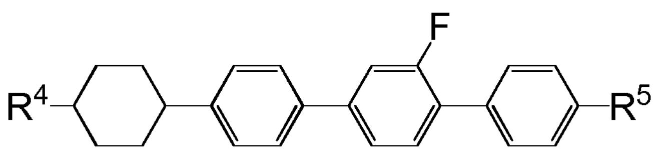

(3-12)

wherein, in formula (3-1) to formula (3-12), $R^4$ and $R^5$ are independently alkyl having 1 to 12 carbons, alkoxy having 1 to 12 carbons, alkenyl having 2 to 12 carbons, or alkenyl having 2 to 12 carbons in which at least one of hydrogen is replaced by fluorine.

**6.** The liquid crystal composition according to claim 4 or 5, wherein a proportion of the third component is in the range of 5% by weight to 55% by weight based on the weight of the liquid crystal composition.

**7.** The liquid crystal composition according to any one of claims 1 to 6, further containing at least one compound selected from the group of compounds represented by formula (4) as a fourth component:

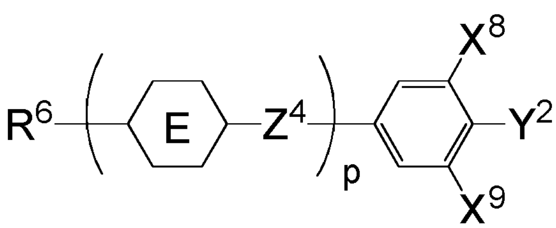

(4)

wherein, in formula (4), $R^6$ is alkyl having 1 to 12 carbons, alkoxy having 1 to 12 carbons or alkenyl having 2 to 12 carbons; ring E is 1,4-cyclohexylene, 1,4-phenylene, 2-fluoro-1,4-phenylene, 2,3-difluoro-1,4-phenylene, 2,6-difluoro-1,4-phenylene, pyrimidine-2, 5-diyl or tetrahydropyran-2, 5-diyl; $Z^4$ is a single bond, ethylene, carbonyloxy or difluoromethyleneoxy; $X^8$ and $X^9$ are independently hydrogen or fluorine; $Y^2$ is fluorine, chlorine, alkyl having 1 to 12 carbons in which at least one of hydrogen is replaced by halogen, alkoxy having 1 to 12 carbons in which at least one of hydrogen is replaced by halogen, or alkenyloxy having 2 to 12 carbons in which at least one of hydrogen is replaced by halogen; and p is 1, 2, 3 or 4.

**8.** The liquid crystal composition according to any one of claims 1 to 7, containing at least one compound selected from the group of compounds represented by formulas (4-1) to (4-24) as the fourth component:

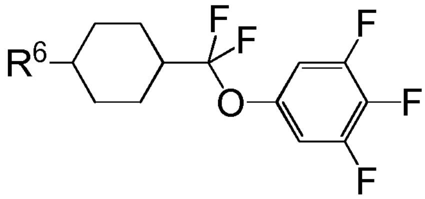

(4-1)

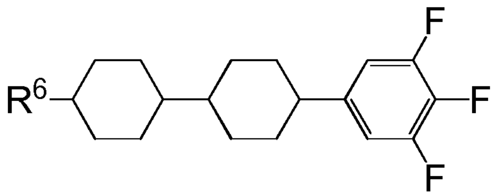

(4-2)

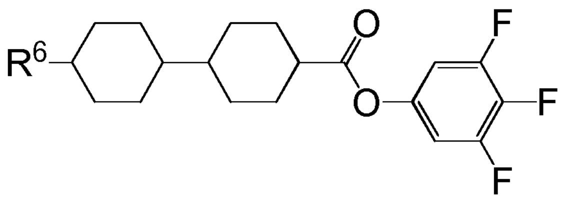

(4-3)

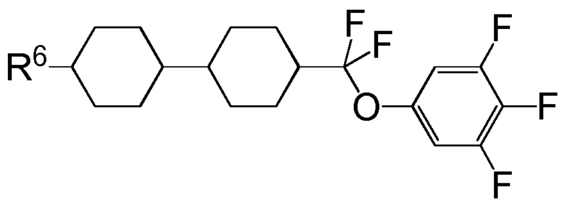

(4-4)

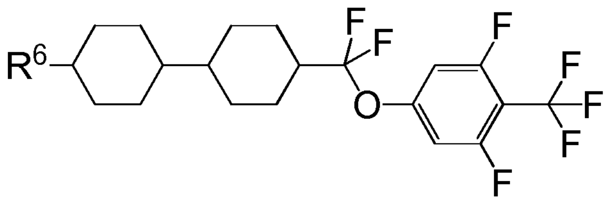

(4-5)

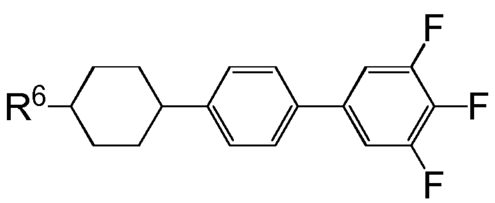

(4-6)

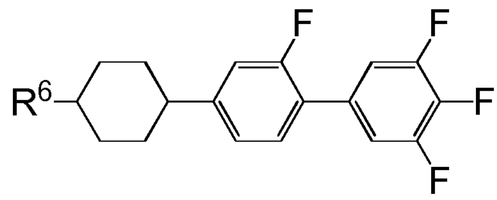

(4-7)

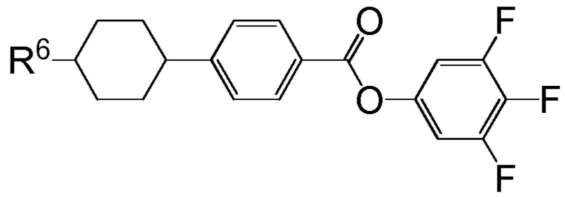

(4-8)

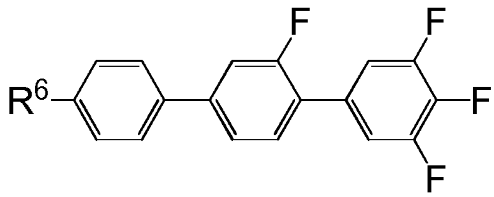

(4-9)

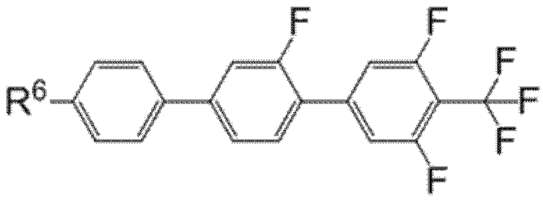

(4-10)

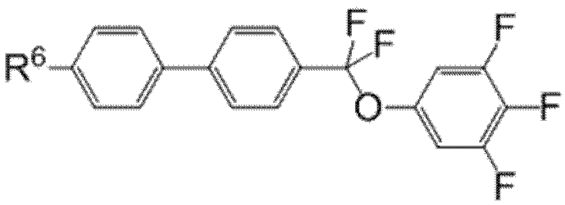

(4-11)

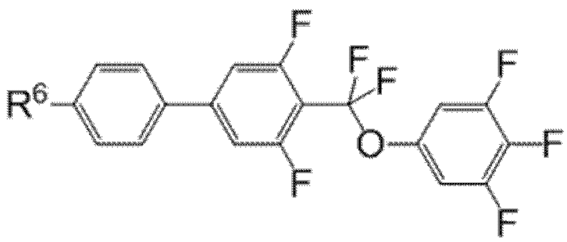

(4-12)

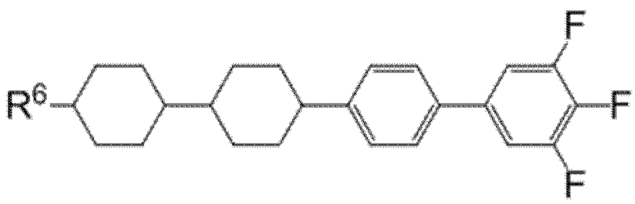

(4-13)

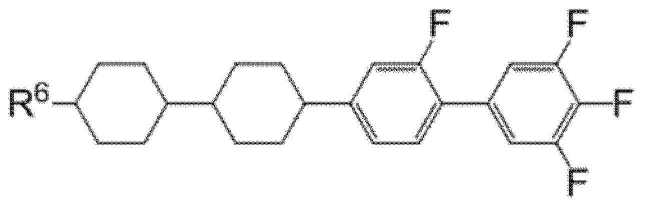

(4-14)

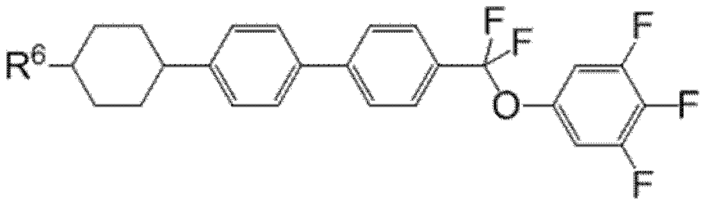

(4-15)

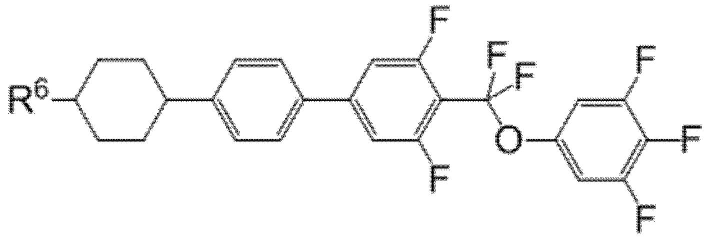

(4-16)

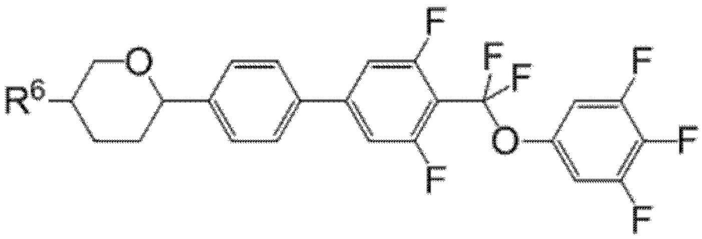

(4-17)

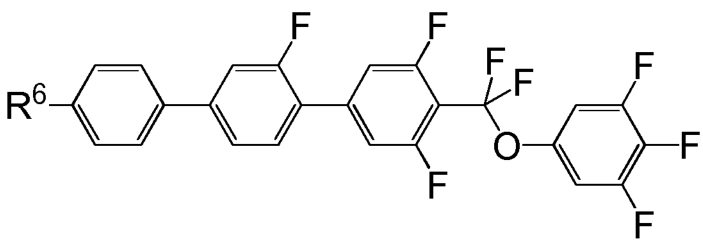

(4-18)

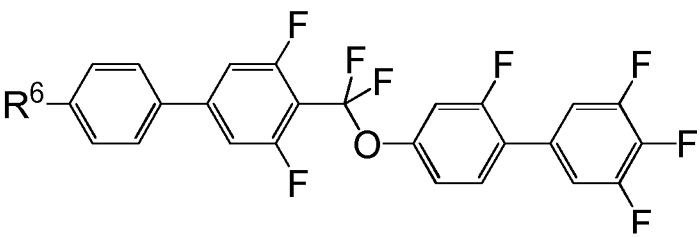

(4-19)

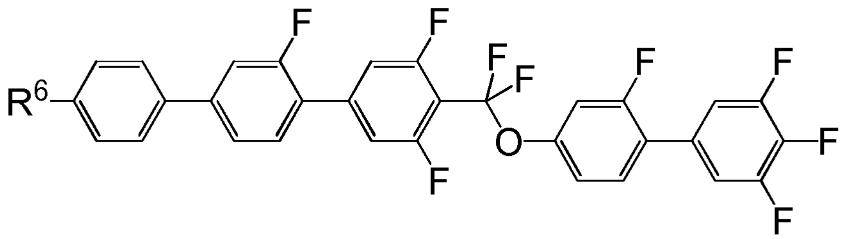

(4-20)

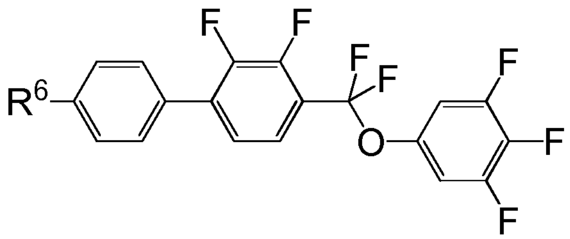

(4-21)

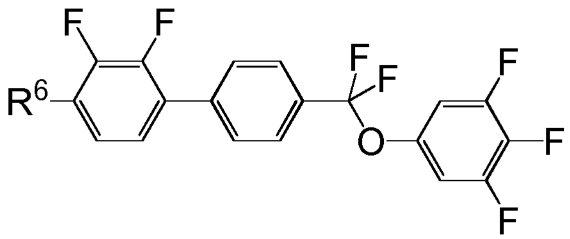

(4-22)

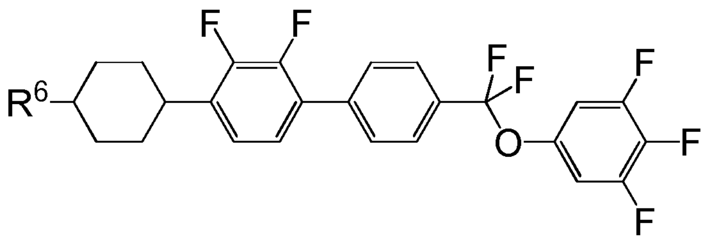

(4-23)

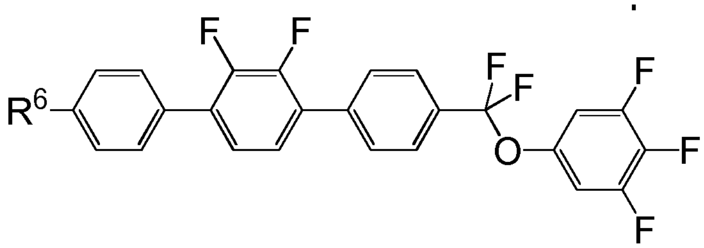

(4-24)

wherein, in formula (4-1) to formula (4-24), $R^6$ is alkyl having 1 to 12 carbons, alkoxy having 1 to 12 carbons or alkenyl having 2 to 12 carbons.

**9.** The liquid crystal composition according to claim 7 or 8, wherein a proportion of the fourth component is in the range of 5% by weight to 35% by weight based on the weight of the liquid crystal composition.

**10.** The liquid crystal composition according to any one of claims 1 to 9, containing at least one compound selected from the group of compounds represented by formula (5) as a fifth component:

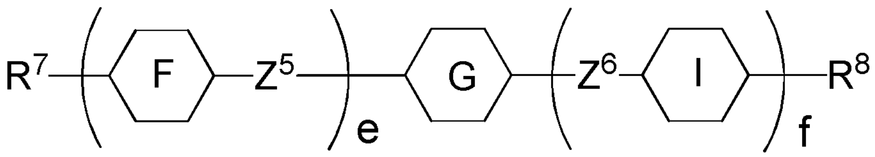
(5)

wherein, in formula (5), $R^7$ and $R^8$ are independently alkyl having 1 to 12 carbons, alkoxy having 1 to 12 carbons, alkenyl having 2 to 12 carbons, alkenyloxy having 2 to 12 carbons or alkyl having 1 to 12 carbons in which at least one of hydrogen is replaced by halogen; ring F and ring I are independently 1,4-cyclohexylene, 1, 4-cyclohexenylene, 1,4-phenylene, 1,4-phenylene in which at least one of hydrogen is replaced by fluorine or chlorine, or tetrahydropyran-2,5-diyl; ring G is 2,3-difluoro-1,4-phenylene, 2-chloro-3-fluoro-1,4-phenylene, 2,3-difluoro-5-methyl-1,4-phenylene, 3,4,5-trifluoronaphthalene-2,6-diyl or 7,8-difluorochroman-2,6-diyl; $Z^5$ and $Z^6$ are independently a single bond, ethylene, carbonyloxy or methyleneoxy; e is 1, 2 or 3, and f is 0 or 1; and the sum of e and f is 3 or less.

**11.** The liquid crystal composition according to any one of claims 1 to 10, containing at least one compound selected from the group of compounds represented by formulas (5-1) to (5-19) as the fifth component:

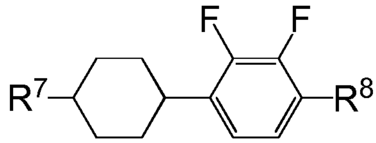
(5-1)

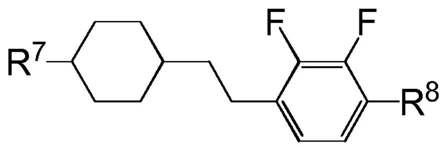
(5-2)

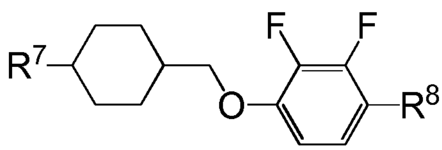
(5-3)

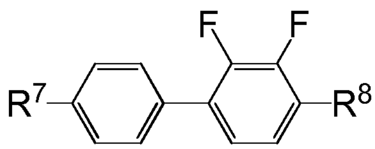
(5-4)

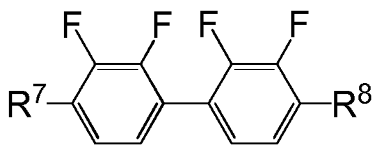
(5-5)

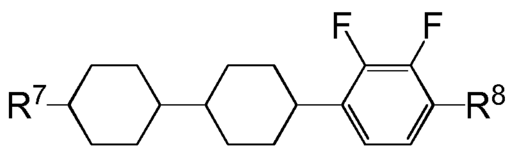
(5-6)

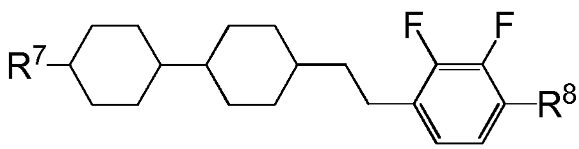
(5-7)

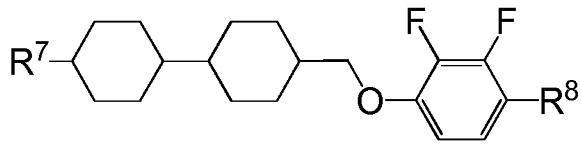

(5-8)

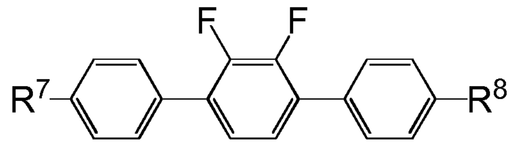

(5-9)

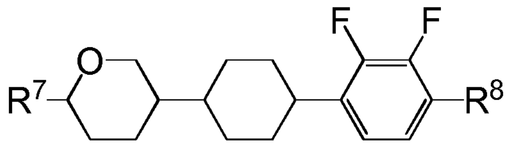

(5-10)

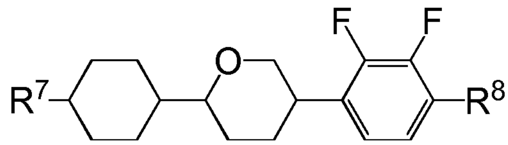

(5-11)

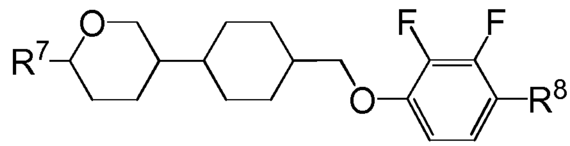

(5-12)

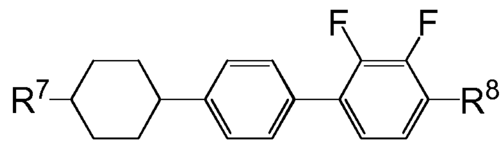

(5-13)

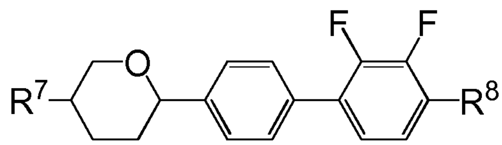

(5-14)

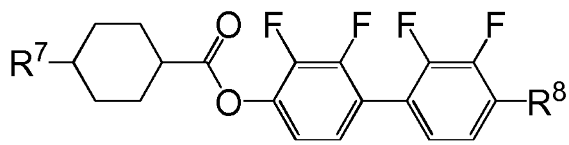

(5-15)

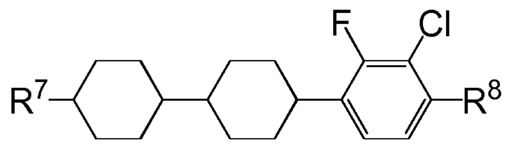

(5-16)

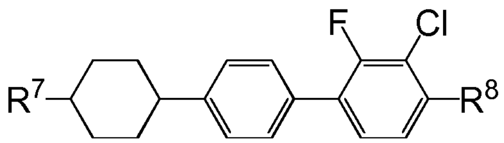

(5-17)

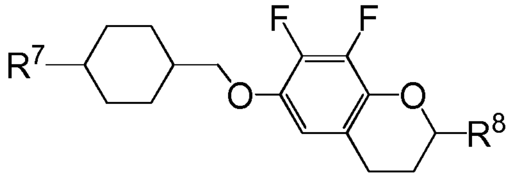

(5-18)

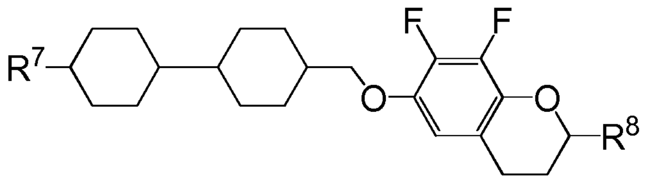

(5-19)

wherein, in formula (5-1) to formula (5-19), $R^7$ and $R^8$ are independently alkyl having 1 to 12 carbons, alkoxy having 1 to 12 carbons, alkenyl having 2 to 12 carbons, alkenyloxy having 2 to 12 carbons or alkyl having 1 to 12 carbons in which at least one of hydrogen is replaced by halogen.

**12.** The liquid crystal composition according to claim 10 or 11, wherein a proportion of the fifth component is in the range of 3% by weight to 25% by weight based on the weight of the liquid crystal composition.

**13.** The liquid crystal composition according to any one of claims 1 to 12, wherein a maximum temperature of a nematic phase is 70°C or higher, an optical anisotropy (measured at 25°C) at a wavelength of 589 nanometers is 0.07 or more and a dielectric anisotropy (measured at 25°C) at a frequency of 1 kHz is 2 or more.

**14.** The liquid crystal display device, including the liquid crystal composition according to any one of claims 1 to 13.

**15.** The liquid crystal display device according to claim 14, wherein an operating mode in the liquid crystal display device is a TN mode, an ECB mode, an OCB mode, an IPS mode, an FFS mode or an FPA mode, and a driving mode in the liquid crystal display device is an active matrix mode.

**Patentansprüche**

**1.** Flüssigkristallzusammensetzung, die eine nematische Phase aufweist und die mindestens eine Verbindung, die aus der Gruppe der Verbindungen ausgewählt worden ist, die durch die Formel (1) dargestellt werden, als eine erste Komponente, und mindestens eine Verbindung, die aus der Gruppe der Verbindungen ausgewählt worden ist, die durch die Formel (2) dargestellt werden, als eine zweite Komponente enthält:

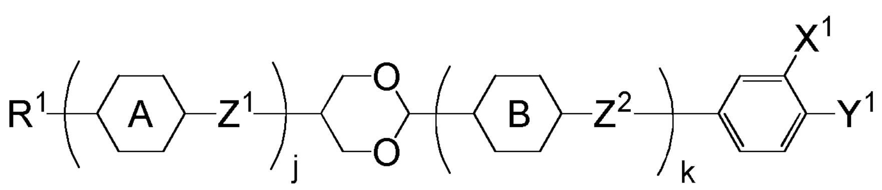

(1)

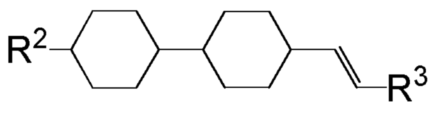

(2)

wobei in der Formel (1) und der Formel (2) das $R^1$ ein Alkyl, das 1 bis 12 Kohlenstoffatome aufweist, ein Alkoxy,

das 1 bis 12 Kohlenstoffatome aufweist, oder ein Alkenyl ist, das 2 bis 12 Kohlenstoffatome aufweist; wobei das $R^2$ ein Alkyl, das 1 bis 3 Kohlenstoffatome aufweist, oder ein Alkyl ist, das 1 bis 12 Kohlenstoffatome aufweist, bei dem mindestens einer von dem Wasserstoff durch ein Halogen ersetzt worden ist; wobei das $R^3$ ein Wasserstoff oder ein Alkyl ist, das 1 bis 5 Kohlenstoffatome aufweist; wobei der Ring A und der Ring B unabhängig voneinander ein 1,4-Cyclohexylen, ein 1,4-Phenylen, ein 2-Fluor-1,4-Phenylen, ein 2,3-Difluor-1,4-Phenylen, ein 2,6-Difluor-1,4-Phenylen, ein Pyrimidin-2,5-Diyl, ein 1,3-Dioxan-2,5-Diyl oder ein Tetrahydropyran-2,5-Diyl sind; wobei das $Z^1$ und das $Z^2$ unabhängig voneinander eine Einfachbindung, ein Ethylen, ein Vinylen, ein Methylenoxy, ein Carbonyloxy oder ein Difluormethylenoxy sind; wobei das $X^1$ ein Wasserstoff oder ein Fluor ist; wobei das $Y^1$ ein Fluor, ein Chlor, ein Alkyl, das 1 bis 12 Kohlenstoffatome aufweist, bei dem mindestens einer von dem Wasserstoff durch ein Halogen ersetzt worden ist, oder ein Alkenyloxy ist, das 2 bis 12 Kohlenstoffatome aufweist, bei dem mindestens einer von dem Wasserstoff durch ein Halogen ersetzt worden ist; wobei das j und das k unabhängig voneinander 0, 1, 2 oder 3 sind; und eine Summe von dem j und dem k 4 oder weniger ist.

**2.** Flüssigkristallzusammensetzung nach Anspruch 1, die mindestens eine Verbindung, die aus der Gruppe der Verbindungen ausgewählt worden ist, die durch die Formeln (1-1) bis (1-12) dargestellt werden, als die erste Komponente enthält:

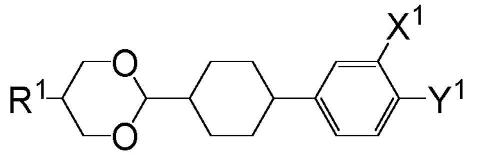

(1-1)

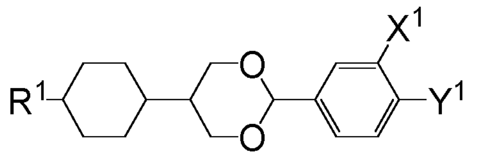

(1-2)

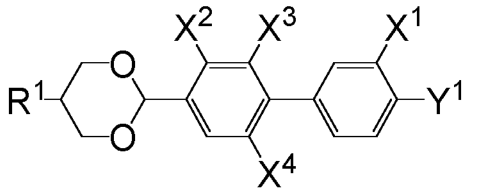

(1-3)

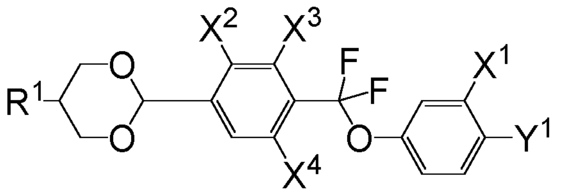

(1-4)

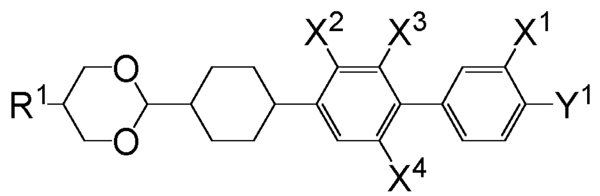

(1-5)

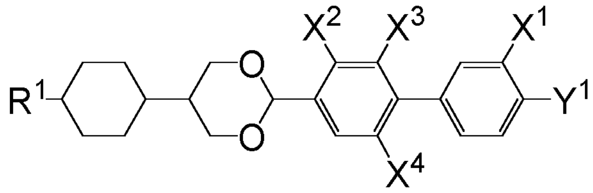

(1-6)

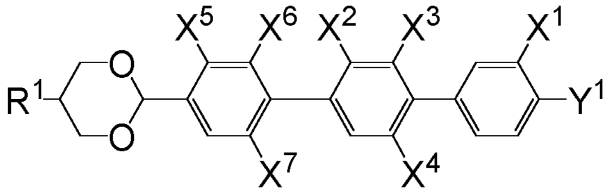

(1-7)

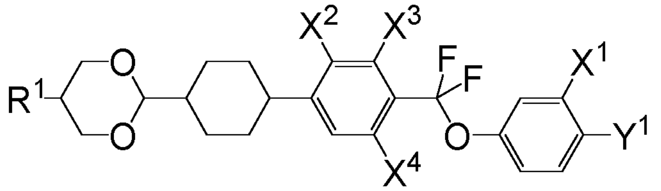

(1-8)

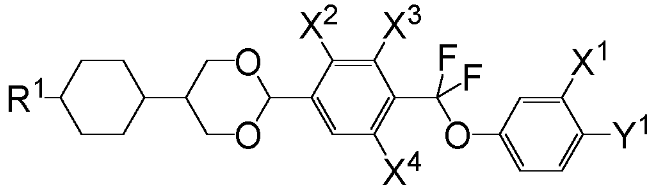

(1-9)

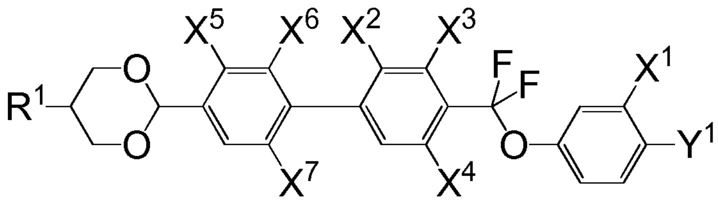

(1-10)

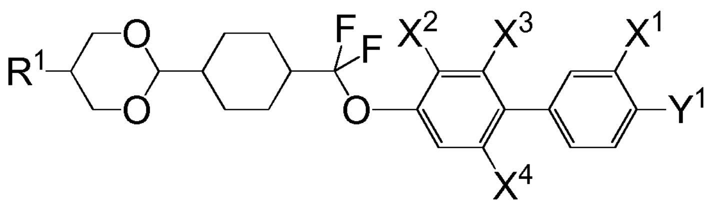

(1-11)

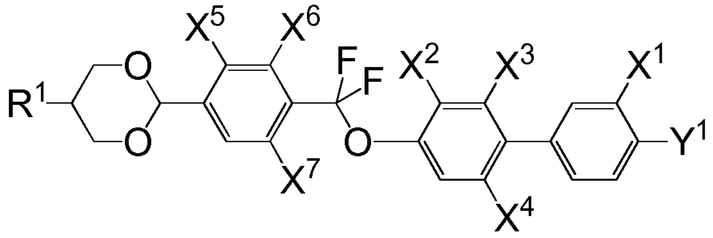

(1-12)

wobei in der Formel (1-1) bis zu der Formel (1-12) das $R^1$ ein Alkyl, das 1 bis 12 Kohlenstoffatome aufweist, ein

Alkoxy, das 1 bis 12 Kohlenstoffatome aufweist, oder ein Alkenyl ist, das 2 bis 12 Kohlenstoffatome aufweist; wobei das $X^1$, das $X^2$, das $X^3$, das $X^4$, das $X^5$, das $X^6$ und das $X^7$ unabhängig voneinander ein Wasserstoff oder ein Fluor sind; und wobei das $Y^1$ ein Fluor, ein Chlor, ein Alkyl, das 1 bis 12 Kohlenstoffatome aufweist, bei dem mindestens einer von dem Wasserstoff durch ein Halogen ersetzt worden ist, ein Alkoxy, das 1 bis 12 Kohlenstoffatome aufweist, bei dem mindestens einer von dem Wasserstoff durch ein Halogen ersetzt worden ist, oder ein Alkenyloxy ist, das 2 bis 12 Kohlenstoffatome aufweist, bei dem mindestens einer von dem Wasserstoff durch ein Halogen ersetzt worden ist.

**3.** Flüssigkristallzusammensetzung nach Anspruch 1 oder 2, wobei bezogen auf das Gewicht der Flüssigkristallzusammensetzung ein Anteil der ersten Komponente in einem Bereich von 5 Gewichtsprozent bis 40 Gewichtsprozent liegt und ein Anteil der zweiten Komponente in einem Bereich von 10 Gewichtsprozent bis 60 Gewichtsprozent liegt.

**4.** Flüssigkristallzusammensetzung nach einem der Ansprüche 1 bis 3, die mindestens eine Verbindung, die aus der Gruppe der Verbindungen ausgewählt worden ist, die durch die Formel (3) dargestellt werden

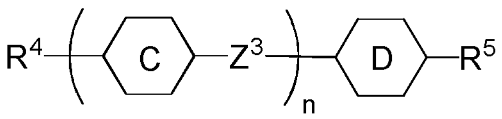 (3)

als eine dritte Komponente enthält, wobei in der Formel (3) das $R^4$ und das $R^5$ unabhängig voneinander ein Alkyl, das 1 bis 12 Kohlenstoffatome aufweist, ein Alkoxy, das 1 bis 12 Kohlenstoffatome aufweist, ein Alkenyl, das 2 bis 12 Kohlenstoffatome aufweist, oder ein Alkyl ist, das 1 bis 12 Kohlenstoffatome aufweist, bei dem mindestens einer von dem Wasserstoff durch ein Halogen worden ersetzt ist, oder Alkenyl ist, das 2 bis 12 Kohlenstoffatome aufweist, bei dem mindestens einer von dem Wasserstoff durch ein Fluor ersetzt worden ist; wobei der Ring C und der Ring D unabhängig voneinander ein 1,4-Cyclohexylen, ein 1,4-Phenylen, ein 2-Fluor-1,4-Phenylen oder ein 2,5-Difluor-1,4-Phenylen sind; wobei das $Z^3$ eine Einfachbindung, ein Ethylen oder ein Carbonyloxy ist; und wobei das n 1, 2 oder 3 ist; wobei, wenn das n 1 ist, der Ring D ein 1,4-Phenylen ist.

**5.** Flüssigkristallzusammensetzung nach einem der Ansprüche 1 bis 4, die mindestens eine Verbindung, die aus der Gruppe der Verbindungen ausgewählt worden ist, die durch die Formeln (3-1) bis (3-12) dargestellt werden, als eine dritte Komponente enthält:

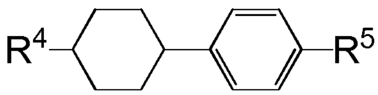 (3-1)

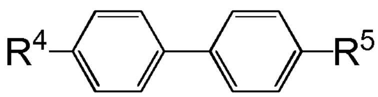 (3-2)

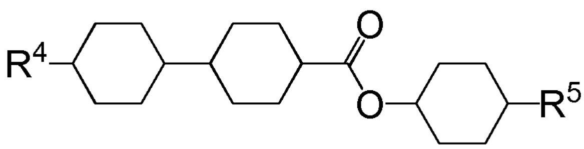 (3-3)

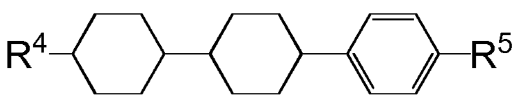 (3-4)

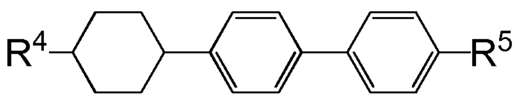 (3-5)

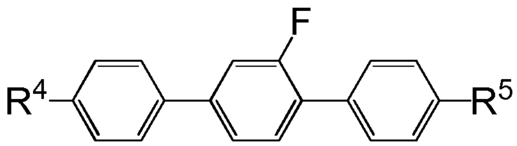

(3-6)

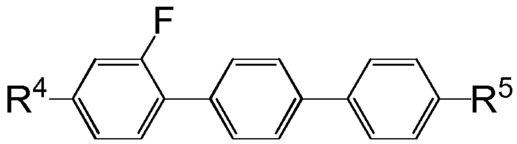

(3-7)

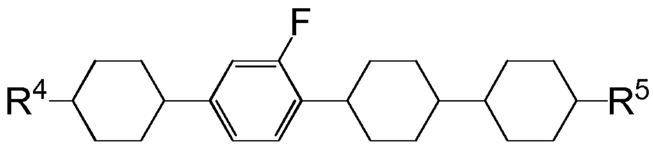

(3-8)

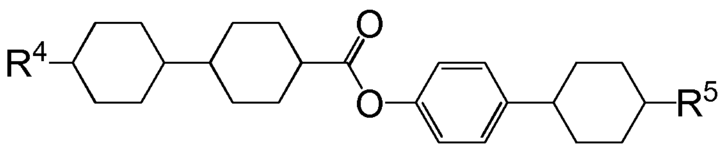

(3-9)

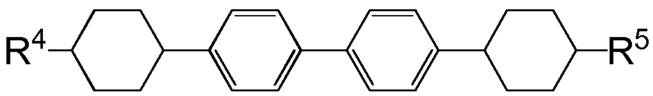

(3-10)

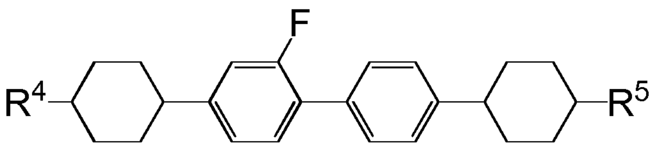

(3-11)

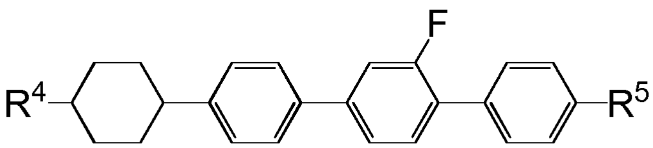

(3-12)

wobei in der Formel (3-1) bis zu der Formel (3-12) das $R^4$ und das $R^5$ unabhängig voneinander ein Alkyl, das 1 bis 12 Kohlenstoffatome aufweist, ein Alkoxy, das 1 bis 12 Kohlenstoffatome aufweist, ein Alkenyl, das 2 bis 12 Kohlenstoffatome aufweist, oder ein Alkenyl sind, das 2 bis 12 Kohlenstoffatome aufweist, bei dem mindestens von dem Wasserstoff durch ein Fluor ersetzt ist.

**6.** Flüssigkristallzusammensetzung nach Anspruch 4 oder 5, wobei bezogen auf das Gewicht der Flüssigkristallzusammensetzung ein Anteil der dritten Komponente in einem Bereich von 5 Gewichtsprozent bis 55 Gewichtsprozent liegt.

**7.** Flüssigkristallzusammensetzung nach einem der Ansprüche 1 bis 6, die ferner mindestens eine Verbindung, die aus der Gruppe von Verbindungen ausgewählt worden ist, die durch die Formel (4) dargestellt werden, als eine vierte Komponente enthält:

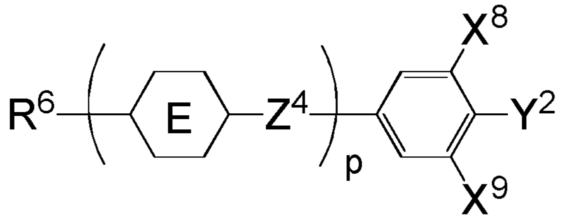

(4)

wobei in der Formel (4) das $R^6$ ein Alkyl, das 1 bis 12 Kohlenstoffatome aufweist, ein Alkoxy, das 1 bis 12 Kohlenstoffatome aufweist, oder ein Alkenyl ist, das 2 bis 12 Kohlenstoffatome aufweist; wobei der Ring E ein 1,4-Cyclohexylen, ein 1,4-Phenylen, ein 2-Fluor-1,4-Phenylen, ein 2,3-Difluor-1,4-Phenylen, ein 2,6-Difluor-1,4-Phenylen, ein Pyrimidin-2,5-Diyl oder ein Tetrahydropyran-2,5-diyl ist; wobei das $Z^4$ eine Einfachbindung, ein Ethylen, ein Carbonyloxy oder ein Difluormethylenoxy ist; wobei das $X^8$ und das $X^9$ unabhängig voneinander ein Wasserstoff oder ein Fluor sind; wobei das $Y^2$ ein Fluor, ein Chlor, ein Alkyl, das 1 bis 12 Kohlenstoffatome aufweist, bei dem mindestens einer von dem Wasserstoff durch ein Halogen ersetzt worden ist, ein Alkoxy, das 1 bis 12 Kohlenstoffatome aufweist, bei dem mindestens einer von dem Wasserstoff durch ein Halogen ersetzt worden ist, oder ein Alkenyloxy ist, das 2 bis 12 Kohlenstoffatome aufweist, bei dem mindestens einer von dem Wasserstoff durch ein Halogen ersetzt worden ist; und wobei das p 1, 2, 3 oder 4 ist.

**8.** Flüssigkristallzusammensetzung nach einem der Ansprüche 1 bis 7, die mindestens eine Verbindung, die aus der Gruppe der Verbindungen ausgewählt worden ist, die durch die Formeln (4-1) bis (4-24) dargestellt werden, als eine vierte Komponente enthält:

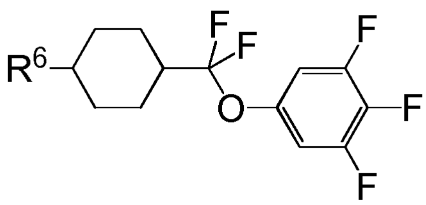

(4-1)

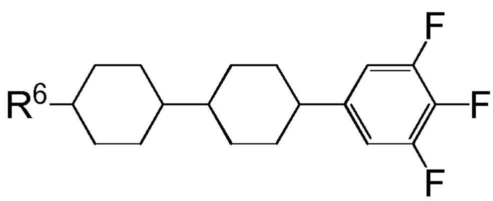

(4-2)

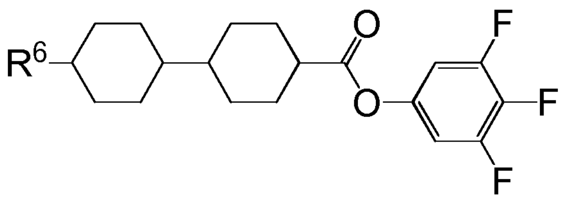

(4-3)

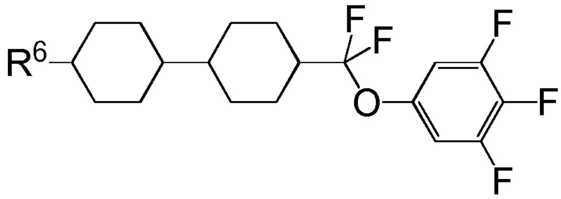

(4-4)

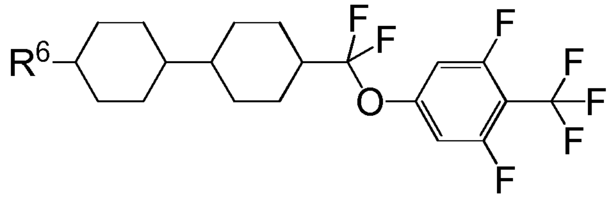

(4-5)

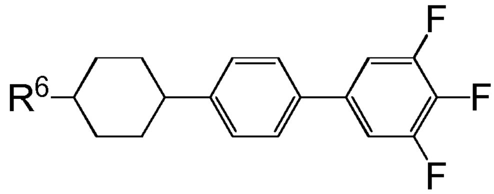

(4-6)

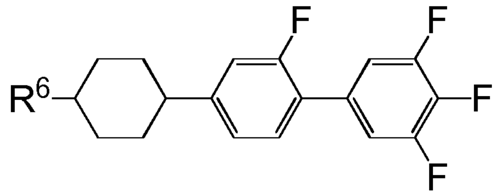

(4-7)

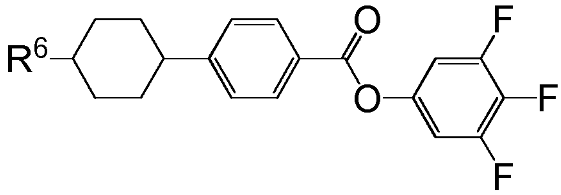

(4-8)

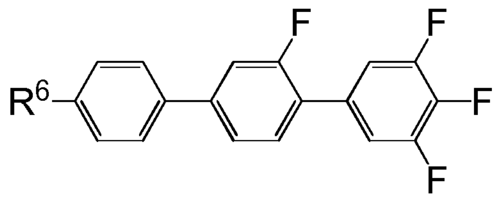

(4-9)

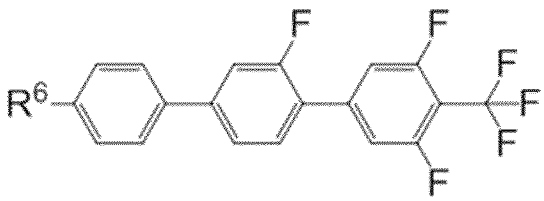

(4-10)

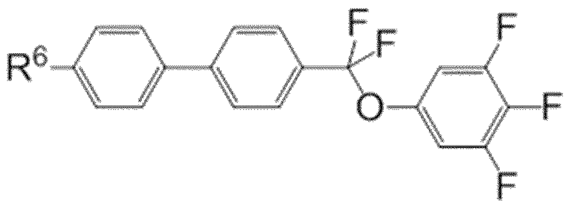

(4-11)

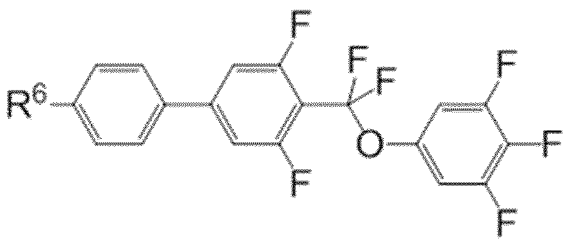

(4-12)

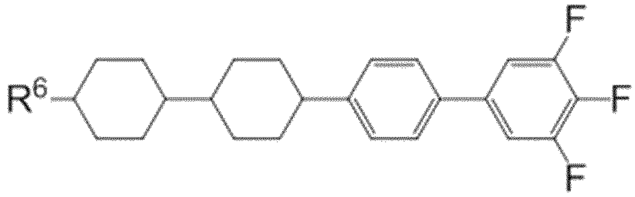

(4-13)

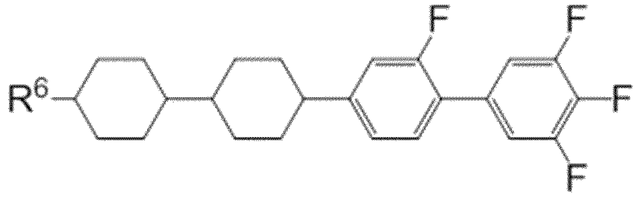

(4-14)

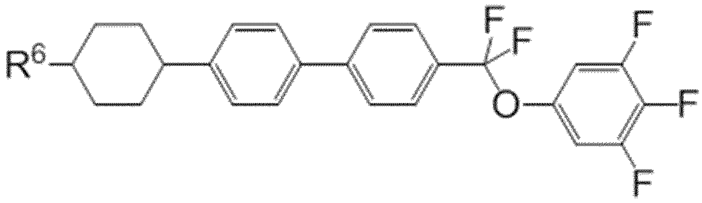

(4-15)

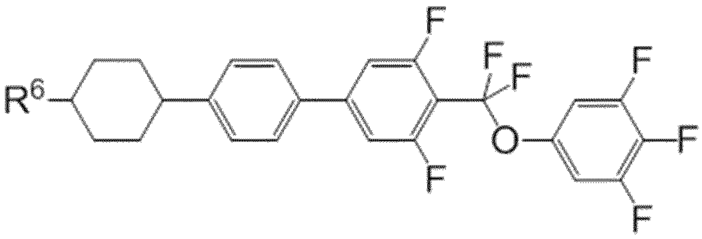

(4-16)

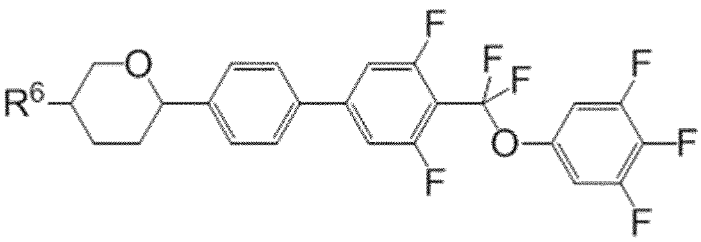

(4-17)

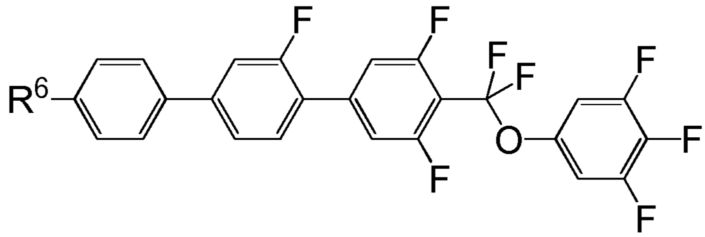

(4-18)

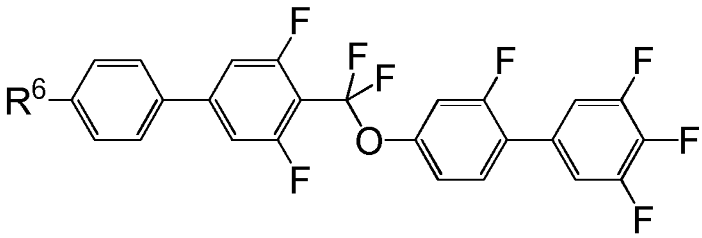

(4-19)

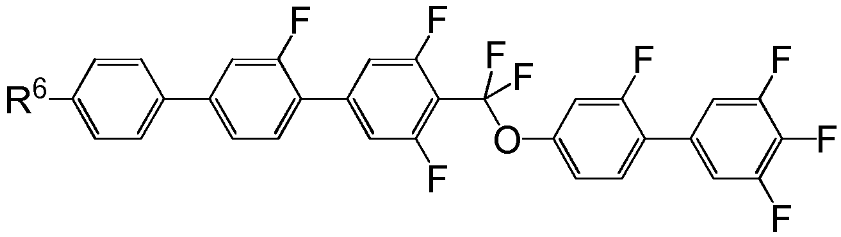

(4-20)

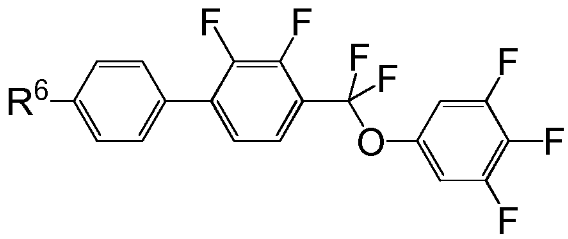

(4-21)

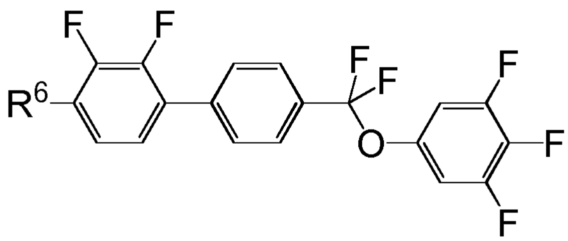

(4-22)

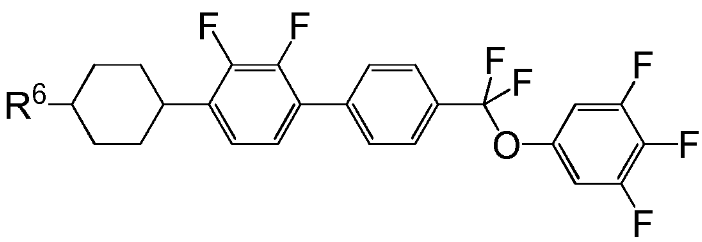

(4-23)

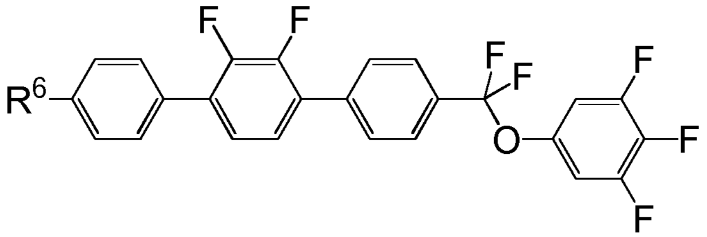

(4-24)

wobei in der Formel (4-1) bis zu der Formel (4-24) das $R^6$ ein Alkyl, das 1 bis 12 Kohlenstoffatome aufweist, ein Alkoxy, das 1 bis 12 Kohlenstoffatome aufweist, oder ein Alkenyl ist, das 2 bis 12 Kohlenstoffatome aufweist.

**9.** Flüssigkristallzusammensetzung nach Anspruch 7 oder 8, wobei bezogen auf das Gewicht der Flüssigkristallzusammensetzung ein Anteil der vierten Komponente in einem Bereich von 5 Gewichtsprozent bis 35 Gewichtsprozent liegt.

**10.** Flüssigkristallzusammensetzung nach einem der Ansprüche 1 bis 9, die mindestens eine Verbindung, die aus der Gruppe der Verbindungen ausgewählt worden ist, die durch die Formel (5) dargestellt wird, als eine fünfte Komponente enthält:

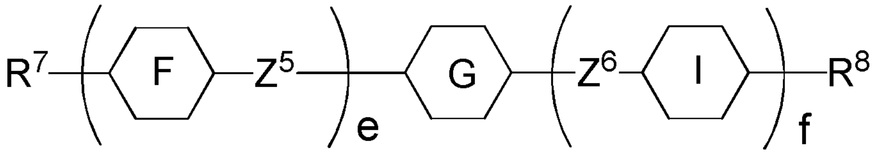

(5)

wobei in der Formel (5) das $R^7$ und das $R^8$ unabhängig voneinander ein Alkyl, das 1 bis 12 Kohlenstoffatome aufweist, ein Alkoxy, das 1 bis 12 Kohlenstoffatome aufweist, ein Alkenyl, das 2 bis 12 Kohlenstoffatome aufweist, ein Alkenyloxy, das 2 bis 12 Kohlenstoffatome aufweist, oder ein Alkyl sind, das 1 bis 12 Kohlenstoffatome aufweist, bei dem mindestens einer von dem Wasserstoffatom durch ein Halogen ersetzt worden ist; wobei der Ring F und der Ring I unabhängig voneinander ein 1,4-Cyclohexylen, ein 1,4-Cyclohexenylen, ein 1,4-Phenylen, ein 1,4-Phenylen, bei dem mindestens einer von dem Wasserstoff durch ein Fluor oder ein Chlor ersetzt worden ist, oder ein Tetrahydropyran-2,5-Diyl sind; wobei der Ring G ein 2,3-Difluor-1,4-Phenylen, ein 2-Chlor-3-fluor-1,4-Phenylen, ein 2,3-Difluor-5-Methyl-1,4-Phenylen, ein 3,4,5-Trifluornaphthalin-2,6-Diyl oder ein 7,8-Difluorchroman-2,6-Diyl ist; wobei das $Z^5$ und das $Z^6$ unabhängig voneinander eine Einfachbindung, ein Ethylen, ein Carbonyloxy oder ein Methylenoxy sind; wobei das e 1, 2 oder 3 ist und das f 0 oder 1 ist; und die Summe von dem e und dem f 3 oder weniger ist.

**11.** Flüssigkristallzusammensetzung nach einem der Ansprüche 1 bis 10, die mindestens eine Verbindung, die aus der Gruppe der Verbindungen ausgewählt worden ist, die durch die Formeln (5-1) bis (5-19) dargestellt werden, als die fünfte Komponente enthält:

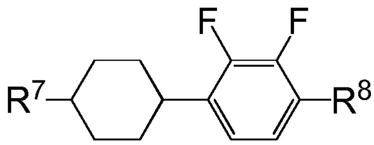

(5-1)

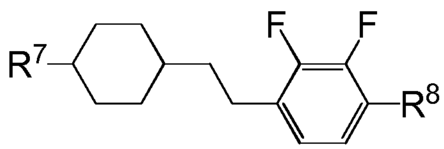

(5-2)

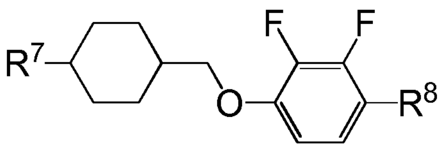

(5-3)

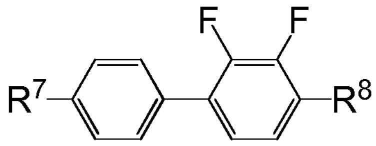

(5-4)

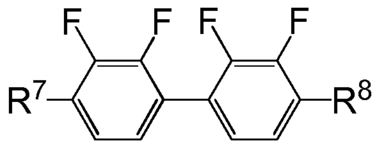

(5-5)

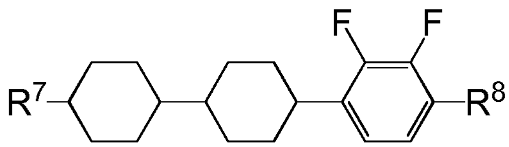

(5-6)

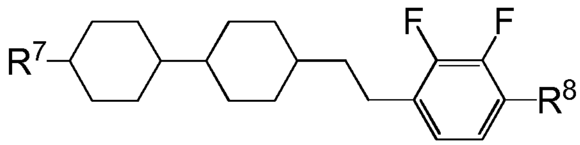

(5-7)

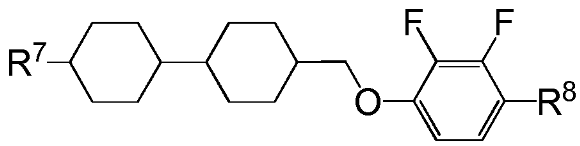

(5-8)

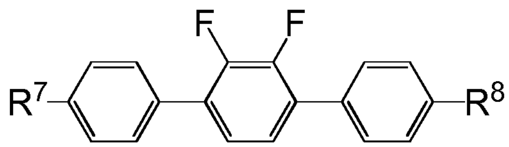

(5-9)

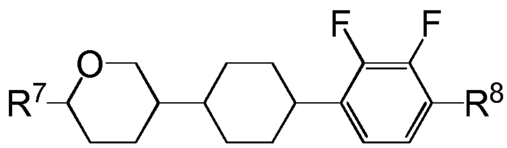

(5-10)

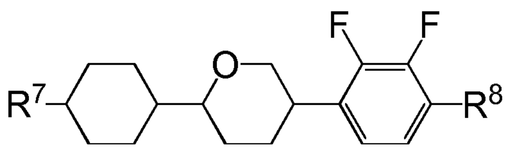

(5-11)

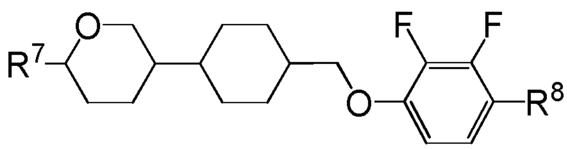

(5-12)

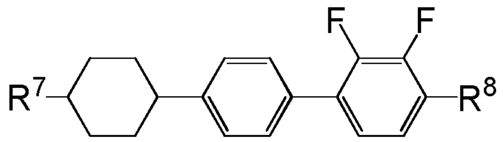

(5-13)

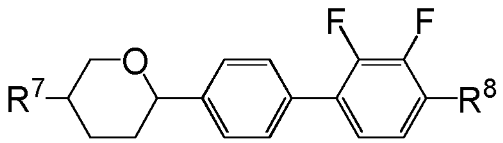

(5-14)

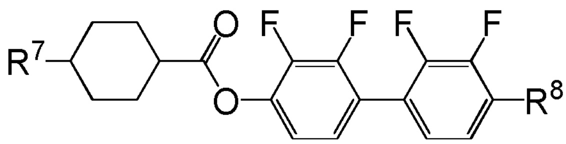

(5-15)

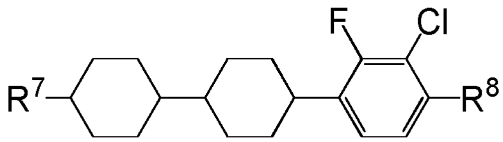

(5-16)

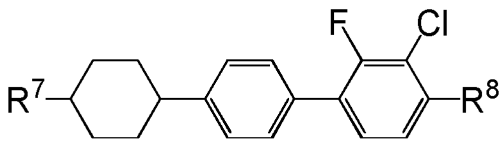

(5-17)

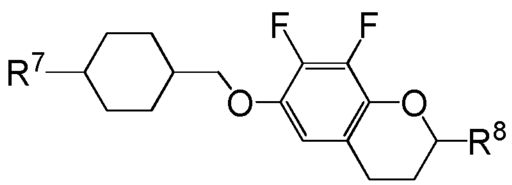

(5-18)

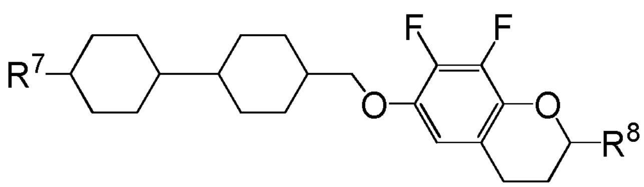

(5-19)

wobei in der Formel (5-1) bis zu der Formel (5-19) das $R^7$ und das $R^8$ unabhängig voneinander ein Alkyl, das 1 bis 12 Kohlenstoffatome aufweist, ein Alkoxy, das 1 bis 12 Kohlenstoffatome aufweist, ein Alkenyl, das 2 bis 12 Kohlenstoffatome aufweist, ein Alkenyloxy, das 2 bis 12 Kohlenstoffatome aufweist, oder ein Alkyl sind, das 1 bis 12 Kohlenstoffatome aufweist, bei dem mindestens einer von dem Wasserstoffatom durch ein Halogen ersetzt worden ist.

**12.** Flüssigkristallzusammensetzung nach Anspruch 10 oder 11, wobei bezogen auf das Gewicht der Flüssigkristallzusammensetzung der Anteil der fünften Komponente in einem Bereich von 3 Gewichtsprozent bis 25 Gewichtsprozent liegt.

**13.** Flüssigkristallzusammensetzung nach einem der Ansprüche 1 bis 12, wobei eine Maximaltemperatur einer nematischen Phase 70 °C oder mehr beträgt, eine optische Anisotropie (gemessen bei 25 °C) bei einer Wellenlänge von 589 Nanometern 0,07 oder mehr beträgt und eine dielektrische Anisotropie (gemessen bei 25 °C) bei einer Frequenz von 1 kHz 2 oder mehr beträgt.

**14.** Flüssigkristallanzeigevorrichtung, welche die Flüssigkristallzusammensetzung nach einem der Ansprüche 1 bis 13 enthält.

**15.** Flüssigkristallanzeigevorrichtung nach Anspruch 14, wobei ein Betriebsmodus in der Flüssigkristallanzeigevorrichtung ein TN-Modus, ein ECB-Modus, ein OCB-Modus, ein IPS-Modus, ein FFS-Modus oder ein FPA-Modus ist und ein Ansteuermodus in der Flüssigkristallanzeigevorrichtung ein Aktivmatrixmodus ist.

**Revendications**

**1.** Composition à base de cristaux liquides ayant une phase nématique et contenant au moins un composé sélectionné dans le groupe de composés représentés par la formule (1) comme premier composant, et au moins un composé sélectionné dans le groupe de composés représentés par la formule (2) comme second composant :

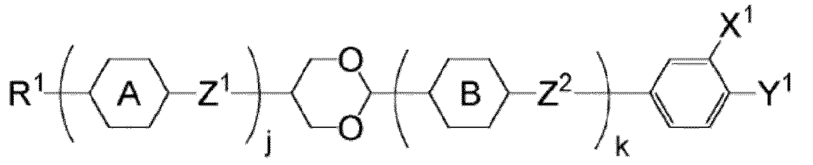

(1)

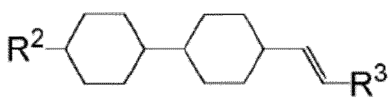

(2)

dans laquelle, dans la formule (1) et la formule (2), $R^1$ est un alkyle ayant de 1 à 12 carbones, un alkoxy ayant de 1 à 12 carbones ou un alkényle ayant de 2 à 12 carbones ; $R^2$ est un alkyle ayant de 1 à 3 carbones, ou un alkyle ayant de 1 à 12 carbones dans lequel au moins un hydrogène est remplacé par un halogène ; $R^3$ est un hydrogène ou un alkyle ayant de 1 à 5 carbones ; l'anneau A et l'anneau B sont de façon indépendante le 1,4-cyclohexylène, le 1,4-phénylène, le 2-fluoro-1,4-phénylène, le 2,3-difluoro-1,4-phénylène, le 2,6-difluoro-1,4-phénylène, la pyrimidine-2,5-diyl, le 1,3-dioxane-2,5-diyl ou tétrahydropyrane-2,5-diyl ; $Z^1$ et $Z^2$ sont de façon indépendante une liaison unique, l'éthylène, le vinylène, le méthyleneoxy, le carbonyloxy ou le difluorométhyleneoxy ; $X^1$ est l'hydrogène ou le fluor ; $Y^1$ est le fluor, le chlore, un alkyle ayant de 1 à 12 carbones dans lequel au moins un hydrogène est remplacé par un halogène, ou un alkényloxy ayant de 2 à 12 carbones dans lequel au moins un hydrogène est remplacé par un halogène ; j et k sont de façon indépendante 0, 1, 2 ou 3 ; et une somme de j et k est 4 ou moins.

**2.** Composition à base de cristaux liquides selon la revendication 1, contenant au moins un composé sélectionné dans le groupe de composés représentés par les formules (1-1) à (1-12) comme premier composant :

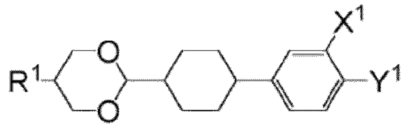

(1-1)

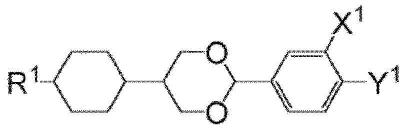

(1-2)

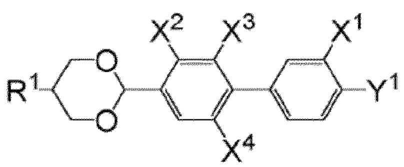

(1-3)

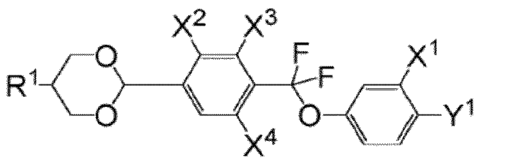
(1-4)

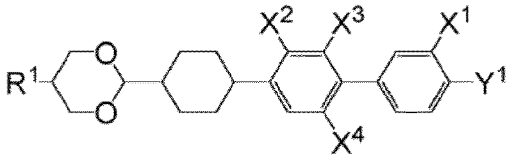
(1-5)

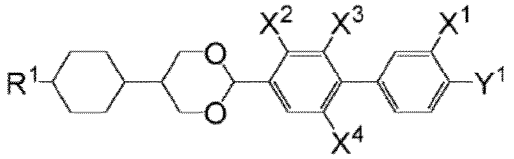
(1-6)

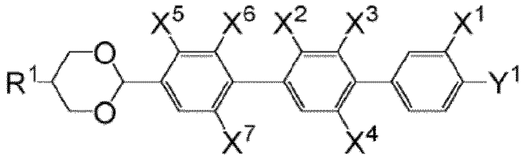
(1-7)

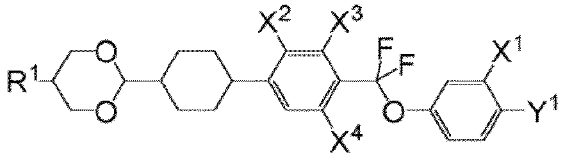
(1-8)

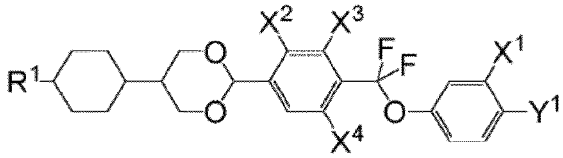
(1-9)

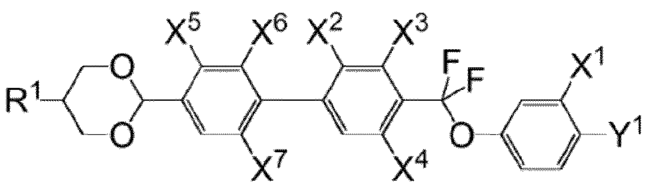
(1-10)

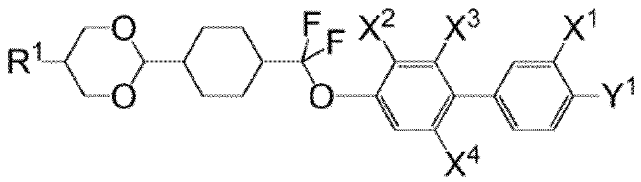
(1-11)

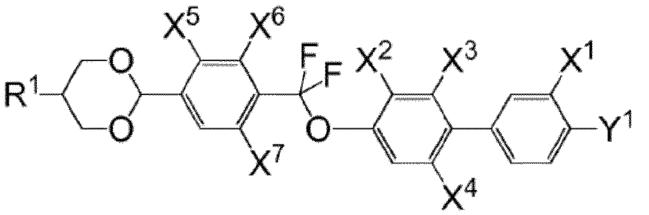

(1-12)

dans laquelle, dans la formule (1-1) à la formule (1-12), $R^1$ est un alkyle ayant de 1 à 12 carbones, un alkoxy ayant de 1 à 12 carbones ou un alkényle ayant de 2 à 12 carbones ; $X^1$, $X^2$, $X^3$, $X^4$, $X^5$, $X^6$ et $X^7$ sont de façon indépendante l'hydrogène ou le fluor ; et $Y^1$ est le fluor, le chlore, un alkyle ayant de 1 à 12 carbones dans lequel au moins un hydrogène est remplacé par un halogène, ou un alkényloxy ayant de 2 à 12 carbones dans lequel au moins un hydrogène est remplacé par un halogène.

3. Composition à base de cristaux liquides selon la revendication 1 ou 2, dans laquelle une proportion du premier composant est dans la plage de 5% en poids à 40% en poids, et une proportion du second composant est dans la plage de 10% en poids à 60% en poids, sur la base du poids de la composition à base de cristaux liquides.

4. Composition à base de cristaux liquides selon l'une quelconque des revendications 1 à 3, contenant au moins un composé sélectionné dans le groupe de composés représentés par la formule (3) comme troisième composant :

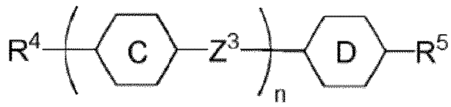

(3)

dans laquelle, dans la formule (3), $R^4$ et $R^5$ sont de façon indépendante un alkyle ayant de 1 à 12 carbones, un alkoxy ayant de 1 à 12 carbones, un alkényle ayant de 2 à 12 carbones, un alkyle ayant de 1 à 12 carbones dans lequel au moins un hydrogène est remplacé par un halogène, ou un alkényle ayant de 2 à 12 carbones dans lequel au moins un hydrogène est remplacé par le fluor ; l'anneau C et l'anneau D sont de façon indépendante le 1,4-cyclohexylène, le 1,4-phénylène, le 2-fluoro-1,4-phénylène ou le 2,5-difluoro-1,4-phénylène ; $Z^3$ est une liaison unique, l'éthylène ou le carbonyloxy ; et n est 1, 2 ou 3 ; dans laquelle, lorsque n est 1, l'anneau D est le 1,4-phénylène.

5. Composition à base de cristaux liquides selon l'une quelconque des revendications 1 à 4, contenant au moins un composé sélectionné dans le groupe de composés représentés par les formules (3-1) à (3-12) comme troisième composant :

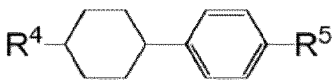

(3-1)

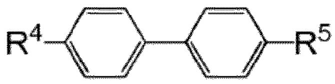

(3-2)

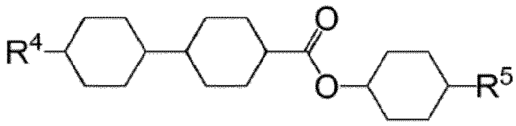

(3-3)

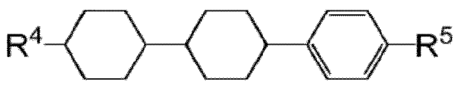

(3-4)

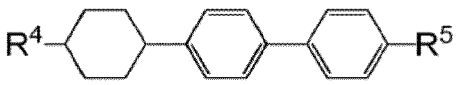

(3-5)

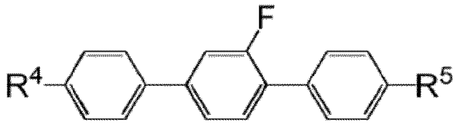

(3-6)

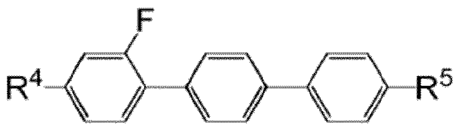

(3-7)

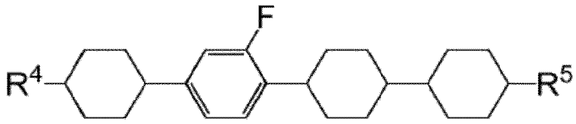

(3-8)

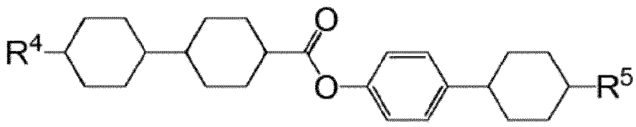

(3-9)

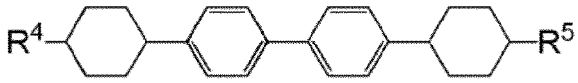

(3-10)

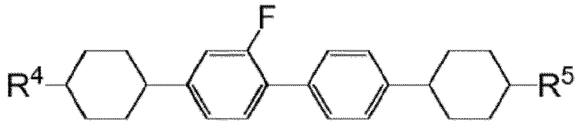

(3-11)

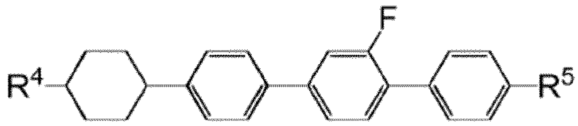

(3-12)

dans laquelle, dans la formule (3-1) à la formule (3-12), $R^4$ et $R^5$ sont de façon indépendante un alkyle ayant de 1 à 12 carbones, un alkoxy ayant de 1 à 12 carbones, un alkényle ayant de 2 à 12 carbones ou un alkényle ayant de 2 à 12 carbones dans lequel au moins un hydrogène est remplacé par le fluor.

**6.** Composition à base de cristaux liquides selon la revendication 4 ou 5, dans laquelle une proportion du troisième composant est dans la plage de 5% en poids à 55% en poids sur la base du poids de la composition à base de cristaux liquides.

**7.** Composition à base de cristaux liquides selon l'une quelconque des revendications 1 à 6, contenant en outre un composé sélectionné dans le groupe de composés représentés par la formule (4) comme quatrième composant :

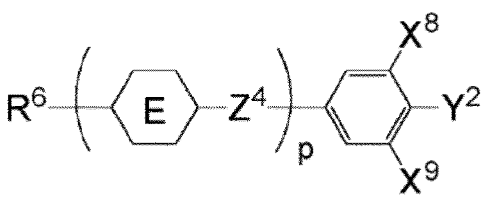

(4)

dans laquelle, dans la formule (4), $R^6$ est un alkyle ayant de 1 à 12 carbones, un alkoxy ayant de 1 à 12 carbones

ou un alkényle ayant de 2 à 12 carbones ; l'anneau E est le 1,4-cyclohexylène, le 1,4-phénylène, le 2-fluoro-1,4-phénylène, le 2,3-difluoro-1,4-phénylène, le 2,6-difluoro-1,4-phénylène, la pyrimidine-2,5-diyl ou le tétrahydropyrane-2,5-diyl ; $Z^4$ est une liaison unique, l'éthylène, le carbonyloxy ou le difluorométhyleneoxy ; $X^8$ et $X^9$ sont de façon indépendante l'hydrogène ou le fluor ; $Y^2$ est le fluor, le chlore, un alkyle ayant de 1 à 12 carbones dans lequel au moins un hydrogène est remplacé par un halogène, un alkoxy ayant de 1 à 12 carbones dans lequel au moins un hydrogène est remplacé par un halogène ou un alkényloxy ayant de 2 à 12 carbones dans lequel au moins un hydrogène est remplacé par un halogène ; et p est 1, 2, 3 ou 4.

**8.** Composition à base de cristaux liquides selon l'une quelconque des revendications 1 à 7, contenant au moins un composé sélectionné dans le groupe de composés représentés par les formules (4-1) à (4-24) comme quatrième composant :

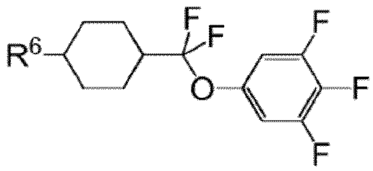

(4-1)

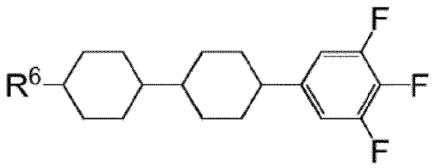

(4-2)

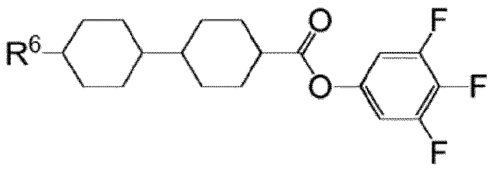

(4-3)

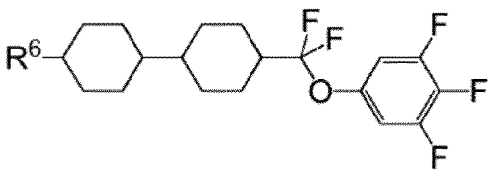

(4-4)

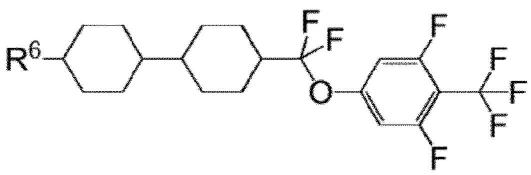

(4-5)

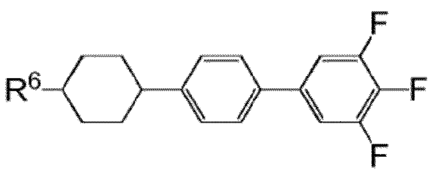

(4-6)

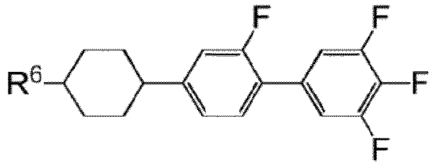

(4-7)

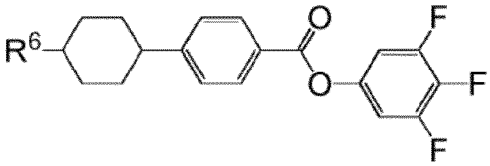

(4-8)

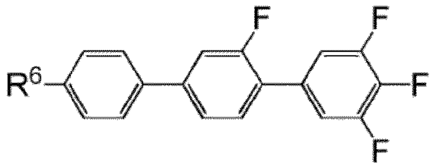

(4-9)

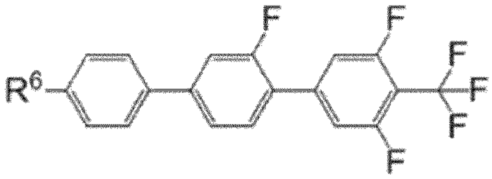

(4-10)

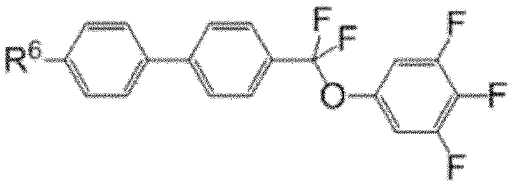

(4-11)

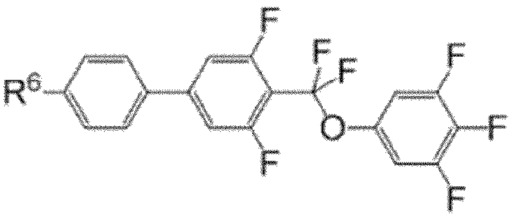

(4-12)

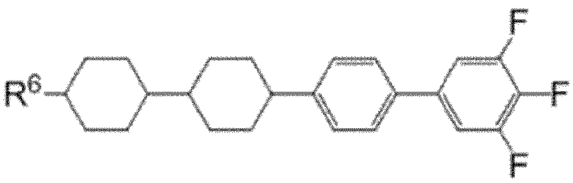

(4-13)

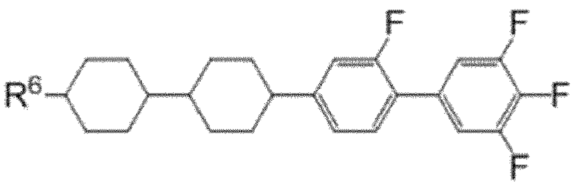

(4-14)

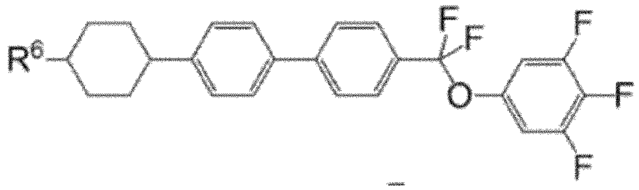

(4-15)

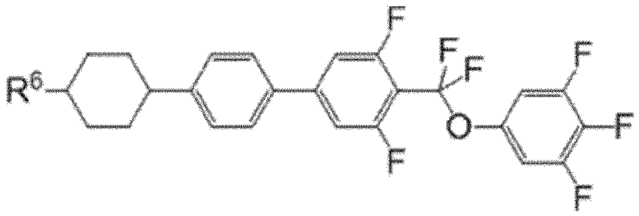

(4-16)

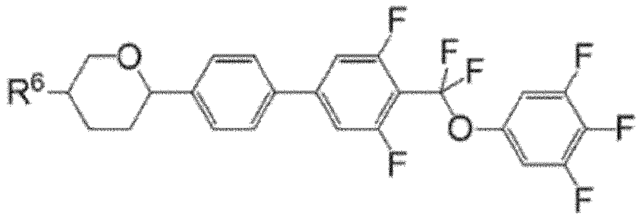

(4-17)

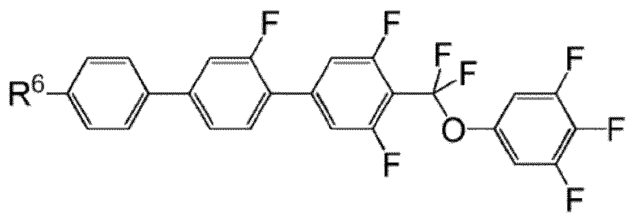

(4-18)

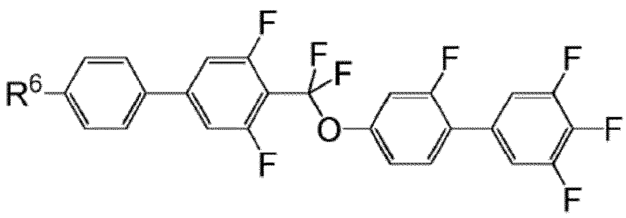

(4-19)

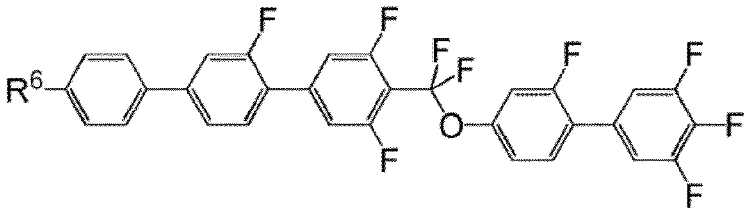

(4-20)

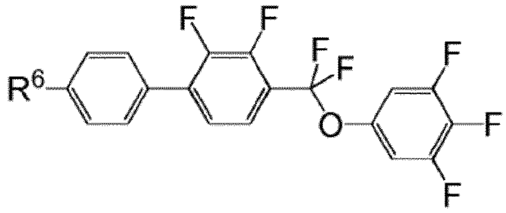

(4-21)

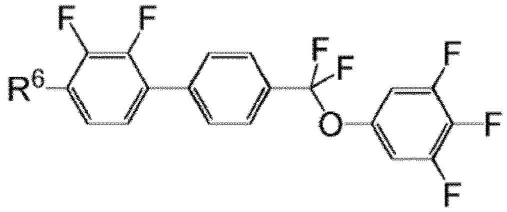

(4-22)

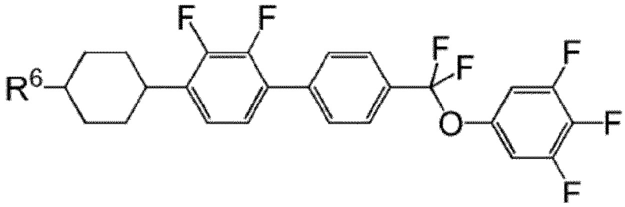

(4-23)

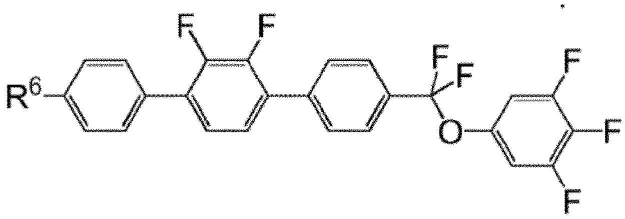

(4-24)

dans laquelle, dans la formule (4-1) à la formule (4-24), $R^6$ est un alkyle ayant de 1 à 12 carbones, un alkoxy ayant de 1 à 12 carbones ou un alkényle ayant de 2 à 12 carbones.

**9.** Composition à base de cristaux liquides selon la revendication 7 ou 8, dans laquelle une proportion du quatrième composant est dans la plage de 5% en poids à 35% en poids sur la base du poids de la composition à base de cristaux liquides.

**10.** Composition à base de cristaux liquides selon l'une quelconque des revendications 1 à 9, contenant au moins un composé sélectionné dans le groupe de composés représentés par la formule (5) comme cinquième composant :

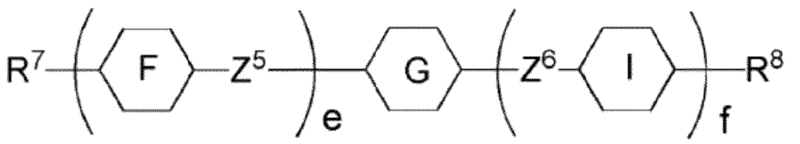

(5)

dans laquelle, dans la formule (5), $R^7$ et $R^8$ sont de façon indépendante un alkyle ayant de 1 à 12 carbones, un alkoxy ayant de 1 à 12 carbones, un alkényle ayant de 2 à 12 carbones, un alkényloxy ayant de 2 à 12 carbones ou un alkyle ayant de 1 à 12 carbones dans lequel au moins un hydrogène est remplacé par un halogène ; l'anneau F et l'anneau I sont de façon indépendante le 1,4-cyclohexylène, le 1,4-cyclohexenylène, le 1,4-phénylène, le 1,4-phénylène dans lequel au moins un hydrogène est remplacé par le fluor ou le chlore, ou le tétrahydropyrane-2,5-diyl ; l'anneau G est le 2,3-difluoro-1,4-phénylène, le 2-chloro-3-fluoro-1,4-phénylène, le 2,3-difluoro-5-méthyl-1,4-phénylène, le 3,4,5-trifluoronaphtalène-2,6-diyl ou le 7,8-difluorochromane-2,6-diyl ; $Z^5$ et $Z^6$ sont de façon indépendante une liaison unique, l'éthylène, le carbonyloxy ou le méthyleneoxy ; e est 1, 2 ou 3 et f est 0 ou 1 ; et la somme de e et f est 3 ou moins.

**11.** Composition à base de cristaux liquides selon l'une quelconque des revendications 1 à 10, contenant au moins un composé sélectionné dans le groupe de composés représentés par les formules (5-1) à (5-19) comme cinquième composant :

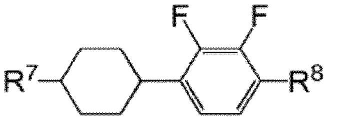

(5-1)

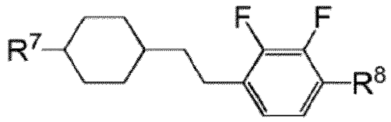

(5-2)

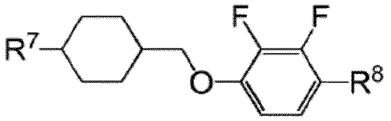

(5-3)

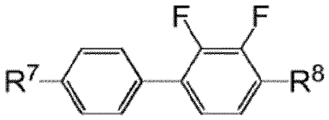

(5-4)

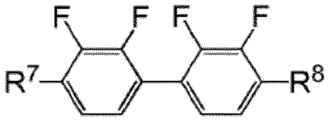

(5-5)

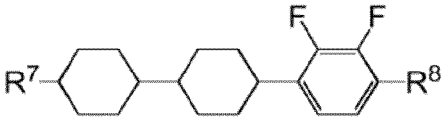

(5-6)

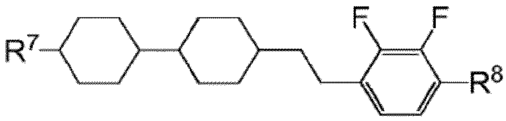

(5-7)

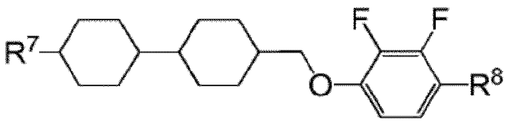

(5-8)

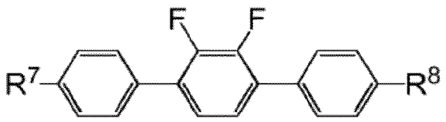

(5-9)

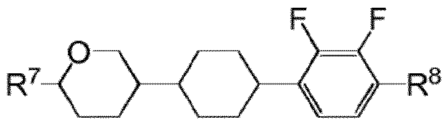

(5-10)

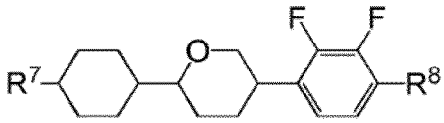

(5-11)

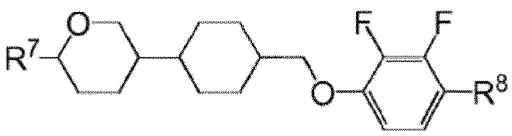

(5-12)

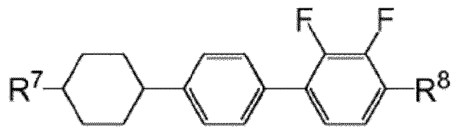

(5-13)

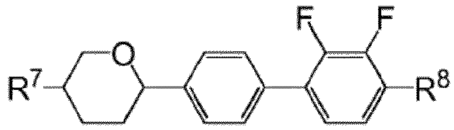

(5-14)

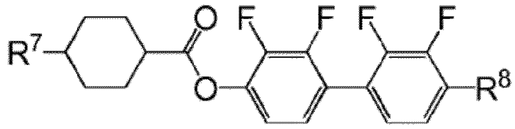

(5-15)

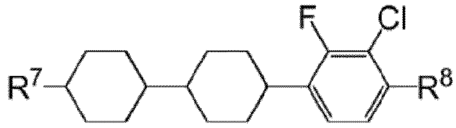

(5-16)

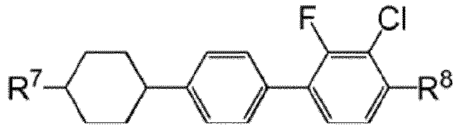

(5-17)

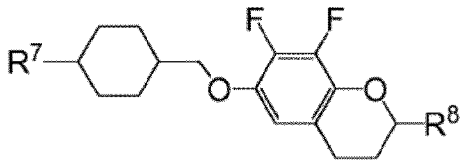

(5-18)

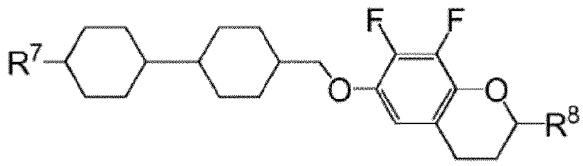

(5-19)

dans laquelle, dans la formule (5-1) à la formule (5-19), $R^7$ et $R^8$ sont de façon indépendante un alkyle ayant de 1 à 12 carbones, un alkoxy ayant de 1 à 12 carbones, un alkényle ayant de 2 à 12 carbones, un alkényloxy ayant de 2 à 12 carbones ou un alkyle ayant de 1 à 12 carbones dans lequel au moins un hydrogène est remplacé par un halogène.

**12.** Composition à base de cristaux liquides selon la revendication 10 ou 11, dans laquelle une proportion du cinquième composant est dans la plage de 3% en poids à 25% en poids sur la base du poids de la composition à base de cristaux liquides.

**13.** Composition à base de cristaux liquides selon l'une quelconque des revendications 1 à 12, dans laquelle une température maximale d'une phase nématique est de 70°C ou plus, une anisotropie optique (mesurée à 25°C) à une longueur d'onde de 589 nanomètre est de 0,07 ou plus et une anisotropie diélectrique (mesurée à 25°C) à une fréquence de 1 kHz est de 2 ou plus.

**14.** Dispositif d'affichage à base de cristaux liquides, incluant la composition à base de cristaux liquides selon l'une quelconque des revendications 1 à 13.

**15.** Dispositif d'affichage à base de cristaux liquides selon la revendication 14, dans lequel un mode de fonctionnement dans le dispositif d'affichage à base de cristaux liquides est un mode TN, un mode ECB, un mode OCB, un mode IPS, un mode FFS ou un mode FPA, et un mode d'excitation dans le dispositif d'affichage à base de cristaux liquides est un mode de matrice active.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- WO 2013150826 A1
- US 2011127465 A
- JP 2004204024 A
- JP 5500322 B
- JP 2006070080 A
- EP 0819685 A1
- US 2009314988 A1
- JP 2011514410 A
- JP 2004352992 A
- JP HO912569 A
- JP H72832 A
- JP H1081679 A
- JP 2008069153 A
- JP S59176221 A
- JP H2237949 A
- JP H2233626 A
- JP H2503441 A
- US 3660505 B

### Non-patent literature cited in the description

- **M. IMAI et al.** *Molecular Crystals and Liquid Crystals,* 1995, vol. 259, 37
- Handbook of Liquid Crystals (Ekisho Binran in Japanese). Maruzen Co., Ltd, 2000, 196